# EUROPEAN PATENT APPLICATION

(11) **EP 4 840 739 A1**
(43) Date of publication of application: **18.11.2026**
(21) Application number: 25741519.0
(22) Date of filing: 15.01.2025
(51) Int. Cl.: B62K 5/01

(54) **ALL-TERRAIN VEHICLE**

(30) Priority: 15.01.2024 CN 202410057364; 31.10.2024 CN 202411547401
(71) Applicant: Zhejiang CFMOTO Power Co., Ltd., Hangzhou, Zhejiang 311199 (CN)
(72) Inventor: FANG, Ying, Hangzhou, Zhejiang 311199 (CN); ZHONG, Mei, Hangzhou, Zhejiang 311199 (CN); LI, Xuehao, Hangzhou, Zhejiang 311199 (CN); PENG, Hongbo, Hangzhou, Zhejiang 311199 (CN); LI, Jiajun, Hangzhou, Zhejiang 311199 (CN); LIU, Wanru, Hangzhou, Zhejiang 311199 (CN)
(74) Representative: Sun, Yiming
(86) International application number: PCT/CN2025/072465
(87) International publication number: WO 2025/152958

(57) **Abstract**

An all-terrain vehicle includes a frame, a vehicle body cover, a traveling system, a prime power assembly, a seat assembly, and steering handlebar. The traveling system includes front wheels. The steering handlebar includes a left handlebar and a right handlebar. The vehicle body cover includes a front mudguard, a storage box, a heat dissipation grille, and side covers. The storage box is positioned at least partially below the left handlebar and/or below the right handlebar. The side cover is at least at least partially positioned between the front mudguard and the seat assembly along the length direction of the frame. The heat dissipation grille is mounted at the front of the side cover. The side cover at least partially defines an intake channel in fluid communication with the heat dissipation grille. The intake channel shall have at least one opening facing towards the prime power assembly. The intake channel is positioned at least partially between the storage box and the longitudinal center plane. The heat dissipation grille is positioned at least partially above the front mudguard. Through the above settings, the heat dissipation effect of the prime power assembly can be improved.

## Description

### RELATED APPLICATION

The present application claims the benefit of priority to Chinese Patent Application No. 2024100573647, filed with the Chinese Patent Office on January 15, 2024, and entitled "ALL-TERRAIN VEHICLE", and Chinese Patent Application No. 2024115474019, filed with the Chinese Patent Office on October 31, 2024, and entitled "ALL-TERRAIN VEHICLE". The entire contents of the above-referenced applications are incorporated herein by reference.

### FIELD OF THE DISCLOSURE

The disclose relates to the field of vehicles, and particularly to an all-terrain vehicle.

### BACKGROUND OF THE DISCLOSURE

An all-terrain vehicle is a type of vehicle that can travel on any terrains, featuring a high chassis, suspension with excellent shock absorption, tires with good grip, and strong power. With the rapid development of vehicles, all-terrain vehicles are becoming increasingly popular among consumers. Compared to ordinary vehicles, all-terrain vehicles can operate in extremely harsh environments, including but not limited to beaches, mountains, forests, swamps, and other terrains, and have been widely used in farms and entertainment venues.

Based on the complex terrain environment in the wild, all-terrain vehicles require strong power output during running. This strong power output directly leads to an increase in the number of cylinders, output power, and heat generation of all-terrain vehicles, resulting in higher temperatures near the driver's body, especially near the legs, when riding on the vehicle, thereby reducing the driver's driving experience.

### SUMMARY OF THE INVENTION

Embodiments of the invention provides an all-terrain vehicle to solve at least one problem existing in the background.

To address the shortcomings of background, it is necessary to provide an all-terrain vehicle with good heat dissipation and driving experience.

In a first aspect, an all-terrain vehicle is provided. The all-terrain vehicle includes a frame, a vehicle body cover, a traveling system, a suspension system, an engine, an air filter, a fuel assembly, a continuously variable transmission, and a storage box assembly. The vehicle body cover is at least partially mounted on the frame and includes a front mudguard. The traveling system is at least partially positioned below the frame and includes a pair of front wheels. The front wheels are connected to the frame by the suspension system. The engine is at least partially mounted on the frame and connected to the front wheel in a transmission mode. The engine includes a cylinder. The air filter is connected to the engine. The fuel assembly include a fuel tank supported by the frame and provides fuel to the engine. The continuously variable transmission includes a drive pulley and a driven pulley, and the drive pulley is connected to the driven pulley in a transmission mode. The drive pulley is positioned behind the driven pulley, a longitudinal center plane is defined as a plane perpendicular to a width direction of the frame and comprising a mid-point of the all-terrain vehicle in the width direction. A straight line connecting a normal projection of a central axis of the drive pulley onto the longitudinal center plane and a normal projection of the central axis of the driven pulley onto the Longitudinal center plane is defined as a transmission axis. The cylinder has a cylinder axis. An angle defined between the cylinder axis projection line and the transmission axis onto the longitudinal center plane opens rearward. A first plane is defined as a plane perpendicular to the length direction of the frame and comprising a front wheel rotation axis, and a second plane is defined as a plane perpendicular to the height direction of the frame and comprising the front wheel rotation axis. The fuel tank is positioned behind the first plane and at least partially in front of the engine, the fuel tank is positioned above the second plane and at least partially below the front mudguard. When viewed along the length direction of the frame, the air filter is at least partially positioned between the fuel tank and the engine, the air filter overlaps at least partially with both the engine and the fuel tank; and when viewed along the width direction of the frame, the air filter overlaps neither with the engine nor the fuel tank.

In a second aspect, an all-terrain vehicle is provided. The all-terrain vehicle includes a frame, a vehicle body cover, a traveling system, a suspension system, an engine, an air filter, a fuel assembly, a continuously variable transmission, and a storage box assembly. The vehicle body cover is at least partially mounted on the frame and includes a front mudguard. The traveling system is at least partially positioned below the frame and includes a pair of front wheels. The front wheels are connected to the frame by the suspension system. The engine is at least partially mounted on the frame and connected to the front wheel in a transmission mode. The engine includes a cylinder. The air filter is connected to the engine. The fuel assembly include a fuel tank supported by the frame and provides fuel to the engine. The continuously variable transmission includes a drive pulley and a driven pulley, and the drive pulley is connected to the driven pulley in a transmission mode. The drive pulley is positioned behind the driven pulley, a longitudinal center plane is defined as a plane perpendicular to a width direction of the frame and comprising a mid-point of the all-terrain vehicle in the width direction. A straight line connecting a normal projection of a central axis of the drive pulley onto the longitudinal center plane and a normal projection of the central axis of the driven pulley onto the longitudinal center plane is defined as a transmission axis. The cylinder has a cylinder axis. An angle defined between the cylinder axis projection line and the transmission axis onto the longitudinal center plane opens rearward. A first plane is defined as a plane perpendicular to the length direction of the frame and comprising a front wheel rotation axis, and a second plane is defined as a plane perpendicular to the height direction of the frame and comprising the front wheel rotation axis. The fuel tank is positioned behind the first plane and at least partially in front of the engine, the fuel tank is positioned above the second plane and at least partially below the front mudguard. When viewed along the length direction of the frame, the air filter is at least partially positioned between the fuel tank and the engine and the air filter overlaps at least partially with both the engine and the fuel tank; and when viewed along the width direction of the frame, the air filter overlaps neither with the engine nor the fuel tank. The vehicle body cover further includes a heat dissipation grille and a side cover supported by the frame, wherein the heat dissipation grille is at least partially positioned above the front mudguard. The side cover is at least at least partially positioned between the front mudguard and the seat assembly along the length direction of the frame. The heat dissipation grille is mounted at the front of the side cover. The side cover defines an intake channel in fluid communication with the heat dissipation grille. The intake channel has at least one air inlet and at least one air outlet, and the opening of the air inlet faces the heat dissipation grille, when viewed along the length direction of the frame, at least a portion of the heat dissipation grille can be observed. The outermost side of the intake channel is further closer to the longitudinal center plane than the outermost side of the left or right steering handlebar.

In a third aspect, an all-terrain vehicle is provided. The all-terrain vehicle includes a frame, a vehicle body cover, a traveling system, a suspension system, an engine, an air filter, a fuel assembly, a continuously variable transmission, and a storage box assembly. The vehicle body cover is at least partially mounted on the frame and includes a front mudguard. The traveling system is at least partially positioned below the frame and includes a pair of front wheels. The front wheels are connected to the frame by the suspension system. The engine is at least partially mounted on the frame and connected to the front wheel in a transmission mode. The engine includes a cylinder. The air filter is connected to the engine. The fuel assembly include a fuel tank supported by the frame and provides fuel to the engine. The continuously variable transmission includes a drive pulley and a driven pulley, and the drive pulley is connected to the driven pulley in a transmission mode. The drive pulley is positioned behind the driven pulley, a longitudinal center plane is defined as a plane perpendicular to a width direction of the frame and comprising a mid-point of the all-terrain vehicle in the width direction. A straight line connecting a normal projection of a central axis of the drive pulley onto the longitudinal center plane and a normal projection of the central axis of the driven pulley onto the Longitudinal center plane is defined as a transmission axis. The cylinder has a cylinder axis. An angle defined between the cylinder axis projection line and the transmission axis onto the longitudinal center plane opens rearward. A first plane is defined as a plane perpendicular to the length direction of the frame and comprising a front wheel rotation axis, and a second plane is defined as a plane perpendicular to the height direction of the frame and comprising the front wheel rotation axis. The fuel tank is positioned behind the first plane and at least partially in front of the engine, the fuel tank is positioned above the second plane and at least partially below the front mudguard. When viewed along the length direction of the frame, the air filter is at least partially positioned between the fuel tank and the engine and the air filter overlaps at least partially with both the engine and the fuel tank; and when viewed along the width direction of the frame, the air filter overlaps neither with the engine nor the fuel tank. The vehicle body cover further comprises two mounting plates under the front mudguard and respectively positioned under the left steering handlebar and under the right steering handlebar. The two mounting plates and the front mudguards cooperatively defines a left storage space and a right storage space having an opening facing the rear of the all-terrain vehicle. The vehicle cover further comprises two storage covers connected to the left and right storage spaces respectively and can be used to enclose the left and right storage spaces. When viewed along the height direction of the frame, the left storage space and the right storage space are respectively positioned below the left steering handlebar and below the right steering handlebar. The left storage space and the right storage space respectively overlap at least partially with the left steering handlebar or the right steering handlebar. The vehicle body cover further includes a left side cover and a right side cover, wherein the left side cover and the right side cover are positioned above the front mudguard. The left cover and the right cover, respectively and the front mudguard cooperatively defines a first space and a second space, the all-terrain vehicle further comprises an electronic shifter positioned in the first space or the second space.

Compared with related technologies, the present invention enhances the power of all-terrain vehicles and provides better comfort for users when riding by reasonably arranging the engine layout.

The accompanying drawings described herein are intended to provide further understanding of the present application and constitute a part of the present application. The illustrative embodiments and their descriptions of the present application are used to explain the present application and do not constitute undue limitation of the present application. In FIGS:
FIG. 1 is a perspective view of an all-terrain vehicle provided in embodiments of the present disclosure.
FIG. 2 is a side view of the all-terrain vehicle provided in embodiments of the present disclosure.
FIG. 3 is a side view of a frame, a traveling system, a prime power assembly, and an exhaust assembly of the all-terrain vehicle provided in the embodiments of the present disclosure.
FIG. 4 is a top view of a frame, a traveling system, a prime power assembly, and an exhaust assembly of the all-terrain vehicle provided in the embodiments of the present disclosure.
FIG. 5 is a rear view of the prime power assembly of the all-terrain vehicle provided in the embodiments of the present disclosure.
FIG. 6 is a right side view of the partial structure of the all-terrain vehicle provided in the embodiments of the present disclosure.
FIG. 7 shows the mounting of the frame and the fuel assembly of the all-terrain vehicle provided in the embodiments of the present disclosure.
FIG. 8 is an enlarged partial view of part A in FIG. 7 of the embodiments of the present disclosure.
FIG. 9 is an exploded view of the frame, the fuel assembly, the prime power assembly, the seat assembly, and the electrical system of the all-terrain vehicle provided in the embodiments of the present disclosure.
FIG. 10 is a top view of the frame, the fuel assembly, the prime power assembly, and the electrical system of the all-terrain vehicle provided in the embodiments of the present disclosure.
FIG. 11 is an exploded view of an engine of the all-terrain vehicle provided in the embodiments of the present disclosure.
FIG. 12 is a top view of the assembly relationship of the engine, a continuously variable transmission, a fuel tank, and an air filter of the all-terrain vehicle provided in the embodiments of the present disclosure.

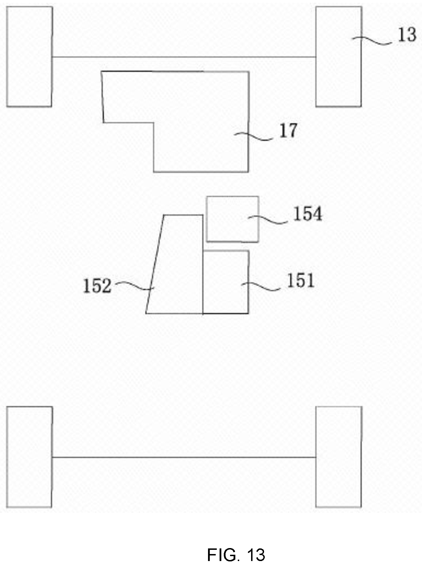

FIG. 13 shows a simulated schematic diagram of the assembly relationship between the engine, the continuously variable transmission, the fuel tank, and the air filter of the all-terrain vehicle provided in the embodiments of the present disclosure.

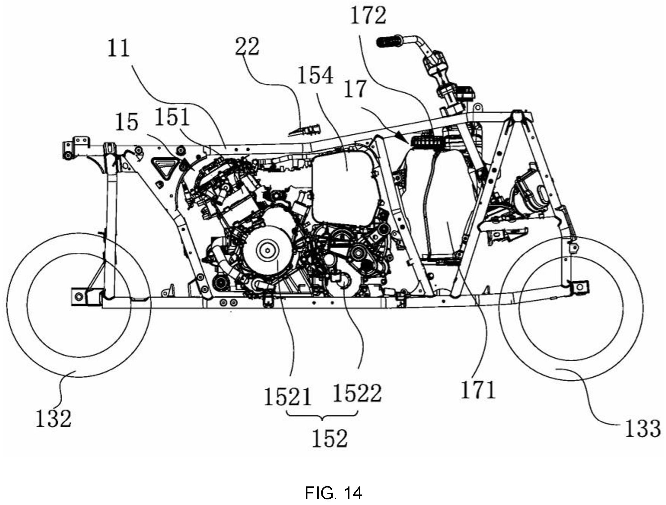

FIG. 14 is a side view of the all-terrain vehicle provided in embodiments of the present disclosure.
FIG. 15 is a right view of the all-terrain vehicle provided in embodiments of the present disclosure.
FIG. 16 is a schematic diagram of the structure of the heat dissipation pipeline of the all-terrain vehicle provided in the embodiments of the present disclosure.
FIG. 17 is a view of the structure of the frame, lower guard plate, and the prime power assembly of the all-terrain vehicle provided in the embodiments of the present disclosure.
FIG. 18 is a sectional view of the lower guard plate of the all-terrain vehicle provided in the embodiments of the present disclosure.
FIG. 19 is another perspective view of the frame, the lower guard plate, and the prime power assembly of the all-terrain vehicle provided in the embodiments of the present disclosure.
FIG. 20 is an exploded view of the structure of the storage box assembly, the frame, the seat assembly, and the front mudguard of the all-terrain vehicle provided in the embodiments of the present disclosure.
FIG. 21 is an exploded view of the structure of the storage box assembly, a left side cover, and a right side cover of the all-terrain vehicle provided in the embodiments of the present disclosure.
FIG. 22 is a perspective view of the structure of the storage cover of the all-terrain vehicle provided in the embodiments of the present disclosure.

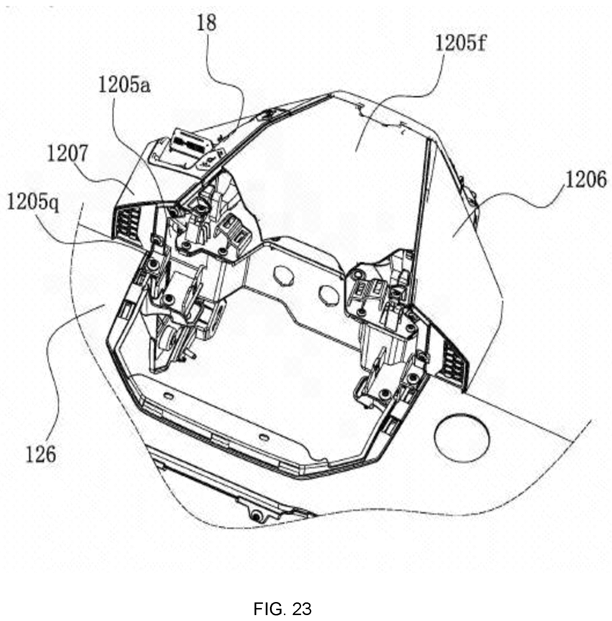

FIG. 23 shows the mounting of the storage box assembly and front mudguard of the all-terrain vehicle provided in the embodiments of the present disclosure.
FIG. 24 is a right side view of the frame, the seat assembly, the prime power assembly, and the vehicle body cover of the all-terrain vehicle provided in the embodiments of the present disclosure.
FIG. 25 is a perspective view of the partial structure of the vehicle body cover of the all-terrain vehicle provided in the embodiments of the present disclosure.
FIG. 26 is a perspective view of the structure of the foot pedal, the foot pedal, and mounting plate of the all-terrain vehicle provided in the embodiments of the present disclosure.
FIG. 27 is a schematic diagram of the connection of the lamp system provided in the embodiments of the present disclosure.
FIG. 28 is a schematic diagram of the connection between the lighting controller and the lamp module of the all-terrain vehicle provided in the embodiments of the present disclosure.
FIG. 29 is a front view of the all-terrain vehicle provided in the embodiments of the present disclosure.
FIG. 30 is an exploded view of the vehicle body cover, a left headlamp, and a right headlamp of the all-terrain vehicle provided in the embodiments of the present disclosure.
FIG. 31 is a sectional view of a low beam of the all-terrain vehicle provided in the embodiments of the present disclosure.
FIG. 32 is a front view of the position turn signal and vehicle body cover of the all-terrain vehicle provided in the embodiments of the present disclosure.
FIG. 33 is an exploded view of the position turn signal and the vehicle body cover of the all-terrain vehicle provided in the embodiments of the present disclosure.
FIG. 34 is a sectional view of the position turn signal of the all-terrain vehicle provided in the embodiments of the present disclosure.
FIG. 35 is an enlarged partial view of part D in FIG. 37 provided in the embodiments of the present disclosure.
FIG. 36 is an enlarged partial view of part C in FIG. 35 provided in the embodiments of the present disclosure.
FIG. 37 is a schematic diagram of the structure of the rear lamp system and vehicle body cover of the all-terrain vehicle provided in the embodiments of the present disclosure.
FIG. 38 is an exploded view of the rear tail lamps and vehicle body cover of the all-terrain vehicle provided in the embodiments of the present disclosure.
FIG. 39 is an enlarged partial view of part E in FIG. 37 provided in the embodiments of the present disclosure.
FIG. 40 is a sectional view of the rear tail lamp of the all-terrain vehicle provided in the embodiments of the present disclosure.
FIG. 41 is an enlarged partial view of part F in FIG. 40 provided in the embodiments of the present disclosure.
FIG. 42 is a perspective view of the steering assembly of the all-terrain vehicle provided in the embodiments of the present disclosure.
FIG. 43 is a perspective view of the mount base of the all-terrain vehicle provided in the embodiments of the present disclosure.
FIG. 44 is a sectional view of the steering assembly of the all-terrain vehicle provided in the embodiments of the present disclosure.
FIG. 45 is a rear view of the steering assembly of the all-terrain vehicle provided in the embodiments of the present disclosure.
FIG. 46 is a rear view of the steering assembly of the all-terrain vehicle provided in the embodiments of the present disclosure.
FIG. 47 is a side sectional view of the steering assembly of the all-terrain vehicle provided in the embodiments of the present disclosure.

### DETAIL DESCRIPTION

The present invention will be described in detail with reference to the specific embodiments shown in the accompanying drawings, but these embodiments do not limit the present invention. Any structural, methodological, or functional changes made by those skilled in the art based on these embodiments are included within the scope of protection of the present invention.

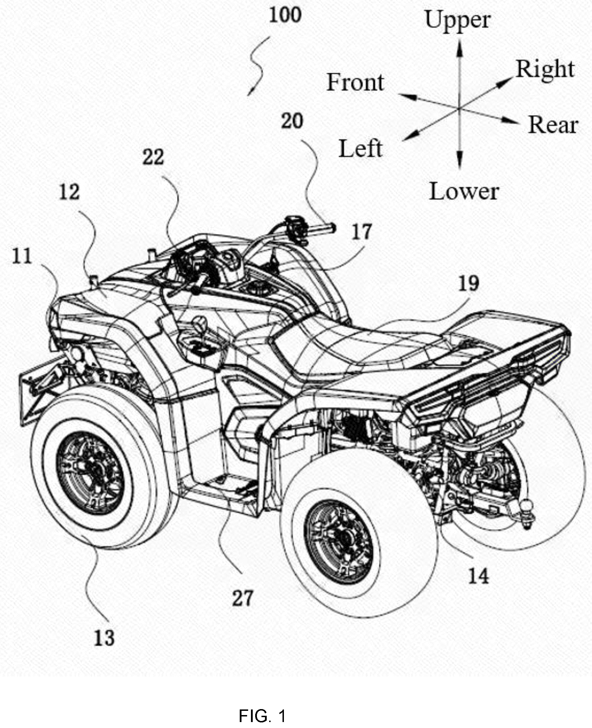

As shown in FIG. 1 to FIG. 3, the present disclosure provides an all-terrain vehicle 100, which includes a frame 11, a vehicle body cover 12, a traveling system 13, a suspension system 14, a prime power assembly 15, a transmission assembly 16, a fuel assembly 17, a seat assembly 19, a steering assembly 20, an electrical system 22, and a foot pedal assembly 27. The frame 11 constitutes the basic architecture of the all-terrain vehicle, and the vehicle body cover 12 is at least partially arranged on the frame 11. The vehicle body cover 12 and the frame cooperatively defines an accommodation space 115. The prime power assembly 15 includes an engine 151at least partially positioned within the accommodation space 115. The suspension system 14 is at least partially connected to frame 11. The plurality of wheel 13 is connected to frame 11 by the suspension system 14. The transmission assembly 16 is also connected to the engine 151 in a transmission mode and is capable of transmitting the power of the engine 151 to the wheels 13. The fuel assembly 17 is supported by the frame 11. The seat assembly 19 is available for users to ride, and the foot pedal assembly 27 is positioned below the seat assembly 19. The steering assembly 20 is operable to achieve steering of the all-terrain vehicle 100. For better understanding of the present invention, the directions of "front", "rear", "upper(up)", "lower(down)", "left" and "right" are defined in FIG. 1. The length direction of the frame 11 refers to the front-rear direction or the rear-front direction; the width direction of the frame 11 refers to the left-right direction or the right-left direction; and the height direction of the frame 11 refers to the up-down direction or the down-up direction. A reference plane 102 is defined as a plane perpendicular to the height direction of the all-terrain vehicle 100 and including at least one contact point between the wheels and the horizontal plane. A transverse mid-plane 105 of the all-terrain vehicle 100 is defined as a plane perpendicular to the length direction of the frame 11 and including the midpoints of the wheelbase of all-terrain vehicle 100. A Longitudinal center plane 10s of the all-terrain vehicle 100 is defined as a plane perpendicular to the width direction of the frame 11 and including the central line of the width of all-terrain vehicle 100. The seat assembly 19 extends across the longitudinal center plane 10s.

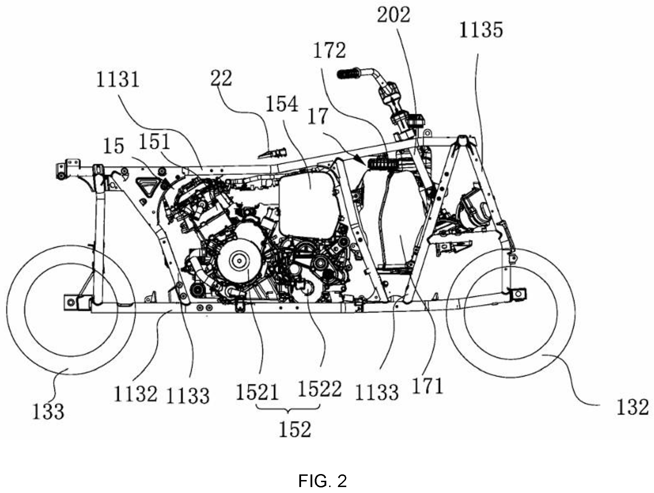

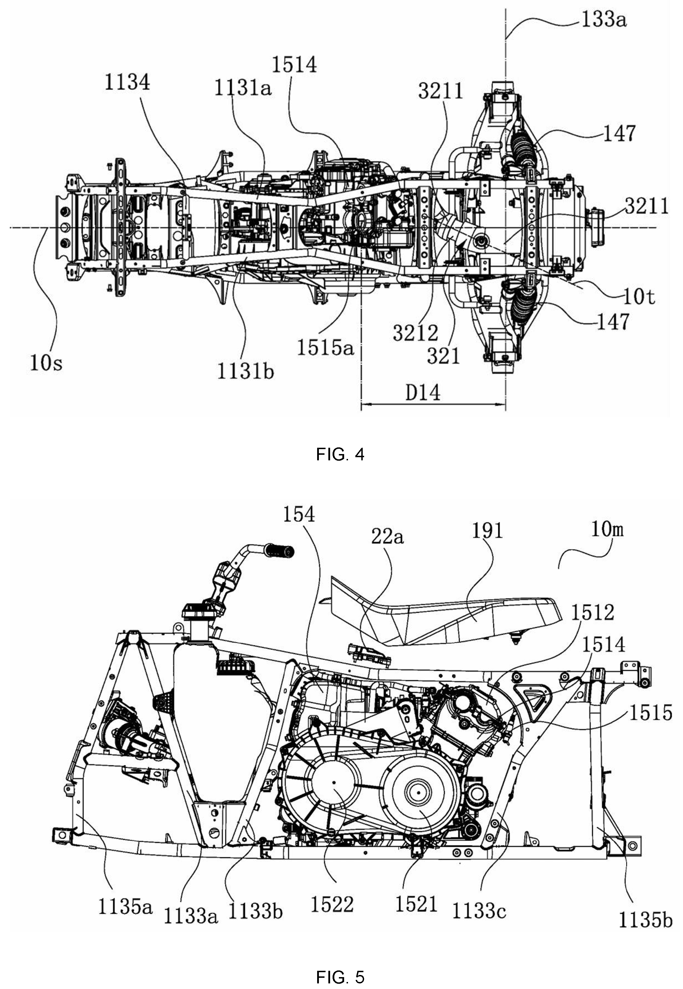

As shown in FIG. 2 to FIG. 4, the engine 151 provided in embodiments of the present disclosure includes a cylinder 1513 and a cylinder head 1514 distributed along the width direction of all-terrain vehicle 100. The cylinder head 1514 is connected to the cylinder 1513. The cylinder head 1514 is connected to the cylinder 1513 and positioned above cylinder 1513 in the height direction of all-terrain vehicle 100. The all-terrain vehicle 100 includes a plurality of cylinder heads aligned in the width direction of all-terrain vehicle 100. The cylinder heads 1514 are oriented towards the rear of all-terrain vehicle 100 along the front-rear direction of all-terrain vehicle 100. It should be noted that in order to meet the power requirements of the all-terrain vehicle 100, the number of the cylinder heads 1514 may be 1, 2, 3 or more, and without limitation.

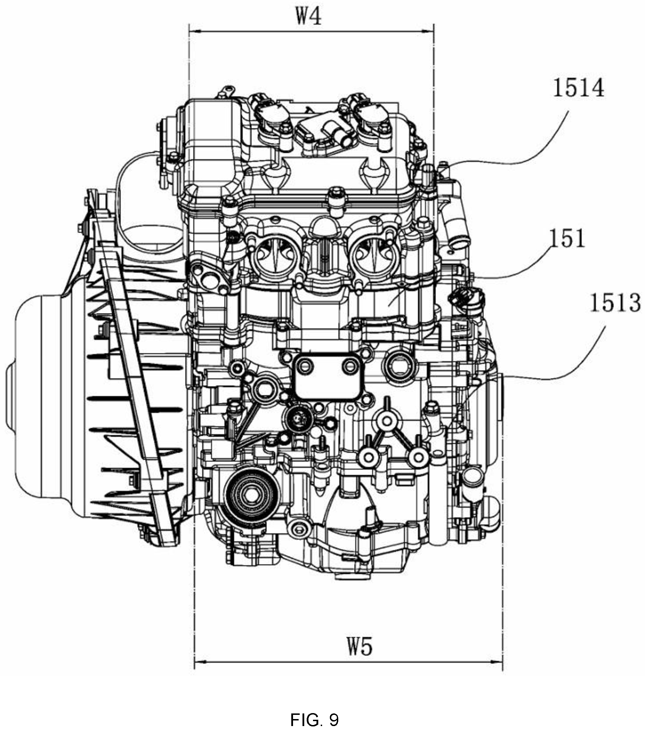

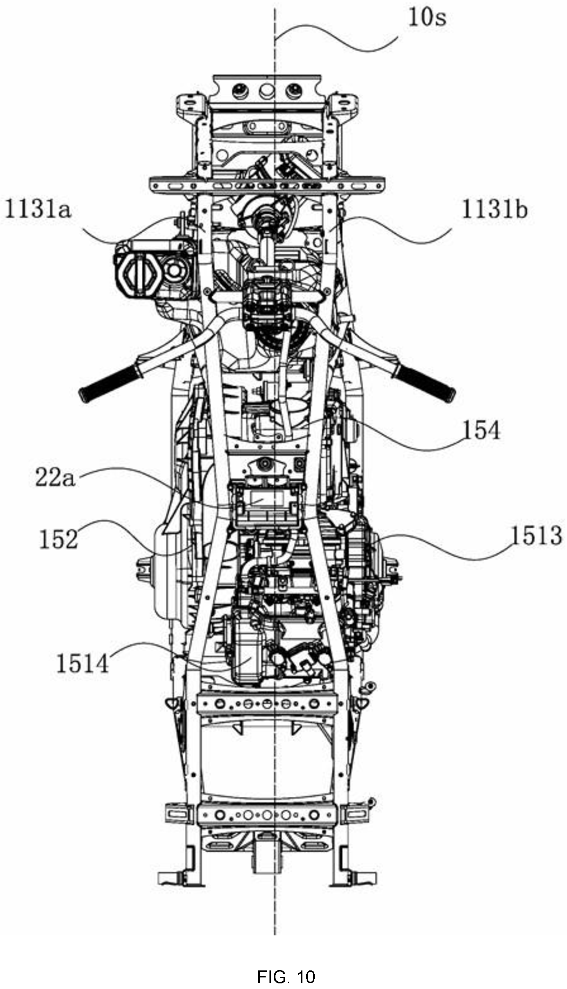

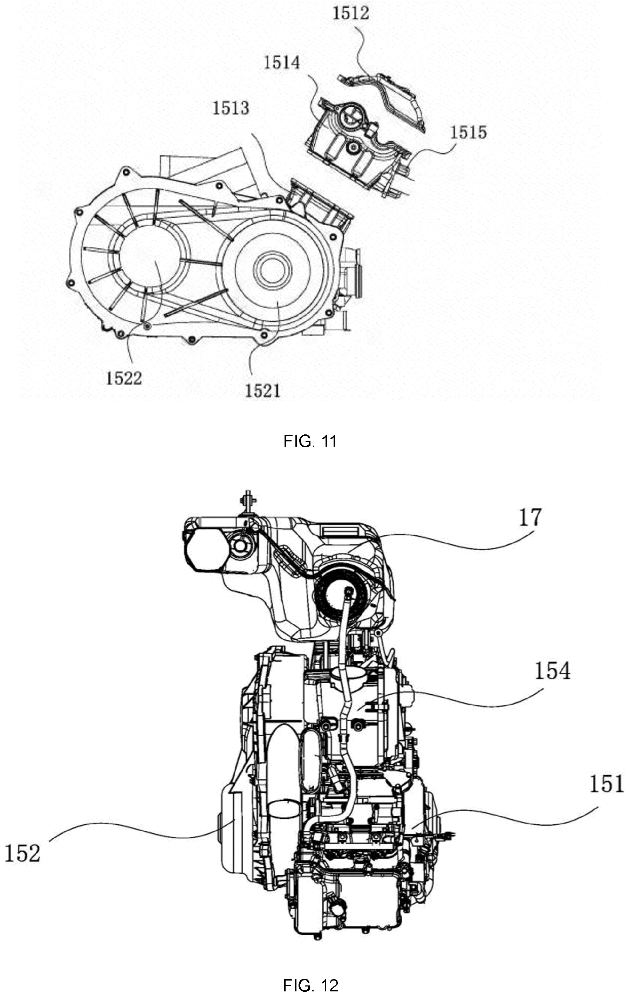

As shown in FIG. 9 to FIG. 12, the prime power assembly 15 further includes a continuously variable transmission 152, an air filter 154, and a magneto 157. The continuously variable transmission 152 and the engine 151 are distributed along the width direction of the all-terrain vehicle 100. The continuously variable transmission 152 is positioned on the left side of the engine 151, and the magneto 157 is positioned on the right side of the engine 151. The air filter 154 is connected to the engine 151 to provide air to the engine 151. The magneto 157 can be driven to generate electricity. The continuously variable transmission 152 includes a drive pulley 1521 and a driven pulley 1522. The drive pulley 1521 is connected to the driven pulley 1522 in a transmission mode. The drive pulley 1521 is positioned on the left side of the all-terrain vehicle 100.

The air filter 154 is at least partially positioned between the prime power assembly 15 and the seat assembly 19 in the height direction of the frame 11. The air filter 154 is at least partially positioned above the driven pulley 1522, and is positioned in front of the cylinder heads 1514. The air filter 154 at least partially overlaps with driven pulley 1522 and overlaps neither with the engine 151 nor the fuel tank 171 when viewed along the width direction of frame 111. The air filter 154 is at least partially positioned between the fuel tank 171 and the engine 151 (see FIG. 2). When viewed along the length direction of frame 11, the air filter 154 at least partially overlaps with the engine 151 and the air filter 154 at least partially overlaps with the fuel tank 171. The air filter 154 overlaps neither with the cylinder heads 1514 nor with the fuel tank 171 when viewed along the height direction of frame 11. Through the above, the cylinder heads 1514 are oriented towards the rear of the frame, which can increase the arrangement space at the front of the cylinder 1513, thereby facilitate the arrangement of the air filter 154, and make the arrangement between the engine 151 and the air filter 154 more compact.

As shown in FIG. 2 to FIG. 5, the frame 11 includes a main frame 113, which includes an upper main beam 1131, a lower main beam 1132, a cross beam 1134, and a longitudinal beam 1133 arranged between the upper main beam 1131 and a lower main beam 1132. The longitudinal beam 1133 is connected between the upper main beam 1131 and the lower main beam 1132 along the height direction of the all-terrain vehicle 100. The upper main beams 1131 includes a left upper main beam 1131a and a right upper main beam 1131b, and the lower main beam 1132 includes a left lower main beam 1132a and a right lower main beam 1132b. The left upper main beam 1131a, the right upper main beam 1131b, the left lower main beam 1132a, and the right lower main beam 1132b each extend along the length direction of the all-terrain vehicle 100. The left upper main beam 1131a and the right upper main beam 1131b are arranged symmetrically about the longitudinal center plane 10s, and the left lower main beam 1132a and the right lower main beam 1132b are distributed symmetrically about the Longitudinal center plane 10s. The left upper main beam 1131a and the right upper main beam 1131b are connected by the crossbeam 1134, and the left lower main beam 1132a and the right lower main beam 1132b are connected by the crossbeam 1134 along the width direction of frame 11.

The longitudinal beam 1133 includes a front longitudinal beam 1133a, a middle longitudinal beam 1133b, and a rear longitudinal beam 1133c. The front longitudinal beam 1133a, the middle longitudinal beam 1133b, and the rear longitudinal beam 1133c all extend along the height direction of the all-terrain vehicle 100 and are arranged in sequence along the length direction of the all-terrain vehicle 100. The main frame 113 further includes connection posts 1135, which include front connection posts 1135a and rear connection posts 1135b. Both the front connection posts 1135a and the rear connection posts 1135b extend along the height direction of the frame 11 and are used to connect the upper main beams 1131 and the lower main beams 1132. The longitudinal beams 1133 are positioned between front connection posts 1135a and rear connection posts 1135b along the length direction of frame 11.

The steering assembly 20 includes a steering handlebar 201 and a steering tube 202. The steering handlebar 201 is connected above the steering tube 202. The steering tube 202 extends along the height direction of the frame 11. The steering tube 202 is positioned between the front connection posts 1135a and the middle longitudinal beams 1133b along the length direction of frame 11.

It should be noted that the upper main beams 1131, the lower main beams 1132, the longitudinal beams 1133, and the cross beams 1134 cooperatively define an accommodation space 115, and the engine 151 and transmission assembly 16 are at least partially arranged within the accommodation space 115. More optionally, the engine 151, the air filter 154, and fuel tank 171 are mostly positioned between the upper main beams 1131 and the lower main beams 1132. The fuel tank 171 is positioned behind the front longitudinal beams 1133a and in front of the middle longitudinal beams 1133b. The engine 151 and the air filter 154 are positioned behind the middle longitudinal beams 1133b and in front of the rear longitudinal beams 1133c. Under this arrangement, the engine 151, the air filter 154, and the fuel tank 171 are reasonably placed in the space surrounded by various parts of the frame 11, which can be better protected by the frame 11. Moreover, the reasonable arrangement between them can increase the utilization of space. Regardless of whether the fuel tank 171 is filled with fuel or not, the center of gravity of the all-terrain vehicle 100 is positioned between the front longitudinal beams 1133a and the rear longitudinal beams 1133c, and between the upper main beams 1131 and the lower main beams 1132. This arrangement is beneficial for improving the driving stability of the all-terrain vehicle 100.

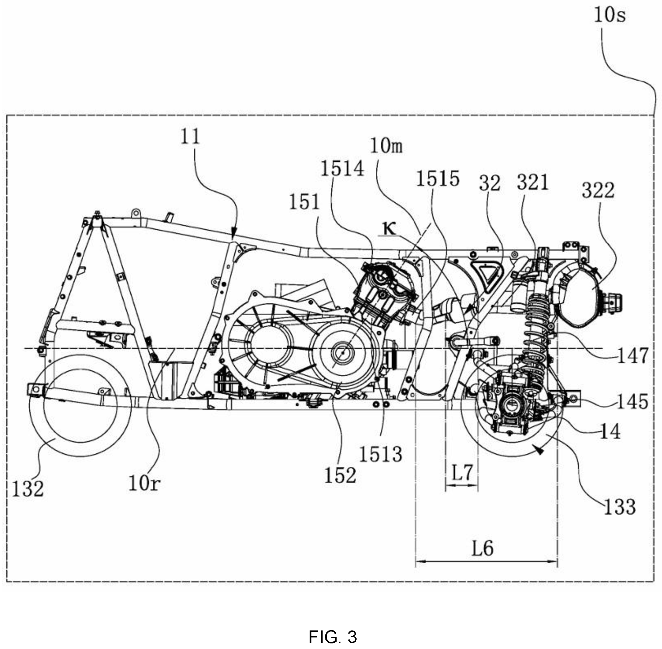

As shown in FIG. 3, FIG. 4, and FIG. 9, the traveling system 13 includes rear wheels 133 connected to the frame 11 by the suspension system 14. The prime power assembly 15 is at least partially mounted on frame 11, and is connected to rear wheels 133 to drive the rear wheels 133 to move. The all-terrain vehicle 100 further includes an exhaust assembly 32, which is used to transport and exhaust the exhaust gas generated by the prime power assembly 15.

The prime power assembly 15 includes an engine 151, which is connected to rear wheels 133 in a transmission mode, so that engine 151 drives rear wheels 133 to move. Optionally, the engine 151 includes an exhaust passage 1515, the exhaust gas generated during the operation of the engine 151 is discharged through the exhaust passage 1515 and delivered to the exhaust assembly 32.

More optionally, the exhaust assembly 32 includes an exhaust pipe 321 and a muffler 322. The exhaust pipe 321 is used to deliver exhaust gas, and the muffler 322 is used to reduce the noise generated when the exhaust pipe 321 delivers exhaust gas. The exhaust pipe 321 is in fluid communication with the exhaust passage 1515, and muffler 322 is connected to exhaust pipe 321.

In this embodiment, the opening of exhaust passage 1515 faces rearwards. This allows the exhaust pipe 321 in fluid communication with the exhaust passage 1515 to be directly arranged rearwards, which is beneficial for shortening the overall length of the exhaust pipe 321 and reducing its cost. In addition, this also reduces the space occupancy of the exhaust pipe 321 in the all-terrain vehicle 100, thereby providing more layout space for other components, so that the exhaust pipe 321 does not interfere with the assembly of other components, which is beneficial for improving the compactness of the internal structure of the all-terrain vehicle 100.

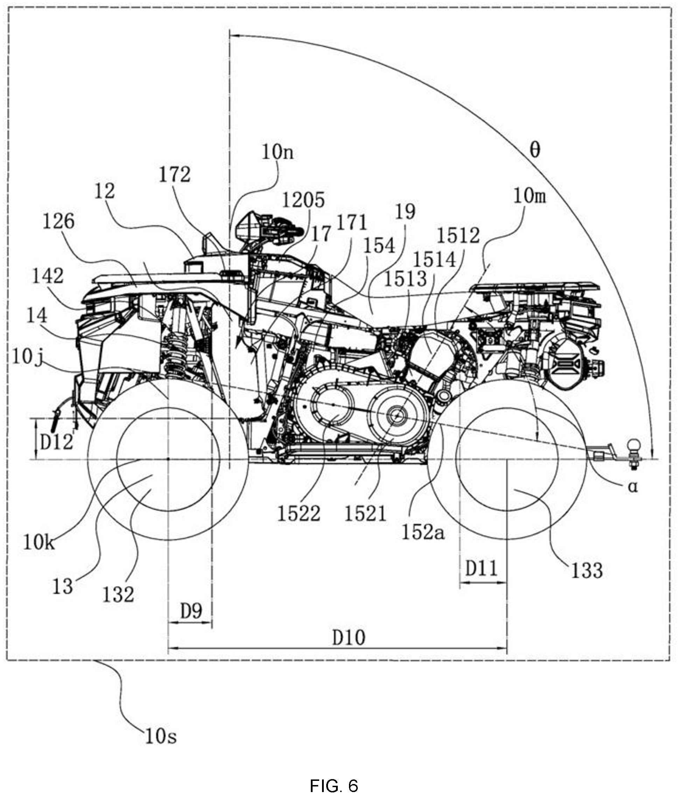

In addition, in the present disclosure, the exhaust gas generated by the engine 151 contains a large amount of heat. Therefore, through the above, the exhaust pipe 321 can be arranged towards the rear and the length of the exhaust pipe 321 can be shortened, which is conducive to shortening the flow path of the exhaust gas inside the all-terrain vehicle 100, thereby reducing the heat transfer of the exhaust gas inside the all-terrain vehicle 100, and reducing the overall temperature of the all-terrain vehicle 100 to improve the driving comfort of the all-terrain vehicle 100. Moreover, in the present disclosure, the seat assembly 19 (refer to FIG. 6) is positioned in front of the exhaust passage 1515. Therefore, the exhaust pipe 321 can be arranged rearwards, which can make the exhaust pipe 321 arranged away from the seat assembly 19, thereby reducing the heat conducted from the exhaust gas inside the exhaust pipe 321 to the seat assembly 19, and further improving the driving comfort of the all-terrain vehicle 100.

In this embodiment, the normal projection of the exhaust passage 1515 onto the horizontal plane is defined as an exhaust passage projection 1515a, and the normal projection of the rear wheel 133 axis onto the horizontal plane is defined as a rear axle projection line 133a. The minimum distance D14 between the exhaust projection 1515a and the rear axle projection line 133a is in the range from 250 mm to 400 mm. Optionally, the minimum distance D14 between the exhaust projection 1515a and the rear axle projection line 133a is in the range from 300 mm to 350 mm. More optionally, the minimum distance D14 between the exhaust projection 1515a and the rear axle projection line 133a is 325 mm. This can prevent the minimum distance D14 between the exhaust projection 1515a and the rear axle projection line 133a from being too small, which may cause the exhaust passage 1515 to be positioned excessively rearward, thereby avoiding the engine 151 from being positioned excessively rearward and interfering with the assembly of components positioned at the rear of the frame 11. This helps enhance the stability of the rear components of the frame 11. In addition, it can also avoid the minimum distance D14 between the exhaust projection 1515a and the rear axle projection line 133a being too large, which may require the installation of an excessively long exhaust pipe 321. This is beneficial for shortening the overall length of the exhaust pipe 321 to avoid interference with the assembly of other components, thereby improving the structural compactness of the exhaust pipe 321. At the same time, it can also avoid excessive heat transfer of exhaust gas inside the all-terrain vehicle 100 due to a long exhaust pipe 321, which is beneficial for reducing the overall temperature of the all-terrain vehicle 100 and improving its driving comfort.

As an embodiment, the exhaust pipe 321 extends rearwards in the front to rear direction along the frame 11, and extends in the width direction across the longitudinal center plane 10s. The exhaust pipe 321 can be centrally arranged along the width direction of the all-terrain vehicle 100, thereby avoiding the situation where the exhaust pipe 321 is biased towards one side and causes the temperature at the location of the exhaust pipe 321 to be too high. That is, there can be a gap between the exhaust pipe 321 and both sides of the all-terrain vehicle 100 along the width direction, which can block some of the heat emitted by the exhaust pipe 321 and thus help reduce the overall heat of the all-terrain vehicle 100. In addition, the centrally positioned exhaust pipe 321 is also beneficial for shortening the deployment stroke of the exhaust pipe 321 inside the all-terrain vehicle 100, thereby reducing the overall length of the exhaust pipe 321.

As an optional embodiment, a length L6 of the exhaust pipe 321 along the length direction of all-terrain vehicle 100 is in the range from 350 mm to 600 mm, Optionally, the length L6 of the exhaust pipe 321 is from 400 mm to 550 mm. More optionally, the length L6 of the exhaust pipe 321 is from 450 mm to 500 mm. This can prevent the exhaust pipe 321 from interfering with the assembly of other components due to its excessively long length, thereby improving the structural compactness of the exhaust pipe 321. At the same time, it can also avoid excessive heat transfer from the exhaust gas inside the exhaust pipe 321 due to its length L6 being too long, which is beneficial for reducing the overall temperature of the all-terrain vehicle 100 and improving its driving comfort.

As an embodiment, the normal projection of the first main beam 1131a onto the horizontal plane is defined as a first main beam projection. The normal projection of the second main beam 1131b onto the horizontal plane is defined as a second main beam projection. The normal projection of the exhaust pipe 321 is defined as a exhaust pipe projection line. The exhaust pipe projection line is positioned between the first main beam projection and the second main beam projection. That is to say, when viewed along the height direction of the all-terrain vehicle, the exhaust pipe is arranged between the first main beam and the second main beam. This arrangement is beneficial for the exhaust pipe 321 to be centrally arranged along the width direction of the all-terrain vehicle 100, thereby reducing the overall heat of the all-terrain vehicle 100. Secondly, it can also avoid the exhaust pipe 321 being positioned on the outside of the upper main beam 1131, which may interfere with the installation of components on the outside of the frame 11. In addition, it also avoids the exhaust pipe 321 being positioned outside the upper main beam 1131, which may prevent the frame 11 from protecting the exhaust pipe 321, thereby improving the protection effect of the exhaust pipe 321 and increasing its service life.

As an embodiment, the suspension system 14 includes a rear rocker arm 145 and a shock absorber 147. The rear wheels 133 are connected to the frame 11 by the rear rocker arm 145, and the two ends of the shock absorber 147 are respectively connected to the rear rocker arm 145 and the frame 11, so that the shock absorber 147 can absorb vibration for the rear rocker arm 145. Optionally, when viewed from the width direction of the all-terrain vehicle 100, the shock absorber 147 overlaps at least partially with the exhaust pipe 321. This setting can avoid interference between the assembly of exhaust pipe 321 and the shock absorber 147. In addition, it can avoid the exhaust pipe 321 occupying the layout space above the shock absorber 147 and reducing the layout space of the shock absorber 147, which is conducive to arranging large volume shock absorbers 147 to improve the shock absorption effect of the shock absorber 147 and thus improve the comfort of the all-terrain vehicle 100.

As shown in FIG. 6, as an embodiment, the vehicle body cover 12 includes a front mudguard 126, which is used to block soils and moisture. The traveling system 13 includes front wheels 132, which are used to drive and turn the all-terrain vehicle 100. The front mudguard 126 is positioned at least partially above the front wheel 132. Moreover, the all-terrain vehicle 100 further includes a suspension system 14. The front wheels 132 are connected to the frame 11 by the suspension system 14. The prime power assembly 15 includes an engine 151, which is at least partially mounted on the frame 11 and connected to the front wheels 132 in a transmission mode, so that the engine 151 can provide power to the front wheels 132 to drive the engine 151 to move.

Optionally, the all-terrain vehicle 100 further includes a fuel assembly 17 supported by the frame 11. The fuel assembly 17 includes a fuel tank 171 for supplying energy to the engine 151. More optionally, a first plane 10j is defined as a plane perpendicular to the length direction of the all-terrain vehicle 100 and including a front wheel rotation axis, and a second plane 10k is defined as a plane perpendicular to the height direction of the frame and including the front wheel rotation axis. The fuel tank 171 is positioned behind the first plane 10j and at least partially in front of the engine 151, and above the second plane 10k and at least partially below the front mudguard 126. In this way, the fuel tank 171 can be positioned at the front of the frame 11, so that the fuel tank 171 can be distributed along the length direction of the all-terrain vehicle 100 with the engine 151, that is, the fuel tank 171 can be positioned in front of the engine 151, so that the fuel tank 171 can balance the weight of the engine 151, thereby improving the stability of the all-terrain vehicle 100. At the same time, as the fuel tank 171 is positioned in front of the engine 151, the height of the center of gravity of the fuel tank 171 can be lowered, which can make the center of gravity of the fuel tank 171 closer to the second plane 10k, thereby reducing the height of the center of gravity of the all-terrain vehicle 100 and improving its driving stability. Moreover, the fuel tank 171 is positioned behind the first plane 10j, which can prevent the installation of the fuel tank 171 from interfering with the front components of the frame 11, thereby improving the working stability of the fuel tank 171 and the front components of the frame 11. Moreover, the fuel tank 171 is positioned above the second plane 10k, which can avoid interference between the fuel tank 171 and the frame 11, front wheels 132, and suspension system 14, thereby facilitating the stable operation of the fuel tank 171, the front wheels 132, and the suspension system 14.

In addition, through the above, the fuel tank 171 can be arranged in front of the engine 151, thereby providing a space for arrangement behind the engine 151 to avoid the need for the exhaust pipe 321 (refer to FIG. 3) to avoid the fuel tank 171 to be arranged at the rear of the frame 11, which is beneficial for the exhaust pipe 321 to be directly arranged towards the rear of the engine 151, and to shorten the length of the exhaust pipe 321.

As an embodiment, a minimum distance between the fuel tank 171 and the first plane 10j along the length direction of the all-terrain vehicle 100 is defined as a first distance D9. The distance between a front wheel 132 axis and the rear wheel 133 axis along the length direction of the all-terrain vehicle 100 is defined as a wheelbase D10. A ratio of the first distance D9 to the wheelbase D10 is in the range from 0.11 to 0.14, More preferably, the ratio of the first distance D9 to the wheelbase D10 is 0.13. This can avoid the ratio of the first distance D9 to the wheelbase D10 being too large, which may cause the fuel tank 171 to be positioned excessively rearward, thereby avoiding the fuel tank 171 from being unable to balance the weight of the engine 151, and thus improving the stability of the all-terrain vehicle 100. At the same time, it can also avoid the installation position of fuel tank 171 being positioned excessively rearward, which may interfere with the installation of other components, thereby improving the overall assembly coordination of all-terrain vehicle 100 and enhancing the overall structural compactness of all-terrain vehicle 100. In addition, it can also avoid the ratio of the first distance D9 to the wheelbase D10 being too small, which may cause the fuel tank 171 to be too forward, thereby avoiding the installation of the fuel tank 171 interfering with the front components of the frame 11 and improving the working stability of the all-terrain vehicle 100.

In addition, it can avoid the ratio of the first distance D9 to the wheelbase D10 being too large, which may cause the fuel tank 171 to be positioned excessively rearward, resulting in the engine 151 being set positioned excessively rearward, to avoid the engine 151 interfering with the installation of the components at the rear of the frame 11, thereby improving the assembly coordination of the components at the rear of the frame 11 and enhancing the structural compactness of the rear of the frame 11. It can also avoid the ratio of the first distance D9 to the wheelbase D10 being too small, which may cause the fuel tank 171 to be set too far forward, thereby avoiding the engine 151 being set too far forward and causing the length of the exhaust pipe 321 to be too long, to avoid the interference of the excessively long exhaust pipe 321 with the assembly of other components, and thus to improve the assembly coordination of components at the exhaust pipe 321. Moreover, it can also avoid excessive heat transfer from the exhaust gas inside the exhaust pipe 321 due to its length being too long, which is beneficial for reducing the overall temperature of the all-terrain vehicle 100 and improving its driving comfort. At the same time, it can also avoid the fuel tank 171 being too far forward, which may interfere with the components at the front of the frame 11, thus facilitating the assembly coordination of the front of the frame 11.

As an embodiment, an angle κ defined by the cylinder axis 10m and the second plane 10k opens rearwards. The cylinder heads 1514 are oriented towards the rear of the frame, so that the engine 151 can be oriented towards the rear of the frame, and space for mounting the fuel tank 171 in front of the engine 151 can be reserved to facilitate the assembly of the fuel tank 171. In addition, the fuel tank 171 and the engine 151 can be distributed along the length direction of the all-terrain vehicle 100, so that the fuel tank 171 can balance the weight of the engine 151, which is beneficial for improving the overall stability of the all-terrain vehicle 100.

As an embodiment, the minimum distance between the engine 151 to the rear wheel 133 axis along the length direction of all-terrain vehicle 100 is defined as a rear mounting distance D11, and the ratio of the first distance D9 to the rear mounting distance D11 is in the range from 0.11 to 0.17. Optionally, the ratio of the first distance D9 to the rear mounting distance D11 is in the range from 0.13 to 0.16. More optionally, the ratio of the first distance D9 to the rear mounting distance D11 is 0.14. This can avoid the ratio of the first distance D9 to the rear mounting distance D11 being too large, which may cause the fuel tank 171 and the engine 151 to be arranged positioned excessively rearward, thereby avoiding the overall center of gravity of the all-terrain vehicle 100 being positioned excessively rearward, which helps enhance the stability of the vehicle body. At the same time, it can also avoid the fuel tank 171 and the engine 151 being positioned excessively rearward, which may interfere with the installation of other components, thereby improving the overall assembly coordination of the all-terrain vehicle 100. In addition, it can also prevent the ratio of the first distance D9 to the rear mounting distance D11 being too small, which may cause the fuel tank 171 and the engine 151 being positioned excessively forward, thereby avoiding the overall center of gravity of the all-terrain vehicle 100 from being too forward, and further improving the stability of the all-terrain vehicle 100. Moreover, this ratio can also prevent the fuel tank 171 and the engine 151 from interfering with the front components mounted on the frame 11 as a result of their excessively forward positioning, which helps enhance the operational stability of the all-terrain vehicle 100.

As an embodiment, the minimum distance between the fuel tank 171 and the second plane 10k along the height direction of the all-terrain vehicle 100 is defined as a second distance D12, and a ratio of the second distance D12 to the wheelbase D10 is in the range from 0.09 to 0.15. Optionally, the ratio of the second distance D12 to the wheelbase D10 is in the range from 0.11 to 0.14. More optionally, the ratio of the second distance D12 to the wheelbase D10 is 0.12. This can avoid the installation position of the fuel tank 171 being too high due to the ratio of the second distance D12 to the wheelbase D10 being too large, thereby avoiding the center of gravity of the fuel tank 171 being too high, which is beneficial for lowering the overall center of gravity position of the all-terrain vehicle 100 and improving its stability. In addition, it can also avoid the installation position of the fuel tank 171 being too low due to the ratio of the second distance D12 to the wheelbase D10 being too small, thereby avoiding interference of the fuel tank 171 with the installation of other components at the bottom of the all-terrain vehicle 100. This helps enhance the overall assembly coordination of the all-terrain vehicle 100 and enhancing its overall structural compactness.

As an embodiment, the suspension system 14 includes a front shock absorber 142 and a front rocker arm (not shown). The front rocker arm connects the front wheel 132 to the frame 11, and the front shock absorber 142 is rotatably connected to the front rocker arm and the frame 11, so that the front shock absorber 142 can absorb vibration between the frame 11 and the front rocker arm. The fuel tank 171 is positioned at least partially behind front shock absorber 142. This can avoid interference of the fuel tank 171 with the installation of the front shock absorber 142, thereby improving the assembly coordination between the fuel tank 171 and the front shock absorber 142, and enhancing the structural compactness of the fuel tank 171.

As an embodiment, the vehicle body cover 12 further includes a storage box assembly 1205, which is used for storage and supported by the frame 11. Optionally, the storage box assembly 1205 is positioned at least partially between the front mudguard 126 and the seat assembly 19 along the length direction of the all-terrain vehicle 100, and the fuel tank 171 is positioned at least partially below the storage box assembly 1205. In the present disclosure, due to the ability of the fuel tank 171 to utilize the space in front of the engine 151, the overall height of the fuel tank 171 can be lowered, thereby allowing for a reserved layout space above the fuel tank 171. This facilitates the positioning of larger volume storage box assembly 1205 within the aforementioned layout space, thereby improving the storage function of the storage box components 1205. In addition, without increasing the overall volume of the all-terrain vehicle 100, by reserving layout space above the fuel tank 171, other components to use the above layout space for layout, thereby improving the space utilization rate of the all-terrain vehicle 100.

As an embodiment, the fuel assembly 17 includes a refueling port 172, connected to the fuel tank 171, so that the fuel tank 171 can be refueled through refueling port 172. The fuel port 172 is defined on the front mudguard 126.

As an embodiment, the refueling port 172 substantially extends along a predetermined straight line 10n. The normal projection of the preset straight line 10n onto the longitudinal center plane 10s is defined as a first projection line. The normal projection of the second plane 10k onto the longitudinal center plane 10s is a axis horizontal line. An angle θ defined between the first projection line and the axis horizontal line is in the range from 20° to 90°. The opening of the angle faces towards the rear. More optionally, the angle θ defined between the first projection line and the axis horizontal line is in the range from 40 ° to 70 °. This can prevent the angle θ defined between the first projection line and the axis horizontal line from being too small, which may cause the refueling port 172 to tilt excessively, thereby avoiding the refueling port 172 from tilting excessively and reducing the smoothness of refueling, and thus improving the refueling efficiency of the refueling port 172. In addition, it can also avoid the angle θ being too large, which may cause the opening of the angle to face forward. Therefore, when the fuel gun is refueling to the refueling port 172, it can avoid interference between the fuel gun and the components set in front of the all-terrain vehicle 100 (such as the front shelf on the front mudguard 126), thereby improving the convenience of refueling at the fuel port 172.

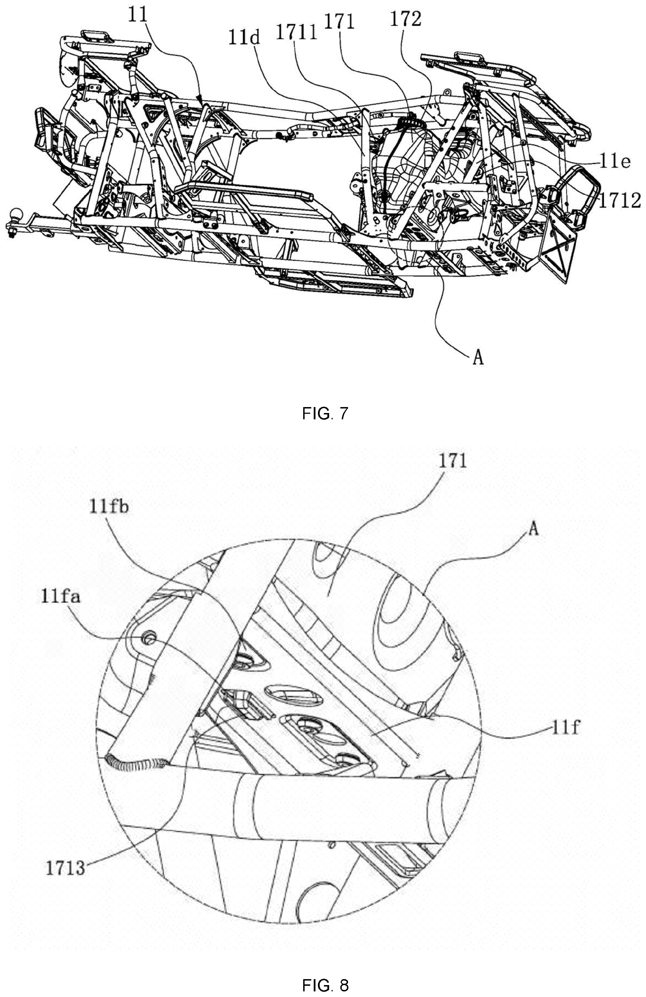

As shown in FIG. 7 and FIG. 8, the fuel tank 171 has a first mount portion 1711, a second mount portion 1712, and a plug-in mounting portion 1713. Optionally, the frame 11 includes a first pipe 11d positioned in front of the fuel tank 171, a second pipe 11e positioned behind the fuel tank 171, and a support crossbeam 11f positioned below the fuel tank 171. The first mount portion 1711 is fixedly connected to the first pipe 11d, and the second mount portion 1712 is fixedly connected to the second pipe 11e.| In some embodiments, the first pipe 11d and the second pipe 11e are distributed along the length direction of the all-terrain vehicle 100, and positioned on two sides of the fuel tank 171 , so that the first mount portion 1711 and the second mount portion 1712 can fix the two sides of the fuel tank 171, thereby improving the stability of the fuel tank 171.

In this embodiment, the plug-in mounting portion 1713 is plugged into the support crossbeam 11f. In some embodiments, a plug-in interface 11fa is defined on the support crossbeam 11f, and the plug-in interface 11fa is configured to be able to clamp with the clamping portion. In this way, by inserting the plug-in mounting portion 1713 into the support crossbeam 11f, the installation position of the fuel tank 171 can be limited, which helps simplify the assembly process of the fuel tank 171 and improve the assembly efficiency of the fuel tank 171. In addition, through the above settings, the connection stability between fuel tank 171 and frame 11 can be further improved.

As shown in FIG. 9 to 12, a straight line connecting a normal projection of a central axis of the drive pulley 1521 onto the longitudinal center plane 10s and a normal projection of the central axis of the driven pulley 1522 onto the Longitudinal center plane 10s is defined as a transmission axis 152a. The cylinder 1513 has a cylinder axis 10m, and the normal projection of cylinder axis 10m on the longitudinal center plane 10s is defined as a cylinder axis projection line. The opening of the angle α defined by the cylinder axis projection line and the transmission axis 152a faces towards the rear of all-terrain vehicle 100, and the angle α is in the range from 35 ° to 75 °, Optionally, the angle α defined by the cylinder axis projection line and the transmission axis 152a is in the range from 40 ° to 70 °. More optionally, the angle α defined by the cylinder axis projection line and the transmission axis 152a is in the range from 45° to 65°. For example, in one embodiments, the angle α defined by the cylinder axis projection line and the transmission axis 152a is 64.7 °. Through the above the exhaust pipe 321 can be directly arranged rearward, thereby shortening the overall length of the exhaust pipe 321. Moreover, through the above, it is also possible to avoid the angle α defined by the cylinder axis projection line and the transmission axis 152a being too large, which leads to an increase in the length of the exhaust pipe 321 and thus helps to shorten the overall length of the exhaust pipe 321. In addition, it can also avoid the angle α defined by the cylinder axis projection line and the transmission axis 152a being too small, which may cause the cylinder head 1514 to be positioned excessively rearward, thereby avoiding the cylinder head 1514 from interfering with the mounting of other components.

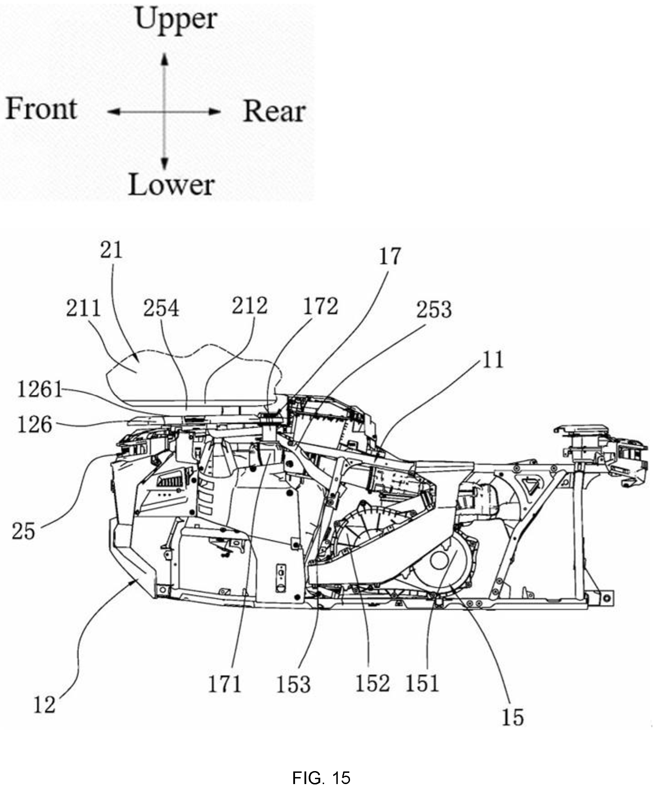

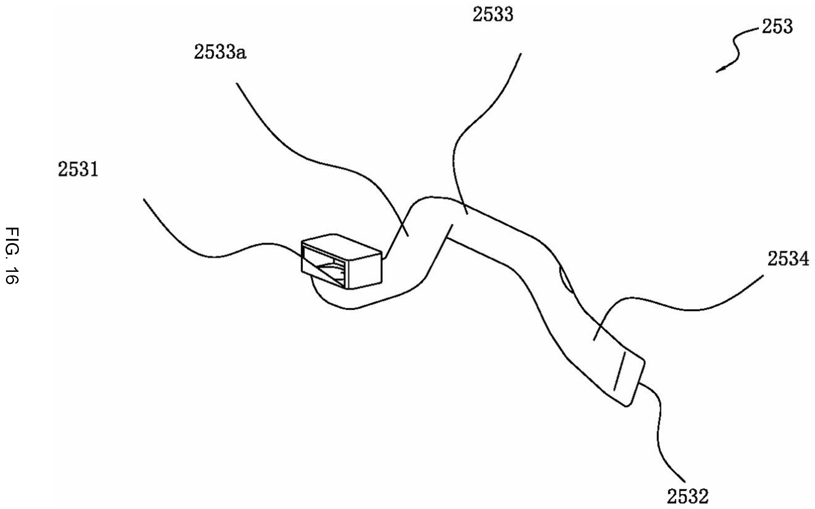

As shown in FIG. 15 and FIG. 16, the radiator assembly 25 defines a heat dissipation duct 253 for guiding the air outside the all-terrain vehicle 100 to the continuously variable transmission 152, thereby cooling and dissipating the heat from the continuously variable transmission 152.

Optionally, the heat dissipation duct 253 defines an air inlet 2531 and an air outlet 2532. The heat dissipation duct 253 is configured to deliver external air to the continuously variable transmission 152 through the air inlet 2531 and the air outlet 2532. The vehicle body cover 12 includes a front mudguard 126, and the wheels 13 include front wheels 131. The front mudguard 126 is positioned above the front wheels 131, and when viewed along the height direction of the frame 11, the front mudguard 126 overlaps at least partially with the front wheels 131. The front mudguard 126 is used to block mud, gravel, and other debris. The air inlet 2531 is defined on the front mudguard 126, and external air enters the heat dissipation duct 253 through the air inlet 2531. The air outlet 2532 is oriented towards the continuously variable transmission 152. The air that enters the heat dissipation duct 253 from the air inlet 2531 is discharged from the air outlet 2532 and delivered to the continuously variable transmission 152.

Due to the large amount of heat generated during the operation of the continuously variable transmission 152, the temperature of the continuously variable transmission 152 is too high. The existing cooling and heat dissipation structure has insufficient cooling effect on the continuously variable transmission 152. Therefore, a heat dissipation pipe 253 is added to improve the cooling and heat dissipation effect on the continuously variable transmission 152. The external air is transported to the continuously variable transmission 152 through the heat dissipation pipe 253, taking away the heat of the continuously variable transmission 152, thereby improving the cooling and heat dissipation effect of the continuously variable transmission 152 and reducing the overall temperature of the all-terrain vehicle 100.

As an embodiment method, the opening of the air inlet 2531 is substantially oriented forward. Due to the generation of airflow from front to back during the operation of the all-terrain vehicle 100, the opening of the air inlet 2531 is generally oriented forward, which allows external air to smoothly enter the heat dissipation duct 253 from the air inlet 2531 and form an airflow from the air inlet 2531 to the air outlet 2532 inside the heat dissipation duct 253, thereby improving the cooling and heat dissipation effect of the continuously variable transmission 152.

In the present disclosure, a filtering structure is mounted inside the air inlet 2531, which is used to block sediment, gravel from entering the heat dissipation pipeline 253, thereby avoiding sediment, gravel, from entering the continuously variable transmission 152, causing collision and wear to the continuously variable transmission 152, and thus preventing damage to the continuously variable transmission 152. In the present disclosure, the filtering structure includes a filter screen, etc.

As an embodiment, the all-terrain vehicle 100 includes a cargo box assembly 21, which includes a cargo box 211 and a front cargo box mounting plate 212. The front cargo box mounting plate 212 is used to mount the cargo box 211. The front mudguard 126 has a mounting surface 1261, and the front cargo box mounting plate 212 is mounted on the mounting surface 1261 with a gap 254 between them. The air inlet 2531 is positioned within the gap 254. The above arrangement allow external air to enter the air inlet 2531 through the gap 254 between the mounting surface 1261 of the front cargo box mounting plate 212 and the front mudguard 126. The air inlet 2531 is defined within the gap 254 to block most of the sand, gravel, and other debris from entering the heat dissipation duct 253, thereby avoiding sand, gravel, and other debris from entering the continuously variable transmission 152 and causing collision and wear to the mechanism, thereby preventing damage to the mechanism. At the same time, the air inlet 2531 is defined within the gap 254, so that external air can enter the air inlet 2531 through the gap 254 without affecting the air intake effect of the heat dissipation duct 253. In addition, the above arrangement can also enable the air inlet 2531 to be arranged using the gap 254, making the structure of the all-terrain vehicle 100 more compact and improving the space utilization of the all-terrain vehicle 100.

As an embodiment, the prime power assembly 15 further includes a CVT intake pipe 153. The CVT intake pipe 153 is connected to the continuously variable transmission 152, and is used to intake air into the CVT 152. When viewed from the width direction of the frame 11, the CVT intake pipe 153 overlaps at least partially with the heat dissipation pipe 253 to avoid interference between the CVT intake pipe 153 and the heat dissipation pipe 253, and to improve the compactness of the internal structure of the all-terrain vehicle 100.

Optionally, the all-terrain vehicle 100 further includes a fuel assembly 17. The fuel assembly 17 includes a fuel tank 171 and a refueling port 172 in fluid communication with the fuel tank 171 and positioned above the fuel tank 171. The heat dissipation duct 253 is positioned at least partially between the refueling port 172 and the CVT intake pipe 153 along the width direction of frame 11. The heat dissipation duct 253 is interspersed between the refueling port 172 and the CVT intake pipe 153 to avoid interference between the heat dissipation duct 253, the refueling port 172, and the CVT intake pipe 153, and to improve the compactness of the internal structure of the all-terrain vehicle 100.

More optionally, the heat dissipation duct 253 is at least partially bent to define a bent portion 2533a to avoid the refueling port 172. The bent portion 2533a can avoid interference between the heat dissipation pipe 253 and the fuel filling port 172, and further improves the compactness of the internal structure of the all-terrain vehicle 100.

More optionally, the bent portion 2533a is fixedly connected to the frame 11, and the method of fixing the bent portion 2533a to the frame 11 may be welding or bolt connection, etc., to improve the stability of the heat dissipation duct 253 during the driving process of the all-terrain vehicle 100.

As an embodiment, the heat dissipation duct 253 includes an integrated circular tube portion 2533 and a flat tube portion 2534. The circular tube portion 2533 is in fluid communication with the air inlet 2531, and the flat tube portion 2534 is in fluid communication with the air outlet 2532. The flat tube portion 2534 is configured to reduce the thickness of the heat dissipation duct 253 in a predetermined direction. The above preset direction can be in any direction, and the setting of the flat tube portion 2534 allows the heat dissipation duct 253 to pass through the narrow gaps between the internal structures of the all-terrain vehicle 100, avoiding interference with the internal structures of the all-terrain vehicle 100, thereby fully utilizing the limited space and improving the space utilization efficiency inside the all-terrain vehicle 100.

It should be noted that the bent portion 2533a is positioned on the circular tube portion 2533, so that the internal channel at the bent portion 2533a is not too narrow, thereby reducing the flow resistance of air in the heat dissipation duct 253 and improving the heat dissipation effect on the continuously variable transmission 152.

Optionally, the flat tube portion 2534 is at least partially positioned between the CVT intake pipe 153 and the frame 11 along the width direction of the frame 11, and the thickness of the flat tube portion 2534 along the width direction of the frame 11 is smaller than the thickness of the flat tube portion 2534 along the height direction of the frame 11. The gap between the CVT intake pipe 153 and the frame 11 is relatively small. The flat tube portion 2534 allows the heat dissipation pipe 253 to pass through the gap between the CVT intake pipe 153 and the frame 11, and the heat dissipation pipe 253 will not interfere with the CVT intake pipe 153 and the frame 11, thereby fully utilizing the limited space and improving the internal space utilization rate of the all-terrain vehicle 100.

More optionally, the flat tube portion 2534 is fixedly connected to the frame 11, and the method of fixing the flat tube portion 2534 to the frame 11 may be welding or bolt connection, further improving the stability of the heat dissipation duct 253 during the driving process of the all-terrain vehicle 100.

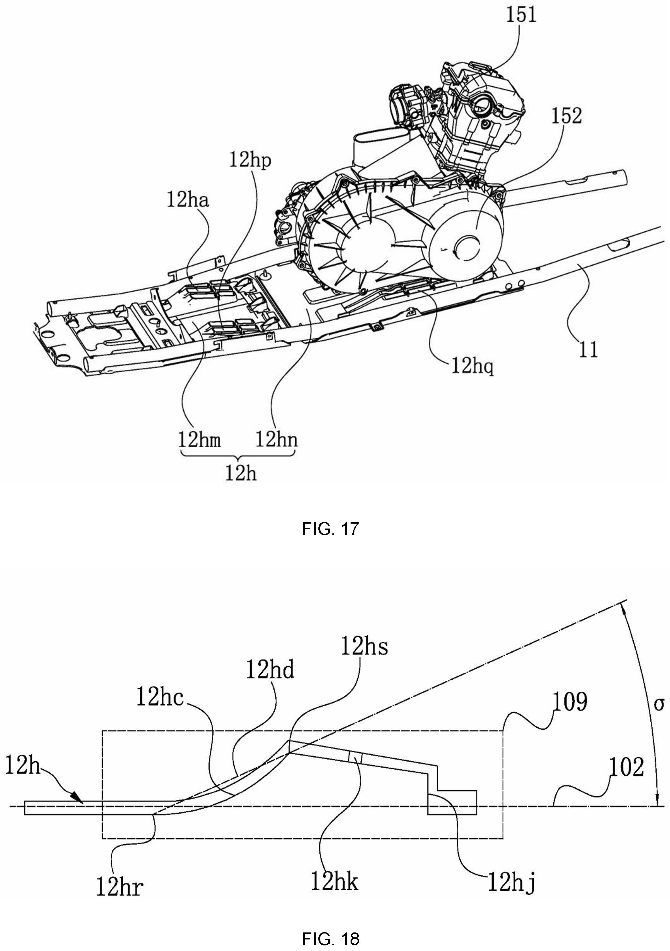

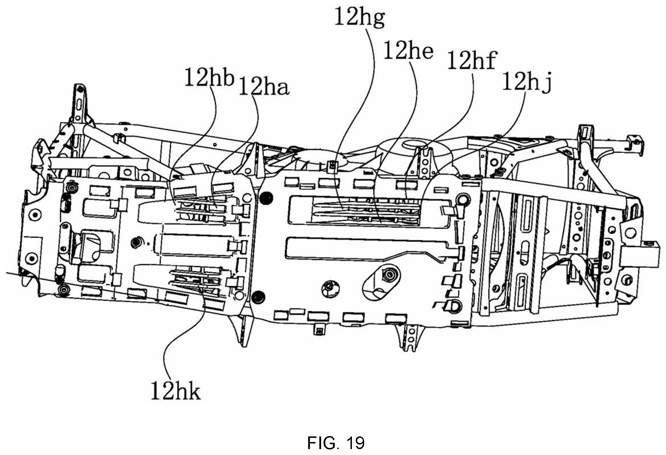

As shown in FIG. 17 to FIG. 19, the vehicle body cover 12 includes a lower guard plate 12h positioned below the frame 11 and fixedly connected to the frame 11, so that the lower guard plate 12h can protect the lower portion of the all-terrain vehicle 100 to avoid damage to the internal components of the all-terrain vehicle 100 caused by external impurities such as stones and mud. The lower guard plate 12h is positioned below the prime power assembly 15, and the lower guard plate 12h is substantially perpendicular to the height direction of the frame 11, so that the lower guard plate 12h will not affect the mounting of the prime power assembly 15, and further improve the protective effect on the prime power assembly 15.

A heat dissipation hole 12ha is defined on the lower guard plate 12h. The heat dissipation hole 12ha faces towards the prime power assembly 15. When viewed from the height direction of the frame 11, the heat dissipation hole 12ha at least partially overlaps with the prime power assembly 15. Therefore, during the driving process of the all-terrain vehicle 100, the external air can be transported above the lower guard plate 12h through the heat dissipation hole 12ha, so that the external air can be transported to the prime power assembly 15, thereby improving the heat dissipation effect of the prime power assembly 15.

Optionally, the lower guard plate 12h defines a heat dissipation groove 12hz having an opening facing downwards. The heat dissipation groove 12hz has a front side wall 12hc which is substantially a convex curved surface, the front side wall 12hc includes a front end 12hr and a rear end 12hs. The height of the rear end 12hs is higher than that of the front end 12hr. The front end 12hr is positioned at the opening of the heat dissipation groove 12hb, and the rear end 12hs is connected to the bottom of the heat dissipation groove 12hb. The bottom of the heat dissipation groove 12hb defines the heat dissipation hole 12ha. Through the above arrangement, external air from the front end 12hr of the front side wall 12hc along the front side wall 12hc to the rear end 12hs of the front side wall 12hc, and then transported to the prime power assembly 15 through the heat dissipation holes 12ha at the bottom of the heat dissipation groove 12hb from the rear end 12hs of the front side wall 12hc, thereby achieving heat dissipation of the prime power assembly 15. The front side wall 12hc of the convex surface can have a guiding effect on the external air, thereby increasing the intake of air into the heat dissipation hole 12ha to further improve the heat dissipation effect on the prime power assembly 15.

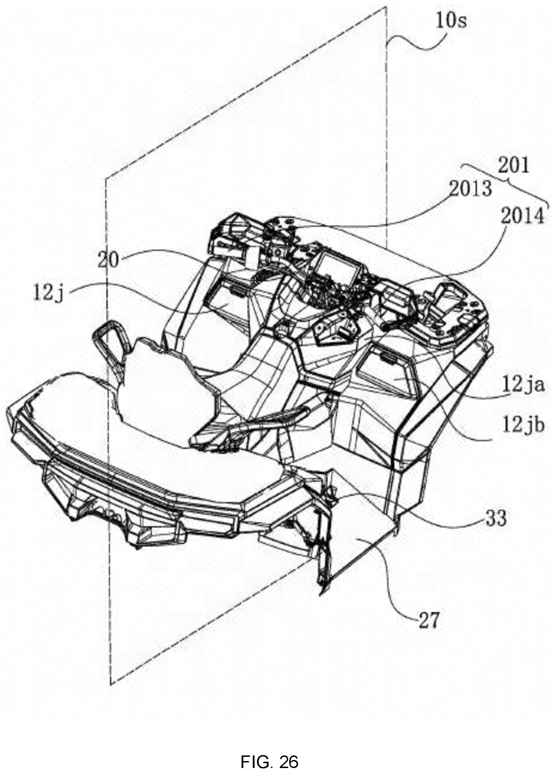

A preset straight line 12hd is defined as a straight line connecting the front-end 12hr and back-end 12hs. A longitudinal center plane 10s of the all-terrain vehicle 100 is defined as a plane perpendicular to the width direction of the frame 11 and including the central line of the width of the frame 11(see FIG. 26). A normal projection of the preset straight line onto the longitudinal center plane 10s is defined as a sidewall line. An angle σ defined by the sidewall line and the horizontal plane is in the in the range from 23 ° to 40 °, and the opening of the angle faces rearwards. Optionally, the angle σ defined by the sidewall line and the horizontal plane is in the in the range from 26 ° to 36 °. More optionally, the angle σ defined by the sidewall line and the horizontal plane is 33 °.

The above settings can avoid the angle σ defined by the sidewall line and the horizontal plane being too small, which may cause the length of the front side wall 12hc along the length direction of the frame 11 to be too long. This can prevent the structural strength of the lower guard plate 12h from being reduced due to the length of the front side wall 12hc being too long, and can also prevent air leakage to the outside due to the length of the front side wall 12hc being too long, thereby improving the heat dissipation effect of the heat dissipation hole 12ha on the prime power assembly 15. At the same time, the above settings can also prevent the angle σ defined by the sidewall line and the horizontal plane from being too large, which may cause the thickness of the lower guard plate 12h along the height direction of the frame 11 to be too large, thereby avoiding interference of the lower guard plate 12h with the internal components of the all-terrain vehicle 100.

As an embodiment, the heat dissipation groove 12hz has a first side wall 12he and a second side wall 12hf distributed along the width direction of the frame 11. The first side wall 12he, the second side wall 12hf, and the front side wall 12hc cooperatively define an intake passage 12hg for delivering external air to the heat dissipation hole 12ha. The above settings can limit the external air to the intake passage 12hg to prevent external air leakage, thereby increasing the intake volume at the heat dissipation hole 12ha and improving the heat dissipation effect on the prime power assembly 15.

Optionally, the heat dissipation groove 12hb has a rear side wall 12hj for sealing the rear of the intake passage 12hg, and the rear side wall 12hj is configured to block the leakage of external air from the inside and outside of the intake passage 12hg. At the same time, the above settings can also block the external air by the rear wall 12hj, so that the external air can flow into the heat dissipation hole 12ha.

In the present disclosure, a grille 12hk is provided at the bottom of the heat dissipation groove 12hb, and a heat dissipation hole 12ha is defined in the gap in the grille 12hk. The grille 12hk is used to block impurities such as stones and mud from entering above the lower guard plate 12h, thereby avoiding damage to the prime power assembly 15 and other components caused by external impurities.

As an embodiment, the lower guard plate 12h includes a first guard plate 12hm and a second guard plate 12hn positioned behind the first guard plate 12hm. The second guard plate 12hn is at least partially positioned below the prime power assembly 15, and both the first guard plate 12hm and the second guard plate 12hn defines heat dissipation grooves 12hb and heat dissipation holes 12ha. The split lower guard plate 12h can be adjusted according to assembly requirements, which helps simply the assembly of the lower guard plate 12h.

Optionally, the prime power assembly 15 includes a continuously variable transmission 152 and an engine 151. The heat dissipation holes 12ha of the first guard plate 12hm are oriented towards the engine 151, and the heat dissipation holes 12ha of the second guard plate 12hn are oriented towards the continuously variable transmission 152, so that the heat dissipation holes 12ha on the first guard plate 12hm can dissipate heat from the engine 151, and the heat dissipation holes 12ha on the second guard plate 12hn can dissipate heat from the continuously variable transmission 152.

In this embodiment, the heat dissipation grooves 12hb includes a first heat dissipation groove 12hp, and the first guard plate 12hm includes a plurality of first heat dissipation grooves 12hp distributed along the width direction of the frame 11. The heat dissipation holes 12ha on the plurality of first heat dissipation grooves 12hp are all oriented towards the engine 151 to improve the heat dissipation efficiency of the engine 151.

In this embodiment, the continuously variable transmission 152 and the engine 151 are distributed along the width direction of the frame 11. The heat dissipation grooves 12hz includes a second heat dissipation grooves 12hq, and at least one second heat dissipation grooves 12hq is defined on the second guard plate 12hn. When viewed from the height direction of the frame 11, the heat dissipation holes 12ha on the second heat dissipation groove 12hq at least partially overlap with the continuously variable transmission 152, so that the second heat dissipation groove 12hq can better transport external air to the continuously variable transmission 152 through the heat dissipation holes 12ha, thereby improving the heat dissipation efficiency of the continuously variable transmission 152.

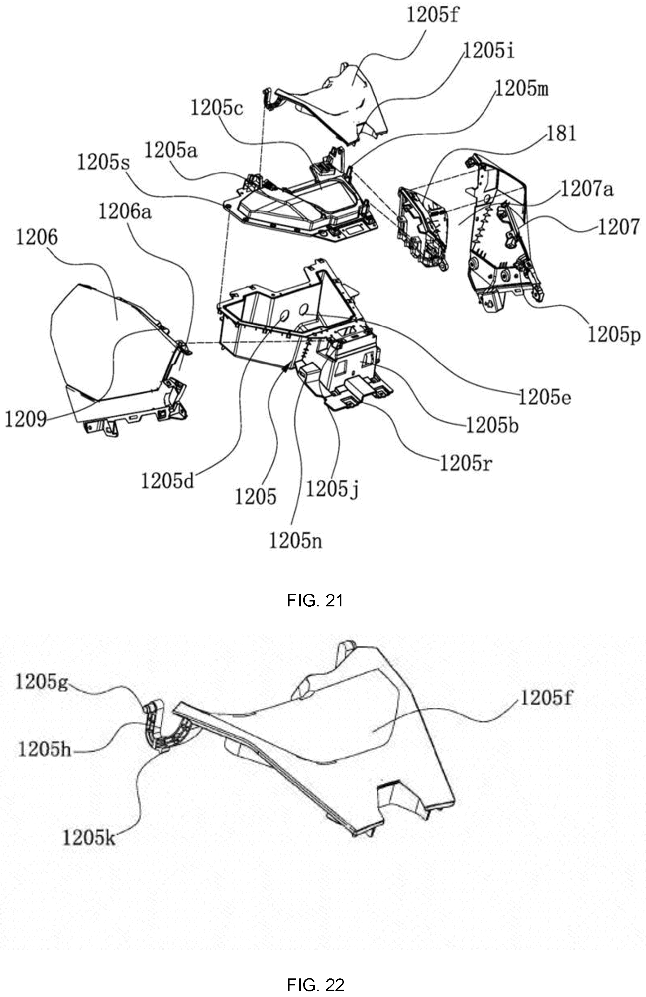

As shown in FIG. 21 and FIG. 22, the vehicle body cover 12 further includes a left cover 1206 and a right cover 1207. Optionally, the storage box assembly 1205, the left cover 1206, and the right cover 1207 are all at least partially supported by the frame 11. The storage box assembly 1205, the left cover 1206, and the right cover 1207 are all at least partially positioned between the front mudguard 126 and the seat assembly 19 along the length direction of the frame 11. The left cover 1206 and right cover 1207 are distributed on both sides of the storage box assembly 1205 along the width direction of the frame 11. The left cover 1206 and the front mudguard 126 cooperatively define a first space 1206a, and the right cover 1207 and the front mudguard 126 cooperatively define a second space 1207a. In this way, the first space 1206a and the second space 1207a can provide layout space for components, which helps improve the space utilization at the left cover 1206 and the right cover 1207.

More optionally, the storage box assembly 1205 is positioned at least partially within the first space 1206a and/or the second space 1207a. In this way, the storage box assembly 1205 can utilize the layout space provided by the first space 1206a and/or the second space 1207a, thereby increasing the space occupancy of the storage box assembly 1205, and thus increasing the storage capacity of the storage box assembly 1205, which helps improve the storage function of the all-terrain vehicle 100.

In some embodiments, the storage box assembly 1205 has a capacity range of 6 L to 10 L. Optionally, the storage box assembly 1205 has a capacity range of 7 L to 9 L. More optionally, the storage box assembly 1205 has a capacity of 8L. Through the above settings, it is possible to avoid interference with other components in the first space 1206a and the second space 1207a caused by the large volume range of the storage box assembly 1205, which is conducive to improving the space utilization efficiency in the first space 1206a and the second space 1207a. It can also prevent the storage space of the storage box assembly 1205 from being reduced due to the small volume range of the storage box assembly 1205, thereby improving the storage performance of the storage box assembly 1205.

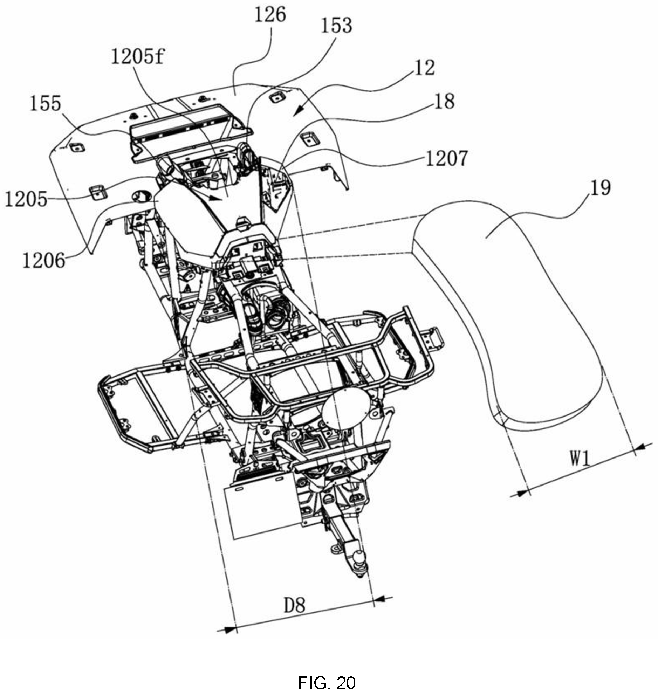

As shown in FIG. 20, as an embodiment, the prime power assembly 15 also includes an air filter intake pipe 155 and a CVT intake pipe 153. The air filter inlet pipe 155 is connected to the air filter 154 for supplying air to the air filter 154. The continuously variable transmission 152 is used to adjust the transmission ratio, and the CVT intake pipe 153 is connected to the continuously variable transmission 152, and the CVT intake pipe 153 is used to provide air to the continuously variable transmission 152. Optionally, when viewed from the height direction of frame 11, the storage box assembly 1205 at least partially overlaps with the air filter intake pipe 155, and the storage box assembly 1205 at least partially overlaps with the CVT intake pipe 153. This arrangement can improve the structural compactness of the storage box assembly 1205.

In some embodiments, both the air filter intake pipe 155 and the CVT intake pipe 153 are at least partially positioned below the storage box assembly 1205, which can avoid interference from the air filter intake pipe 155 and the CVT intake pipe 153 when retrieving items from the storage box assembly 1205 and can improve the convenience of using the storage box assembly 1205.

As shown in FIG. 20 and FIG. 21, the maximum distance D8 between the left cover 1206 and the right cover 1207 along the width direction of the frame 11 is greater than the maximum width W1 of the seat assembly 19 along the width direction of the frame 11, which can increase the volume of the first space 1206a and the second space 1207a, thereby facilitating the deployment of larger volume storage box assemblies 1205 in the first space 1206a and/or the second space 1207a, and thus increasing the storage capacity of the storage box assemblies 1205.

As an embodiment, the storage box assembly 1205 includes an upper box body 1205a and a lower box body 1205b, with the upper box body 1205a fixedly connected to the lower box body 1205b. Optionally, the upper box body 1205a defines a storage port 1205c. In this way, items can be retrieved from the storage box assembly 1205 through the storage port 1205c. More optionally, both the upper box body 1205a and the lower box body 1205b are at least partially positioned within the first space 1206a and/or the second space 1207a. When viewed from the height direction of frame 11, the storage port 1205c does not overlap with the first space 1206a, and the storage port 1205c does not overlap with the second space 1207a, which can avoid interference from the left cover 1206 at the first space 1206a and the right cover 1207 at the second space 1207a when retrieving items from the storage port 1205c, thereby improving the convenience of using the storage box assembly 1205.

In addition, the storage box assembly 1205 is split into an upper box body 1205a and a lower box body 1205b, so that the storage space inside the upper box body 1205a and the lower box body 1205b can be processed separately, thereby avoiding the inability to process large volume storage space inside the storage box assembly 1205 due to the integrated structure of the storage box assembly 1205. Through the above, it is possible to simplify the processing technology of the interior space of the storage box assembly 1205, while also increasing the volume of the interior space of the storage box assembly 1205.

As shown in FIG. 21, the lower box body 1205b defines a first through hole 1205d and a second through hole 1205e, both the first through hole 1205d and the second through hole 1205e are positioned at the front of the lower box body 1205b. The first through hole 1205d is used to fix the cigarette lighter, and the second through hole 1205e is used to fix the USB connector.

As shown in FIG. 21 and FIG. 22, the storage box assembly 1205 includes a storage cover 1205f rotatably connected to the upper box body 1205a. The storage cover 1205f is configured to cover the storage port 1205c. In this way, the storage cover 1205f can cover the storage port 1205c, which can prevent items inside the storage box assembly 1205 from scattering from the storage port 1205c during the driving of the all-terrain vehicle 100, thereby improving the storage security of the storage box assembly 1205.

Optionally, one side of the storage cover 1205f has a pivot shaft 1205g and an extension portion 1205h. The extension portion 1205h is substantially in a U-shaped, and the pivot shaft 1205g is positioned at one end of the extension portion 1205h away from the storage cover 1205f. The pivot shaft 1205g is rotatably connected to the upper box body 1205a. In this way, the opening and closing of the storage cover 1205f can be achieved by the pivot shaft 1205g. In addition, the U-shaped extension portion 1205h can prevent interference between the extension portion 1205h and other components during the rotation of the storage cover 1205f, so that the storage cover 1205f can be opened and closed normally.

More optionally, the storage cover 1205f has a cover connection portion 1205i on the side away from the extension portion 1205h, and the lower box body 1205b at least partially extends upwards to define a fixed protrusion 1205j. The fixed protrusion 1205j is positioned at the rear of the lower box body 1205b, and the cover connection portion 1205i can pass through the fixed protrusion 1205j and be engaged with the fixed protrusion 1205j, which can facilitate the opening and closing between the storage cover 1205f and the upper box body 1205a, thereby improving the convenience of using the storage box assembly 1205.

As an optional embodiment, a limiting portion 1205k is provided on the extension portion 1205h, which is configured to limit the rotation angle of the storage cover 1205f relative to the upper box body 1205a, thereby avoiding interference between the storage cover 1205f and other components on the all-terrain vehicle 100 due to excessive rotation angle of the storage cover 1205f.

Optionally, when the storage cover 1205f covers the storage port 1205c, the two sides of the storage cover 1205f along the width direction of the frame 11 can respectively adhere to the left cover 1206 and the right cover 1207 (refer to FIG. 20). This arrangement can improve the flatness of the storage cover 1205f, the left cover 1206, and the right cover 1207, thereby enhancing the driving comfort of the frame 11. In addition, which can help reduce the wind resistance at the storage cover 1205f, thereby reducing the wind resistance of the all-terrain vehicle 100 and thus reducing the energy consumption of the all-terrain vehicle 100.

As shown in FIG. 21, the storage box assembly 1205 is at least partially positioned within the first space 1206a. The all-terrain vehicle 100 further includes a shift assembly 18, which is at least partially positioned within the second space 1207a and connected to the right side cover 1207. This can avoid interference between the storage box assembly 1205 and the shift assembly 18, and helps improve the space utilization of the first space 1206a and the second space 1207a, thereby improving the structural compactness inside the first space 1206a and the second space 1207a. Optionally, the shift assembly 18 may be an electronic shifter 181. The electronic shifter 181 can improve the shifting response speed, thereby enhancing the handling performance of the all-terrain vehicle 100.

As an optional embodiment, the shift assembly 18 is clamped with the right cover 1207 and fixedly connected through fasteners. This can improve the installation stability of the shift assembly 18 in the second space 1207a. The shift assembly 18 is fixedly connected to the storage box assembly 1205. This can further improve the installation stability of the shift assembly 18 in the second space 1207a.

Optionally, the side of the storage box assembly 1205 near the right cover 1207 at least partially extends upward to define a mounting boss 1205m, which is fixedly connected to the mounting boss 1205m through a fastener threaded through the shift assembly 18. In some embodiments, the upper box body 1205a at least partially extends upward at the side near the right cover 1207 to defines a mounting boss 1205m.| The mounting boss 1205m is a screw boss, and the fastener may be a screw. In this way, the screw is screwed through the shift assembly 18 and connected to the screw boss, thereby achieving a fixed connection between the shift assembly 18 and the upper housing 1205a, in order to improve the stability of the connection between the shift assembly 18 and the upper housing 1205a.

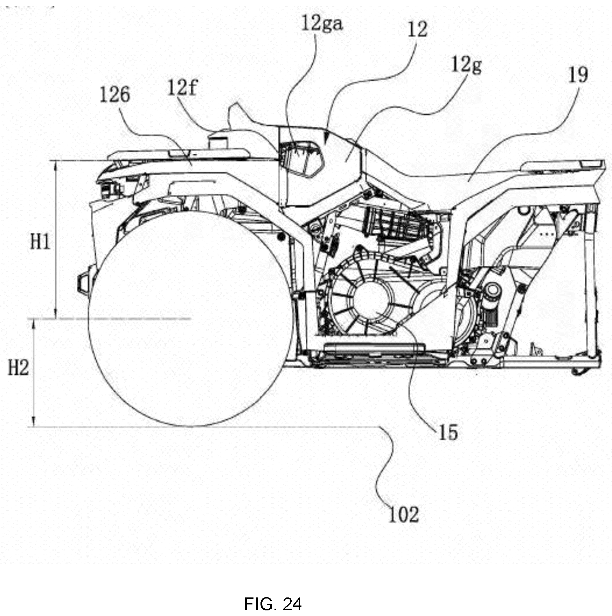

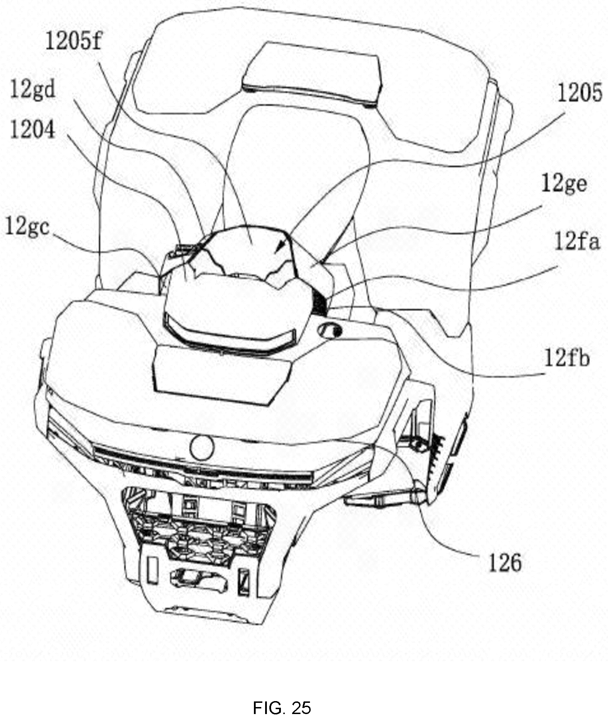

As shown in FIG. 24, FIG. 25, and FIG. 29, the vehicle body cover 12 further includes a heat dissipation grille 12f and a side cover 12g. The side cover 12g is supported by the frame 11 and serves as an exterior component of the all-terrain vehicle 100 to protect the internal components of the all-terrain vehicle 100. Optionally, the side covers 12g are at least partially positioned between the front mudguard 126 and the seat assembly 19 along the length direction of the frame 11. The heat dissipation grille 12f is mounted at the front end of the side covers 12g, and the side covers 12g at least partially define an intake channel 12ga. The heat dissipation grille 12f is in fluid communication with the intake channel 12ga. The intake channel 12ga has at least one air inlet (not shown) and one air outlet (not shown), with the air inlet facing the heat dissipation grille 12f and the air outlet facing the prime power assembly 15. When viewed along the length direction of frame 11, the heat dissipation grille 12f can at least partially be observed. The outermost side of the intake duct 12ga is positioned further closer to the longitudinal center plane 10s than the outermost side of the left or right steering handlebar 2013 or 2014, such that during the operation of the all-terrain vehicle 100, air can enter the intake duct 12ga through the heat dissipation grille 12f and flow towards the prime power assembly 15 through the air outlet, which improves the heat dissipation effect of the prime power assembly 15 and enabling it to work stably. Secondly, by dissipating heat from the prime power assembly 15, it can help reduce the overall temperature of the all-terrain vehicle 100, thereby improving the perceived temperature of the driver and passengers, and ultimately enhancing their comfort. In addition, through the above, it is beneficial to avoid damage to the prime power assembly 15 caused by excessive temperature, thereby improving the service life of the prime power assembly 15.

More optionally, the heat dissipation grille 12f is at least partially positioned above the upper surface of the front mudguard 126, so that the front mudguard 126 does not obstruct the intake of the heat dissipation grille 12f, thereby improving the heat dissipation effect of the prime power assembly 15.

In some embodiments, the minimum distance between the heat dissipation grille 12f and the front wheel 131 axis along the height direction of the all-terrain vehicle 100 is defined as a first height H1. The minimum distance between the front wheel 131 axis and the reference plane 102 along the height direction of the frame 11 is defined as a second height H2. A ratio of the first height H1 to the front wheel axis height H2 is in the range from 1.5 to 2.4. Optionally, the ratio of the first height H1 to the second height H2 is in the range from 1.7 to 2.2. More optionally, the ratio of the first distance H1 to the second height H2 is 1.95. Through the above, it is possible to avoid the front mudguard 126 blocking the heat dissipation grille 12f due to the first height H1 being too small, thereby improving the intake efficiency of the heat dissipation grille 12f. It can further prevent the first height H1 from being too small and causing the heat dissipation grille 12f to be positioned below the front mudguard 126, thereby avoiding the front wheels 131 below the front mudguard 126 from splashing mud and other impurities into the heat dissipation grille 12f, in order to prevent impurities from hitting the prime power assembly 15 and causing damage to the prime power assembly 15, thereby improving the heat dissipation effect of the prime power assembly 15 and increasing its service life. In addition, the above arrangement can also avoid increasing the volume of the frame 11 in the height direction due to the first height H1 being too high, thereby improving the structural compactness of the all-terrain vehicle 100. At the same time, it can also avoid interference between the heat dissipation grille 12f and the steering assembly 20 caused by the first height H1 being too high, in order to improve the working stability of the heat dissipation grille 12f and the steering assembly 20.

As an embodiment, the prime power assembly 15 is at least partially positioned below the seat assembly 19, and the air outlet is at least partially positioned below the intake channel 12ga, so that the air outlet can face the prime power assembly 15. The seat assembly 19 is connected to the side cover 12g, and the seat assembly 19 is configured to seal the rear of the intake channel 12ga, so that the air inside the intake channel 12ga is transported from the air outlet below the intake channel 12ga to the prime power assembly 15. This can prevent gas leakage from the rear of the intake channel 12ga, thereby improving the sealing of the intake channel 12ga and enhancing the heat dissipation effect on the prime power assembly 15. In addition, by sealing the intake channel 12ga by means of the seat assembly 19, there is no need to add additional components to seal the intake channel 12ga, which helps simplify the structure of the intake channel 12ga and reduce the production cost of the all-terrain vehicle 100.

As an embodiment, the side cover 12g defines a mounting hole 12gc defined at the front end of the side cover 12g. The heat dissipation grille 12f is at least partially positioned inside the mounting hole 12gc and fixedly connected to the side cover 12g. In this way, the mounting hole 12gc faces towards the front, which facilitates air to enter the intake channel 12ga through the mounting hole 12gc during the driving of the all-terrain vehicle 100, thereby improving the heat dissipation effect on the prime power assembly 15. In some embodiments, the heat dissipation grille 12f is connected to the side cover 12g by screws, which helps improve the stability of the connection between the heat dissipation grille 12f and the side cover 12g.

As an embodiment, the side cover 12g includes a left cover 12gd and a right cover 12ge, both of which are supported by the frame 11 and distributed along the width direction of the frame 11. Optionally, the heat dissipation grille 12f is mounted at the front of the left cover 12gd and/or the right cover 12ge. The left cover 12gd defines a first space, and the right cover 12ge defines a second space. The intake channel 12ga is positioned at least partially in the first space and/or the second space. The heat dissipation grille 12f is in fluid communication with the first space and/or the second space. In this way, the intake channel 12ga can be flexibly adjusted in layout position according to assembly requirements, thereby avoiding interference of the intake channel 12ga with the assembly of other components. When the intake channel 12ga is positioned in the first or second space, it can avoid insufficient air intake caused by one-sided intake of the intake channel 12ga, which helps increase the intake volume of the intake channel 12ga and thus improving the heat dissipation effect on the prime power assembly 15. Through the above, the layout position of the intake channel 12ga can be flexibly adjusted according to assembly requirements and the heat dissipation requirements of the prime power assembly 15, which helps improve the assembly flexibility of the intake channel 12ga.

As an optional embodiment, the heat dissipation grille 12f is disposed with a plurality of heat dissipation baffles 12fa, and heat dissipation holes 12fb are defined between adjacent heat dissipation baffles 12fa. In this way, the heat dissipation baffle 12fa can prevent flying stones and gravel from entering the intake channel 12ga through the mounting hole 12gc, thereby avoiding damage to the prime power assembly 15 caused by flying stones and gravel, and thus improving the protection of internal components of the all-terrain vehicle 100.

In some embodiments, at least some of the heat dissipation holes 12fb are higher than the upper surface of the front mudguard 126. This can prevent the front mudguard 126 from obstructing air from entering the intake channel 12ga through the heat dissipation hole 12fb, thereby improving the intake efficiency of the heat dissipation hole 12fb.

As an embodiment, the vehicle body cover includes a dashboard mounting cover 1204, which is used to install the dashboard. The dashboard mounting cover 1204 is installed on the front mudguard 126, and the heat dissipation grille 12f is positioned on at least one side of the dashboard mounting cover 1204 along the width direction of the frame 11. This can prevent the dashboard mounting cover 1204 from obstructing air from entering the intake channel 12ga through the heat dissipation grille 12f, which helps improve the intake efficiency of the heat dissipation holes 12fb.

As an embodiment, the vehicle body cover further includes a storage box assembly 1205, which is used for storage and supported by the frame 11. Optionally, the storage box assembly 1205 is positioned at least partially within the first space and/or the second space. More optionally, the storage box assembly 1205 includes a storage cover 1205f, which can be attached to the left cover 12gd and the right cover 12ge on two sides along the width direction of the frame 11, so that the storage cover 1205f can seal above the intake channel 12ga. This can make the intake channel 12ga a substantially sealed space, thereby avoiding air leakage inside and outside the intake channel 12ga, so that air can be transported to the prime power assembly 15 after passing through the intake channel 12ga, which helps improve the heat dissipation efficiency of the prime power assembly 15.

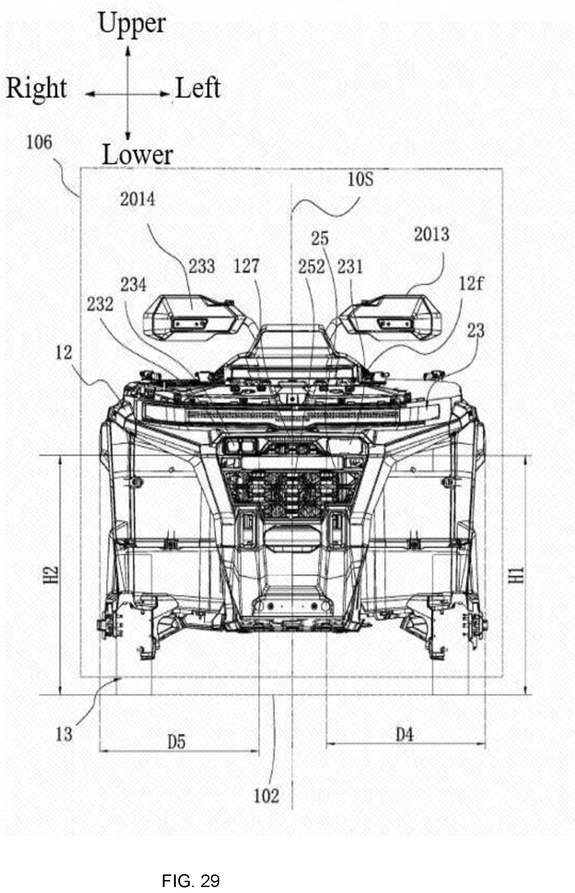

As shown in FIG. 26 and FIG. 29, the steering assembly 20 includes a steering handlebar 201 for controlling the steering of the all-terrain vehicle 100. The steering handlebar 201 includes a left steering handlebar 2013 and a right steering handlebar 2014, which are distributed along the width direction of the frame 11, thereby facilitating the driver's control of the steering handlebar 201.

The vehicle body cover 12 includes two mounting plates 12ja arranged below the front mudguard 126 and positioned on the left and right sides of the steering handlebar 201, respectively. Two mounting plates 12ja and the front mudguard 126 cooperatively define a left storage space and a right storage space having an opening facing towards the rear of the all-terrain vehicle 100. The left storage space and the right storage space are respectively positioned below the left steering handlebar 2013 and the right steering handlebar 2014 when viewed along the height direction of frame 11. The left storage space or the right storage space at least partially overlap with the left steering handlebar 2013 or the right steering handlebar 2014, respectively, providing storage functions for the driver and/or passengers. The positions of the left or right storage spaces helps the driver to storage items.

Optionally, the vehicle body cover 12 further includes two storage covers 12jb, which are respectively connected to the left and right storage spaces and can enclose the left and right storage spaces.

The upper end of storage cover 12jb is clamped with the mounting plate 12ja, and the lower end of storage cover 12jb is rotatably connected to the mounting plate 12ja.

As an embodiment, when the number of the mounting plate 12ja is one, the intake channel 12ga is at least partially positioned between the mounting plate 12ja and the longitudinal center plane 10s. When viewed along the height direction of frame 11, the mounting plate 12ja is at least partially positioned below left steering handlebar 2013 and/or right steering handlebar 2014, and at least partially overlaps with left steering handlebar 2013 and/or right steering handlebar 2014.

As an embodiment, the air channel 12ga is at least partially positioned between the two mounting plates 12ja, so that the intake channel 12ga does not interfere with the two mounting plates 12ja. This also prevents the air in the intake channel 12ga from leaking out from the two mounting plates 12ja, thereby improving the heat dissipation effect of the prime power assembly 15.

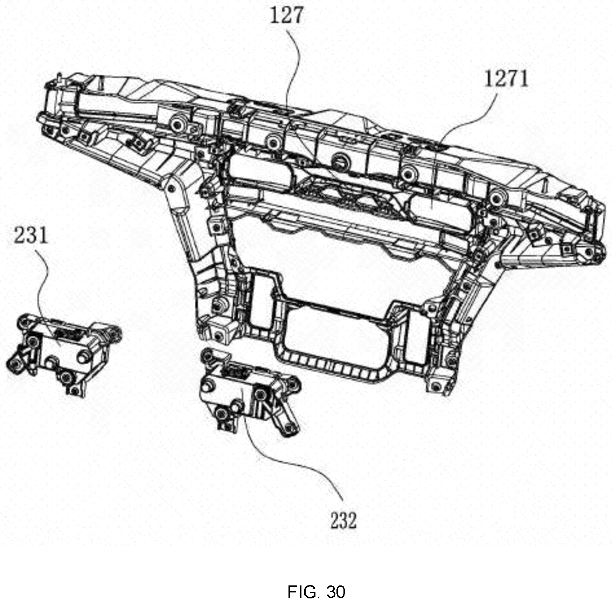

As shown in FIG. 29 and FIG. 30, the all-terrain vehicle 100 also includes a lamp system 23, which is used to provide illumination for the all-terrain vehicle 100. The lamp system 23 is supported by frame 11 and/or vehicle body cover 12, and includes a left headlamp 231 and a right headlamp 232.

A minimum distance between the leftmost end of the vehicle body cover 12 and the rightmost end of the left headlamp 231 in the width direction of the frame is defined as a first distance D4, and a minimum distance between the rightmost end of the vehicle body cover 12 and the leftmost end of the right headlamp 232 in the width direction of the frame is defined as a second distance D5, and both the first distance D4 and the second distance D5 are in the range from 350 mm to 400 mm, Optionally, the first distance D4 and the second distance D5 are in the range from 360 mm to 380 mm. More optionally, the first distance D4 and the second distance D5 are 370 mm. Through the above, the width of the left and right headlamps 231 and 232 mounted on the vehicle body cover 12 can be reduced, thereby making the structure of the all-terrain vehicle 100 more compact. At the same time, in order to meet the illumination requirements of all-terrain vehicles, the first distance D4 and the second distance D5 should not be too large, so as to avoid the illumination range of the left headlamp 231 and the right headlamp 232 being too small, thereby improving the driving safety of all-terrain vehicle 100. Therefore, through the above, the driving safety of the all-terrain vehicle 100 is higher and the structure is more compact while meeting the lighting requirements.

As an embodiment, the minimum distance between the left headlamp 231 and the reference plane 102 along the height direction of the frame 11 is defined as a first height H1, and the minimum distance between the right headlamp 232 and the reference plane 102 along the height direction of the frame 11 is defined as a second height H2. Both the first height H1 and the second height H2 are in the range from 660 mm to 990 mm. Optionally, the first height H1 and the second height H2 are in the range from 744 mm to 910 mm. More optionally, the first height H1 and the second height H2 are in the range from 785 mm to 870 mm. At the same time, in order to meet the illumination requirements of all-terrain vehicles, the first height H1 and the second height H2 should not be too small, so as to avoid the illumination range of the left headlamp 231 and the right headlamp 232 being too small, thereby improving the driving safety of all-terrain vehicle 100. In addition, the first height H1 and the second height H2 should not be too large, otherwise they may illuminate the eyes of pedestrians or other vehicle drivers, thereby avoiding safety accidents such as collisions between pedestrians or other vehicles and the all-terrain vehicle 100, and improving the driving safety of the all-terrain vehicle 100.

As an embodiment, the vehicle body cover 12 includes an air intake grille 127 positioned in front of the frame 11, with the left headlamp 231 and the right headlamp 232 both positioned on the air intake grille 127. By positioning the left headlamp 231 and the right headlamp 232 on the air intake grille 127, the width of the front end of the all-terrain vehicle 100 is shortened, making the structure of the all-terrain vehicle 100 more compact. Meanwhile, the left and right headlamps 231 and 232 can be mounted using the intake grille 127, reducing the additional installation points for the left and right headlamps 231 and 232, thereby making the structure of the all-terrain vehicle 100 more compact.

Optionally, a transverse plane 106 is defined as a plane perpendicular to the length direction of the frame 11. Along the length direction of the frame 11, the normal projection of the intake grille 127 onto the transverse plane 106 is defined as a grille projection, the normal projection of the left headlamp 231 onto the transverse plane 106 is defined as a first lamp projection, and the normal projection of the right headlamp 232 onto the transverse plane 106 is the second lamp projection. Both the first lamp projection and the second lamp projection are positioned within the grille projection. The above arrangement further improve the compactness of the structure of the all-terrain vehicle 100.

More optionally, a ratio of the area of the grille projection to the area of the first lamp projection is in the range from 13 to 21; a ratio of the area of the grille projection to the area of the second lamp projection is in the range from 13 to 21. Optionally, a ratio of the area of the grille projection to the area of the first lamp projection is in the range from 15 to 19; a ratio of the area of the grille projection to the area of the second lamp projection is in the range from 15 to 19. More optionally, the ratio of the area of the grille projection to the area of the first lamp projection is 17; the ratio of the area of the grille projection to the area of the second lamp projection is 17. Through the above, this arrangement avoids impairment to the air intake performance of the air intake grille 127 resulting from the excessively large dimensions of the left lamp and right lamp. The above arrangement avoids the situation where the lighting performance provided by the left headlamp 231 and the right headlamp 232 fails to meet the usage requirements of the all-terrain vehicle 100 resulting from excessively small dimensions the left headlamp 231 and the right headlamp 232.

More optionally, the intake grille 127 defines a plurality of mounting holes 1271 positioned at the rear of the intake grille 127. Both the left headlamp 231 and the right headlamp 232 are equipped with mounting portions. The left headlamp 231 and the right headlamp 232 are at least partially threaded through the intake grille 127, and the mounting portions are connected to the mounting holes 1271 by fasteners. The fasteners may be bolts, etc. Through the above, it is convenient to mount the left and right headlamps 231 and 232 on the air intake grille 127, and to make the volume of the left and right headlamps 231 and 232 smaller, which helps the miniaturization and lightweight of the left and right headlamps 231 and 232, and at the same time makes the structure of the all-terrain vehicle 100 more compact.

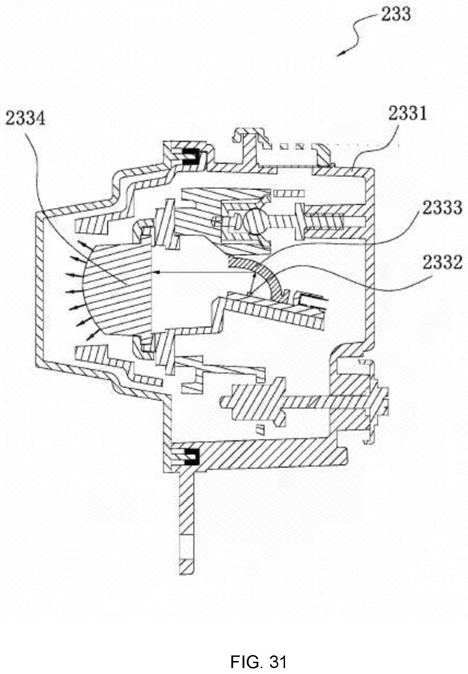

As shown in FIG. 29 and FIG. 31, the left headlamp 231 includes a low beam 233 and a high beam 234, with the low beam 233 being further away from the right headlamp 232 than the high beam 234.

The low beam 233 includes a lamp mounting bracket 2331, a light source 2332, a reflector bowl 2333, and a lens 2334. The light source 2332 is mounted on the lamp mounting bracket 2331, and the light source 2332 is capable of emitting light upwards. The reflector bowl 2333 is at least partially positioned above the light source 2332 and mounted on the lamp mounting bracket 2331. The opening of the reflector bowl 2333 is at least partially facing the light source 2332. The reflector bowl 2333 is capable of reflecting the light emitted by the light source 2332 to the front. The lens 2334 is at least partially positioned in front of the reflector bowl 2333, and is capable of transmitting the light reflected by the reflector bowl 2333 to the outside of the low beam lamp 233. Through the above, the volume of the left headlamp 231 and the right headlamp 232 can be reduced while meeting the lighting requirements, which helps improve the compactness of the lamp system 23.

The direction of the arrow in FIG. 31 represents the direction of light irradiation. The light source 2332 emits light upwards, and then the reflector bowl 2333 reflects the light emitted by the light source 2332 to the front. Finally, the lens 2334 transmits the light reflected by the reflector bowl 2333 to the outside of the low beam 233, to achieve illumination in front of the all-terrain vehicle 100.

It should be noted that the structure of high beam 234 is substantially the same as that of low beam 233. The curvature of lens 2334 of the high beam 234 is different from that of lens 2334 of low beam 233, thereby resulting in a different illumination distance between high beam 234 and low beam 233: high beam 234 has a longer illumination distance relative to low beam 233.

It should be noted that the structure of the right headlamp 232 is substantially the same as that of the left headlamp 231, so that when the low beam 233 or high beam 234 of the left headlamp 231 and the right headlamp 232 are turned on simultaneously, the illumination range of the all-terrain vehicle 100 is substantially symmetrical.

Optionally, the width of the low beam 233 along the width direction of the frame 11 is in the range from 30 mm to 40 mm, and the height of the low beam 233 along the height direction of the frame 11 is in the range from 20 mm to 30 mm; the width of the high beam 234 along the width direction of the frame 11 is in the range from 30 mm to 40 mm, and the height of the high beam 234 along the height direction of the frame 11 is in the range from 20 mm to 30 mm. Optionally, the width of the low beam 233 along the width direction of the frame 11 is 35 mm, and the height range of the low beam 233 along the height direction of the frame 11 is 25 mm; the width of the high beam 234 along the width direction of the frame 11 is 35 mm, and the height of the high beam 234 along the height direction of the frame 11 is 25 mm. Through the above, this makes the volume of the left and right headlamps 231 and 232 smaller, which helps the miniaturization and lightweight of the left and right headlamps 231 and 232, and at the same time makes the structure of the all-terrain vehicle 100 more compact.

As an embodiment, the all-terrain vehicle 100 further includes a radiator assembly 25 supported by the frame 11 and used to dissipate heat for the prime power assembly 15 and other components. The radiator assembly 25 includes a radiator 201, which is used to dissipate heat for the prime power assembly 15 of the all-terrain vehicle 100. The radiator 201 is supported by the frame 11 and is at least partially positioned at the front of the frame 11. The left headlamp 231 and the right headlamp 232 are both at least partially positioned in front of the radiator 201. A transverse plane 106 is defined as a plane perpendicular to the length direction of the frame 11. A normal projection of the left headlamp onto the transverse plane is defined as a headlamp projection, and the area of a normal projection of the right headlamp onto the transverse plane is substantially the same as the area of the headlamp projection. A normal projection of the radiator 201 onto the transverse plane is defined as a radiator projection, a ratio of the area of the headlamp projection to the area of the radiator projection is in the range from 0.02 to 0.2. The mounting structure of the left headlamp 231 and the right headlamp 232 relative to the radiator 201 can be more compact by virtue of the arrangement of the headlamp projections overlapping with the radiator projection. At the same time, the above arrangement can prevent the ratio of the projected area of the headlamps to the projected area of the radiator from being too large, so that the left headlamp 231 and the right headlamp 232 will not greatly affect the air intake of the radiator 201. Therefore, through the above, the all-terrain vehicle 100 can mount the left headlamp 231 and the right headlamp 232 without affecting the heat dissipation effect of the radiator 201, saving layout space and making the structure of the all-terrain vehicle 100 more compact.

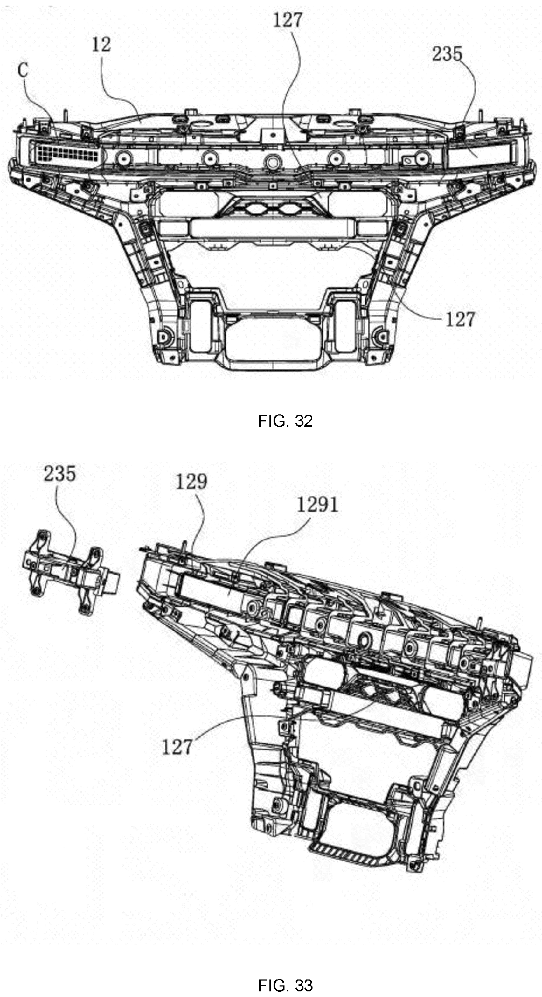

As shown in FIG. 32 and FIG. 33, the lamp system 23 includes a position turn signal 235. The position turn signal 235 can provide position signal indication for the all-terrain vehicle 100. The position signal indication is that when the position turn signal 235 is turned on, it can indicate the presence and width of the all-terrain vehicle 100. The position turn signal 235 can further provide turn signal indication for the all-terrain vehicle 100. The turn signal indication is that the position turn signal 235 is turned on when the all-terrain vehicle 100 turns, to remind vehicles and pedestrians to pay attention.

Optionally, the vehicle body cover 12 includes a lamp mounting member 129 supported by the frame 11. The lamp mounting member 129 is at least partially recessed to define a lamp mounting hole 1291, and the position turn signal 235 is housed within the lamp mounting hole 1291. The position turn signal 235 is fixedly connected to the lamp mounting member 129. The position turn signal 235 is housed within the lamp mounting hole 1291, which can protect the position turn signal 235 from direct collision of debris and other objects, thereby improving the service life of the position turn signal 235.

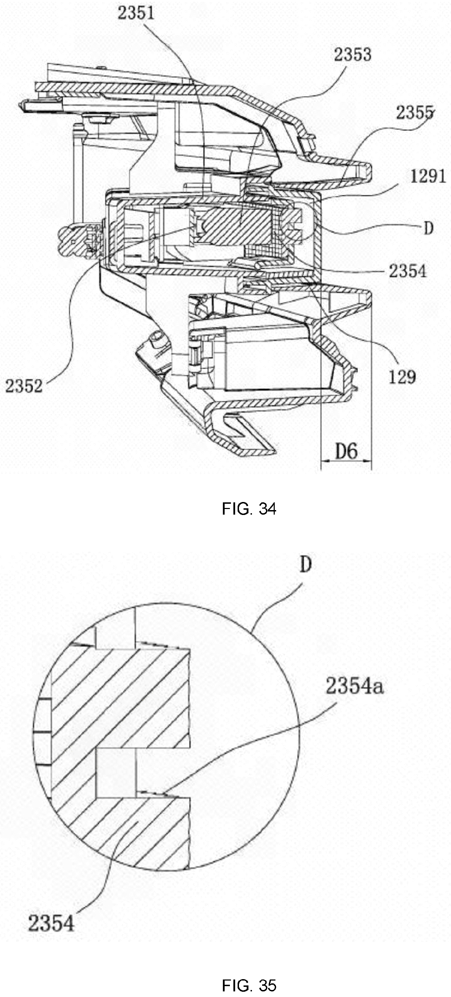

As shown in FIG. 34 and FIG. 35, in some embodiments, a minimum distance D6 between the position turn signal 235 and the opening of the lamp mounting hole 1291 along the length direction of the frame 11 is in the range from 5 mm to 22 mm. Optionally, the minimum distance D6 between the position turn signal 235 and the opening of the lamp mounting hole 1291 along the length direction of the frame 11 is in the range from 10 mm to 17 mm. More optionally, the minimum distance D6 between the position turn signal 235 and the opening of the lamp mounting hole 1291 along the length direction of the frame 11 is 13 mm. Through the above, it is possible to avoid the minimum distance D6 between the position turn signal 235 and the opening of the lamp mounting hole 1291 along the length direction of the frame 11 being too large, thereby avoiding the light emitted by the position turn signal 235 from being blocked by the lamp mounting member 129, which may lead to a deterioration of the signal indication effect of the position turn signal 235 and reduce the driving safety of the all-terrain vehicle 100. At the same time, it can also avoid the minimum distance D6 between the position turn signal 235 and the opening of the lamp mounting hole 1291 along the length direction of the frame 11 being too small, thereby avoiding direct collision of gravel and other debris with the position turn signal 235 and causing damage to it, thereby improving the service life of the position turn signal 235. By arranging the minimum distance D6 between the position turn signal 235 and the opening of the lamp mounting hole 1291 along the length direction of the frame 11 to the above range, it can protect the position turn signal 235 without affecting the emission of light from the position turn signal 235.

Optionally, the position turn signal 235 includes a turn signal mounting bracket 2351, a light bead 2352, a thick-wall member 2353, and a square lens 2354. The lamp bead 2352 is mounted on turn signal mounting bracket 2351, and thick-wall member 2353 is mounted on turn signal mounting bracket 2351 and positioned in front of lamp bead 2352. The square lens 2354 is positioned in front of the thick-wall member 2353. The square lens 2354 is at least partially inserted into and fixed to the turn signal mounting bracket 2351. The square lens 2354 can transmit the light from the lamp bead 2352 through the thick-wall member 2353 to the outside of the turn signal 235. Optionally, the square lens 2354 is clamped with and fixed to the turn signal mounting bracket 2351. It should be noted that the present application does not limit the fixing method of the square lens 2354 and the turn signal mounting bracket 2351. The lamp bead 2352 emits light forward, and then the thick-wall member 2353 guides the light to the square lens 2354. Finally, the square lens 2354 transmits the light emitted by the thick-wall member 2353 to the outside of position turn signal 235, to achieve the indication function of the position signal and turn signal of position turn signal 235. By the above-mentioned structure of the position turn signal 235, the volume of the position turn signal 235 can be reduced to improve the compactness of the structure of the all-terrain vehicle 100, and the overall weight of the all-terrain vehicle 100 can be reduced, which helps reduce the cost of the all-terrain vehicle 100.

It should be noted that the lamp bead 2352 adopts a dual color lamp bead 2352, so that the position turn signal 235 can respectively achieve the function of position signal indication and turn signal indication.

As an embodiment, the square lens 2354 has a tooth shaped structure on the side away from the thick wall member 2353. The tooth shaped structure 2354a can refract the light from the lamp bead 2352 passing through the thick wall member 2353 to the outside of the position turn signal 235, so as to distribute the light according to the needs of the position turn signal 235 and improve the luminous effect of the position turn signal 235, thereby improving the driving safety of the all-terrain vehicle 100.

As an embodiment, the position turn signal 235 further includes a lampshade 2355 at least partially covers the front of the square lens 2354 and is connected to the turn signal mounting bracket 2351. The lampshade 2355 serves to protect the internal structure of the turn signal mounting bracket 2351, the lamp beads 2352, the thick-wall members 2353, and square lens 2354 of the position turn signal 235, thereby avoiding damage to the position turn signal 235 and improving its service life.

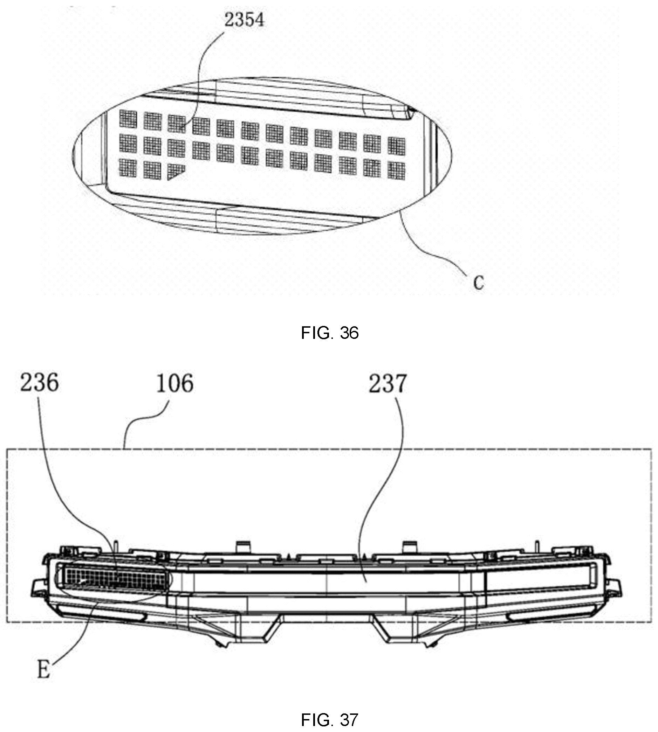

As shown in FIG. 36, a plurality of square lenses 2354 are arranged in a matrix, which makes the structure of the plurality of square lenses 2354 more compact and helps to improve the space utilization of the position turn signal 235.

Optionally, a plurality of LED beads 2352 are mounted. In some embodiments, each light bead 2352 corresponds to the plurality of square lenses 2354 to reduce the cost of position turn signals 235. In another embodiments, each light bead 2352 corresponds to one square lens 2354, which can improve the illumination effect of the position turn signal 235 and thereby enhance the driving safety of the all-terrain vehicle 100. It should be noted that one or several light beads 2352 can be individually controlled to emit light, so that the position turn signal 235 can have a flowing light effect, thereby improving the recognition of the position turn signal 235 and enhancing the driving safety of the all-terrain vehicle 100.

Optionally, the height of the square lens 2354 along the height direction of the frame 11 is in the range from 5 mm to 6 mm. The width of the square lens 2354 along the width direction of the frame 11 is in the range from 5 mm to 6 mm. By the above-mentioned structure, the volume of the position turn signal 235 can be reduced to improve the compactness of the structure of the all-terrain vehicle 100, and the overall weight of the all-terrain vehicle 100 can be reduced, which helps reduce the cost of the all-terrain vehicle 100.

Optionally, the all-terrain vehicle 100 includes two position turn signals 235 and two lamp mounting holes 1291. The two lamp mounting holes 1291 are aligned along the width direction of the frame 11 on the lamp mounting members 129, and each position turn signal 235 is housed within one of the two lamp mounting holes 1291.

As shown in FIG. 32 and FIG. 33, the air intake grille 127 is integrated with the lamp mounting member 129 to facilitate the production and manufacturing of the vehicle body cover 12 of the all-terrain vehicle 100, which helps to reduce the cost of the all-terrain vehicle 100.

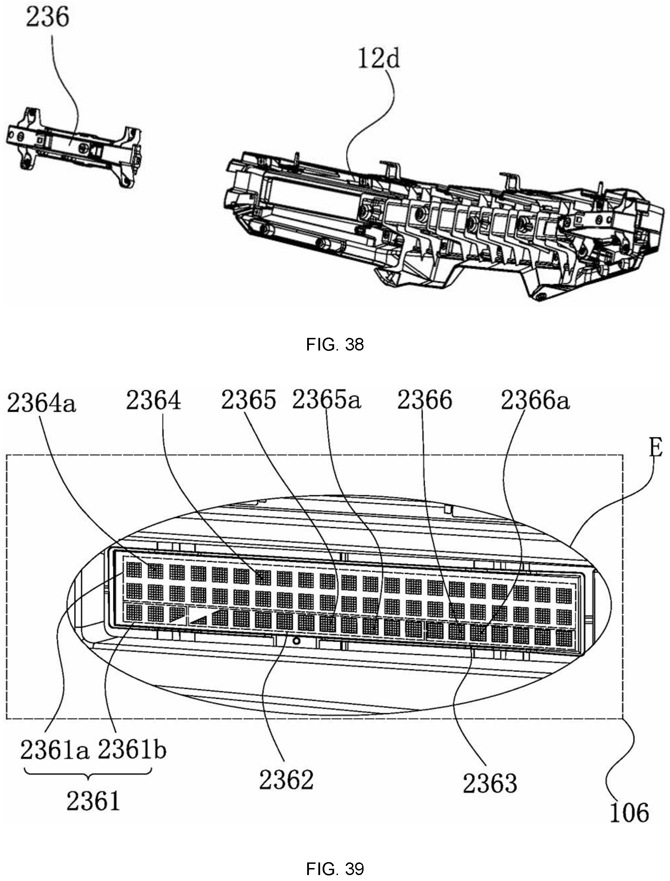

As shown in FIG. 37 and FIG. 38, the lamp system 23 further includes a rear tail lamp 236 positioned at the rear the frame 11. The vehicle body cover 12 further includes a tail lamp mounting bracket 12d positioned at the rear of the frame 11, and the rear tail lamp 236 is mounted on the tail lamp mounting bracket 12d. The rear tail lamp 236 is used to achieve several following signal indication functions of all-terrain vehicle 100: turn signal indication, position signal indication, brake signal indication, and reverse signal indication. The definitions of turn signal indication and position signal indication are the same as mentioned above. The brake signal indication is that when the driver steps on the brake pedal, the rear tail lamp 236 will light up to warn the vehicles behind that they need to slow down or maintain a safe distance. The reverse signal indicates that when the all-terrain vehicle 100 shifts into reverse gear, the rear tail lamp 236 will light up to alert other vehicles and pedestrians.

As shown in FIG. 39, the rear tail lamp 236 has a first mounting area 2361, a second mounting area 2362, and a third mounting area 2363. The first mounting area 2361 is at least partially positioned above the second mounting area 2362 and the third mounting area 2363. The second mounting area 2362 and the third mounting area 2363 are distributed along the width direction of the frame 11. The rear tail lamp 236 includes a first lamp module 2364, a second lamp module 2365, and a third lamp module 2366. The first lighting module 2364 is positioned within the first mounting area 2361, the second lighting module 2365 is positioned within the second mounting area 2362, and the third lighting module 2366 is positioned within the third mounting area 2363.

A transverse plane 106 is defined as a plane perpendicular to the length direction of the frame 11. The normal projection of the first mounting area 2361 onto the transverse plane 106 is defined as a first projection. The normal projection of the second mounting area 2362 onto the transverse plane 106 is defined as a second projection. The normal projection of the third mounting area 2363 onto the transverse plane 106 is defined as a third projection. A ratio of the area of the first projection to the area of the second projection is in the range from 2.1 to 3.2, and a ratio of the area of the first projection to the area of the third projection is in the range from 2.4 to 3.6. Optionally, the ratio of the area of the first projection to the area of the second projection is in the range from 2.3 to 3, and the ratio of the area of the first projection to the area of the third projection is in the range from 2.7 to 3.3. More optionally, the ratio of the area of the first projection to the area of the second projection is 2.7, and the ratio of the area of the first projection to the area of the third projection is 3.

Through the above, it is possible to avoid the ratio of the area of the first projection to the area of the second projection being too small, thereby avoiding the decrease in the recognition of the first lighting module 2364 caused by the area of the first lighting module 2364 being too small, which increases the danger of driving the all-terrain vehicle 100. It also is possible to avoid the ratio of the area of the first projection to the area of the second projection being too large, thereby avoiding the decrease in the recognition of the second lighting module 2365 caused by the area of the second lighting module 2365 being too small, which increases the danger of driving the all-terrain vehicle 100.

At the same time, it is possible to avoid the ratio of the area of the first projection to the area of the third projection being too small, thereby avoiding the decrease in the recognition of the first lighting module 2364 caused by the area of the first lighting module 2364 being too small, which increases the danger of driving the all-terrain vehicle 100. It also is possible to avoid the ratio of the area of the first projection to the area of the third projection being too large, thereby avoiding the decrease in the recognition of the third lighting module 2366 caused by the area of the third lighting module 2366 being too small, which increases the danger of driving the all-terrain vehicle 100.

Therefore, by setting the ratio of the area of the first projection of the first mounting area 2361 to the area of the second projection of the second mounting area 2362, and the ratio of the area of the first projection of the first mounting area 2361 to the area of the third projection of the third mounting area 2363 within the aforementioned ranges in this application, it is possible to ensure that the first lamp module 2364 within the first mounting area 2361, the second lamp module 2365 within the second mounting area 2362, and the third lamp module 2366 within the third mounting area 2363 all have good visibility, thereby enhancing the driving safety of the all-terrain vehicle 100.

Optionally, the first mounting area 2361 includes an upper mounting area 2361a and a lower mounting area 2361b. The upper mounting area 2361a is positioned above the lower mounting area 2361b, the second mounting area 2362, and the third mounting area 2363, while the lower mounting area 2361b is positioned on the side of the second mounting area 2362 away from the third mounting area 2363 along the width direction of the frame 11. More optionally, the first lighting module 2364 is at least one of a position light and a brake light, the second lighting module 2365 is a turn signal, and the third lighting module 2366 is a reverse light. The position light is used to indicate the position signal of the rear tail lamp 236, the brake light is used to indicate the brake signal of the rear tail lamp 236, the turn signal is used to indicate the turn signal of the rear tail lamp 236, and the reverse light is used to indicate the reverse signal of the rear tail lamp 236. Through the above, the rear tail lamps 236 are partitioned and modularized to provide a plurality of signal indication functions.

It should be noted that since the all-terrain vehicle 100 is not driving on highways or city roads, the rear tail lamps 236 do not need to implement position signal indication or brake signal indication functions. Therefore, the first lighting module 2364 can only be a position light or a brake light. The first lighting module 2364 can also be both a position light and a brake light. When the first lighting module 2364 is both a position light and a brake light, it uses dual color light beads to enable the first lighting module 2364 to achieve position signal indication function and brake signal indication function respectively.

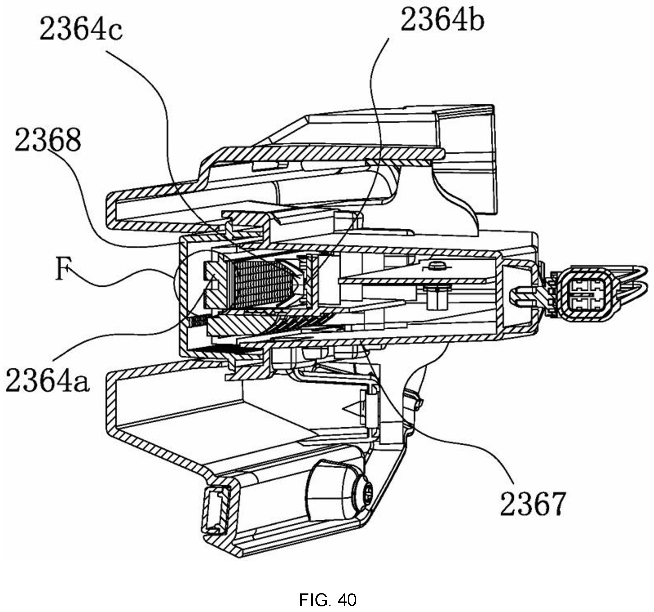

As shown in FIG. 39 and FIG. 40, the first lighting module 2364 includes a plurality of first square lenses 2364a arranged in a matrix in the first mounting area 2361. The second lighting module 2365 includes a plurality of second square lenses 2365a arranged along the width direction of the frame 11 in the second mounting area 2362. The third lighting module 2366 includes a plurality of third square lenses 2366a arranged along the width direction of the frame 11 in the third mounting area 2363. The plurality of first square lenses 2364a, the plurality of second square lenses 2365a, and the plurality of third square lenses 2366a are arranged in a matrix, making the structure of the plurality of first square lenses 2364a, the plurality of second square lenses 2365a, and the plurality of third square lenses 2366a more compact and conducive to improving the space utilization of the rear tail lamps 236.

As an embodiment method, the rear tail lamp 236 also includes a lamp mounting bracket 2367, and the first mounting area 2361, the second mounting area 2362, and the third mounting area 2363 are all positioned on the lamp mounting bracket 2367. The first lighting module 2364 also includes light beads 2364b and thick-wall members 2364c. The lamp bead 2364b is mounted on the lamp mounting bracket 2367, and the thick-wall member 2364c is mounted on the lamp mounting bracket 2367 and positioned in front of the lamp bead 2364b. The first square lens 2364a is positioned in front of the thick-wall member 2364c, and the first square lens 2364a at least partially penetrates the lamp mounting bracket 2367 and is fixed to the lamp mounting bracket 2367. The first square lens 2364a can transmit the light from the lamp bead 2364b through the thick-wall member 2364c to the outside of the first lamp module 2364. Optionally, the first square lens 2364a is clamped and fixed to the lamp mounting bracket 2367. It should be noted that the present disclosure does not limit the fixing method between the first square lens 2364a and the lamp mounting bracket 2367. The light bead 2364b emits light forward, and then the thick-wall member 2364c guides the light to the first square lens 2364a. Finally, the first square lens 2364a transmits the light emitted by the thick-wall member 2364c to the outside of the rear tail lamp 236, to achieve the indication function of the position signal and/or braking signal of the rear tail lamp 236. Through the above structure of the rear tail lamp 236, the volume of the rear tail lamp 236 can be reduced to improve the compactness of the structure of the all-terrain vehicle 100, and the overall weight of the all-terrain vehicle 100 can be reduced, which can reduce the cost of the all-terrain vehicle 100.

It should be noted that one or several light beads 2364b of the first lighting module 2364 can be individually controlled to emit light, so that the rear tail lamp 236 can have a flowing-shaped light effect, thereby improving the recognition of the rear tail lamp 236 and enhancing the driving safety of the all-terrain vehicle 100.

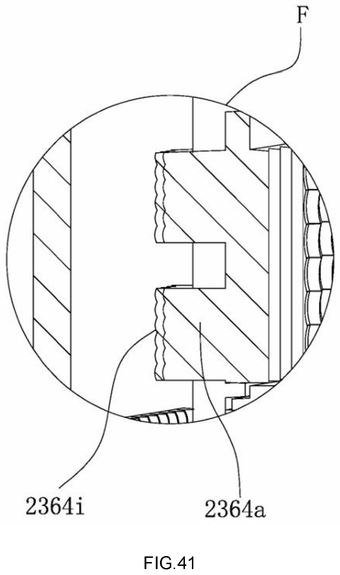

As shown in FIG. 40 and FIG. 41, a tooth shaped structure 2364i is provided on the side of the first square lens 2364a away from the thick-wall member 2364c. The tooth shaped structure 2364i can refract the light from the lamp bead 2364b passing through the thick-wall member 2364c to the outside of the first lamp module 2364, thereby enabling light distribution according to the requirements of the first lamp module 2364 and improving the luminous effect of the first lamp module 2364, thereby enhancing the driving safety of the all-terrain vehicle 100.

Optionally, a plurality of LED beads 2364b are mounted. In one embodiment, each lamp bead 2364b corresponds to a plurality of first square lenses 2364a, which can reduce the cost of the first lamp module 2364. In another embodiment, each light bead 2364b corresponds to one first square lens 2364a, which can improve the luminous effect of the first lighting module 2364, thereby enhancing the driving safety of the all-terrain vehicle 100.

It should be noted that the structure of the second lighting module 2365 is substantially the same as that of the first lighting module 2364, and the structure of the third lighting module 2366 is substantially the same as that of the first lighting module 2364.

As an embodiment, the rear tail lamp 236 also includes a lampshade 2368 at least partially covering the front of the first square lens 2364a, the second square lens 2365a, and the third square lens 2366a. The rear tail lamp 236 is connected to the lamp mounting bracket 2367. The lampshade 2368 serves to protect the internal structures of the first lamp module 2364, the second lamp module 2365, and the third lamp module 2366 of the rear tail lamp 236, thereby avoiding damage to the rear tail lamp 236 and improving its service life.

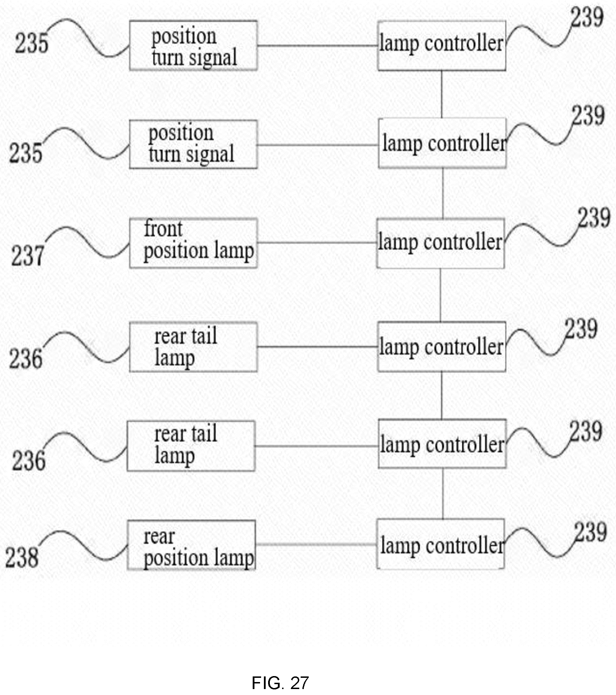

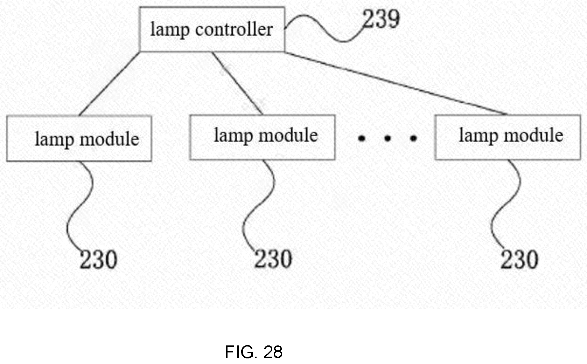

As shown in FIG. 27 and FIG. 28, the lamp system 23 further includes a plurality of lamp controllers 239 that can communicate with each other. Two position turn signals 235, two rear tail lamps 236, a front position lamp 237, and a rear position lamp 238 are all electrically connected to one lamp controller 239, so that each lamp can be independently controlled by one lamp controller 239. The plurality of lamp controllers 239 that communicate with each other can form associations between each lamp, thereby enabling the six lamps to achieve dynamic effects.

In some embodiments, each position turn signal 235 includes a plurality of lamp modules 230, and all lamp modules 230 are electrically connected to a lamp controller 239, so that the lamp controller 239 can control the plurality of lamp modules 230 separately, so that the plurality of lamp modules 230 can form linkage and achieve dynamic effects.

Each lighting module 230 includes at least one light bead 2352 and a plurality of square lenses 2354. The square lenses 2354 are configured to transmit the light from the light bead 2352 to the outside of the position turn signal 235. The structure of the rear tail lamp 236, the front position lamp 237, and the rear position lamp 238 are the same in principle as that of the position turn signal 235. The structure of the first square lens 2364a, the second square lens 2365a, and the third square lens 2366a of the rear tail lamp 236 are the same in principle as that of the square lens 2354, and the structure of the light beads 2364b of the rear tail lamp 236 are the same in principle as that of that of the light beads 2352.

It should be noted that the lamp controller 239 of the present disclosure can only achieve three lamp linkage of the two position turn signals 235 and the front position lamp 237, that is, dynamic effects can be achieved by controlling the two position turn signals 235 and the front position lamp 237 through the lamp controller 239. Alternatively, the lighting controller 239 of the present disclosure can only achieve three light linkage between the two rear tail lamps 236 and the rear position lamp 238, that is, dynamic effects can be achieved by controlling the two rear tail lamps 236 and the rear position lamp 238 through the lighting controller 239. The present disclosure does not limit the linkage method of the lighting fixtures.

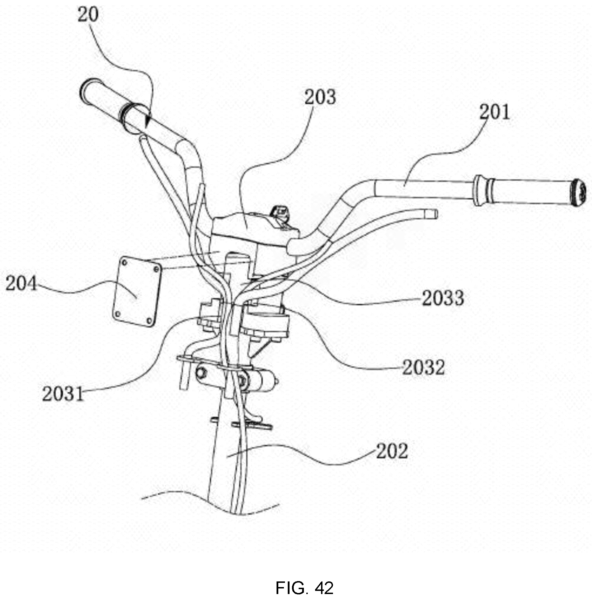

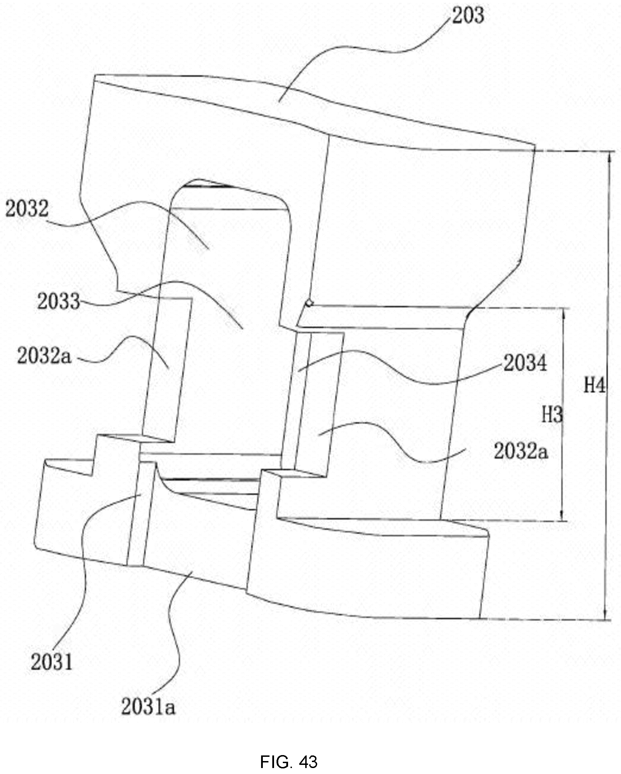

As shown in FIG. 42 and FIG. 43, the steering assembly 20 includes a steering handlebar 201, a steering tube 202, and a mount base 203. The mount base 203 includes a lower mounting wall 2031 defining a first channel 2031a extending along the height direction of the frame 11. The mount base 203 also includes left and right mounting walls 2032 and 2034 opposite to each other along the width direction of the frame 11. The left mounting wall 2032 and/or right mounting wall 2034 cooperatively define a second channel 2032a extending along the width direction of the frame 11. The first channel 2031a is in fluid communication with the second channel 2032a, and both the first channel 2031a and the second channel 2032a are configured to allow wiring harnesses and/or pipelines to pass through.

This arrangement can facilitate the layout of wiring harnesses and/or pipelines at the mounting base 203, thereby avoiding the need to install additional components for wiring and/or pipeline installation at the mounting base 203. This simplifies the structure at the mounting base 203 and reduces the overall cost of the all-terrain vehicle 100. Moreover, through the above, the compactness of the structure of the wiring harness and/or pipeline at the mount base 203 can also be improved, thereby avoiding the occurrence of scattered wiring harness and/or pipeline that may interfere with the driver's driving of the all-terrain vehicle 100, thereby improving the driving safety of the all-terrain vehicle 100. In addition, it can also prevent the wiring harness and/or pipeline from being scattered and causing wear and tear due to exposure, which is beneficial for improving the service life of the wiring harness and/or pipeline.

As an embodiment, both the left mounting wall 2032 and/or the right mounting wall 2034 define a second channel 2032a extending along the width direction of the frame 11, and the two second channels 2032a are in fluid communication with each other. This setting allows the wiring harness and/or pipelines arranged inside the mount base 203 to be routed from the two second channels 2032a to both sides of the steering handlebar 201 along the width direction of the frame 11, thereby improving the convenience of wiring harness and/or pipelines arranged in the mount base 203.

As shown in FIG. 43, the mount base 203 is surrounded by a mounting space 2033 for accommodating wire harnesses and/or pipelines, and the first channel 2031a and the second channel 2032a are at least partially positioned within the accommodation space 2033. In this way, during the assembly process of wiring harnesses and/or pipelines, the mounting space 2033 can provide accommodation space for excessively long wiring harnesses and/or pipelines, thereby avoiding the occurrence of wiring harnesses and/or pipelines being too long to be stored, resulting in scattered wiring harnesses and/or pipelines, and further improving the structural compactness and cleanliness of wiring harnesses and/or pipelines at the mount base 203.

In addition, the mount base 203 is at least partially recessed to define a mounting space 2033, it can be beneficial to reduce the weight of the mount base 203, thereby making the steering assembly 20 more lightweight and facilitating the driver to drive the steering assembly 20 to control the steering of the all-terrain vehicle 100.

In some embodiments, the steering assembly 20 further includes a protective plate 204 (refer to FIG. 42), which covers the mounting space 2033 and is fixedly connected to the mount base 203. The protective plate 204 can limit the wiring harness and/or pipeline within the mounting space 2033, thereby avoiding the occurrence of wiring harness and/or pipeline detachment from the mounting space 2033, and thus improving the stability of wiring harness and/or pipeline layout within the mount base 203.

In addition, the protective plate 204 can provide protection for the wiring harnesses and/or pipelines within the mounting space 2033. The protective plate 204 is positioned in front of the mounting space 2033 along the length direction of the frame 11, so that during the driving of the all-terrain vehicle 100, the protective plate 204 can cover the mounting space 2033 to avoid abrasion of the wiring harness and/or pipeline by flying stones and gravel, which can improve the service life of the wiring harness and/or pipeline.

As an embodiment, the second channel 2032a is configured to reduce the weight of the mount base 203. Optionally, a ratio of the height H3 of the second channel 2032a along the height direction of the frame 11 to the height H4 of the mount base 203 along the height direction of the frame 11 is in the range from 0.4 to 0.62. Optionally, a ratio of the height H3 of the second channel 2032a along the height direction of the frame 11 to the height H4 of the mount base 203 along the height direction of the frame 11 is in the range from 0.45 to 0.57. Optionally, a ratio of the height H3 of the second channel 2032a along the height direction of the frame 11 to the height H4 of the mount base 203 along the height direction of the frame 11 is 0.51. In this way, by increasing the height H3 of the second channel 2032a along the height direction of the frame 11, the weight of the mount base 203 can be further reduced, which is beneficial for the driver to operate the steering assembly 20. Secondly, it can prevent the height H3 of the second channel 2032a along the height direction of the frame 11 from being too large, which may cause the second channel 2032a to be too large and reduce the structural strength of the mount base 203. This is beneficial for reducing the overall weight of the mount base 203 while meeting the structural strength of the mount base 203. In addition, it can also prevent the height H3 of the second channel 2032a along the height direction of the frame 11 from being too small, which may cause the weight of the mount base 203 to be too heavy, thus facilitating the realization of lightweight steering assembly 20.

As shown in FIG. 43, as an embodiment, the mount base 203 defines a weight reducing hole 2034 that runs through the mount base 203 along the length direction of the frame 11. In this way, the weight of the mount base 203 can be further reduced through the weight reducing hole 2034, thereby further reducing the overall weight of the steering assembly 20 and achieving light-weighting of the steering assembly 20.

Optionally, the weight reduction hole 2034 is in fluid communication with the mounting space 2033. In this way, the weight reduction hole 2034 can expand the volume of the mounting space 2033, allowing the mounting space 2033 to accommodate more wiring harnesses and/or pipelines.

As an embodiment, the second channel 2032a can reduce the weight of the mount base 203. Optionally, the ratio of the height H3 of the second channel 2032a along the height direction of the frame 11 to the height H4 of the mount base 203 along the height direction of the entire frame 11 is in the range from 0.4 to 0.62. Optionally, a ratio of the height H3 of the second channel 2032a along the height direction of the frame 11 to the height H4 of the mount base 203 along the height direction of the frame 11 is in the range from 0.45 to 0.57. Optionally, a ratio of the height H3 of the second channel 2032a along the height direction of the frame 11 to the height H4 of the mount base 203 along the height direction of the frame 11 is 0.51. In this way, by increasing the height H3 of the second channel 2032a along the height direction of the frame 11, the weight of the mount base 203 can be further reduced, which is beneficial for the driver to operate the steering assembly 20. Secondly, it can prevent the height H3 of the second channel 2032a along the height direction of the frame 11 from being too large, which may cause the second channel 2032a to be too large and reduce the structural strength of the mount base 203. This is beneficial for reducing the overall weight of the mount base 203 while meeting the structural strength of the mount base 203. In addition, it can also prevent the height H3 of the second channel 2032a along the height direction of the frame 11 from being too small, which may cause the weight of the mount base 203 to be too large, thus facilitating the realization of lightweight steering assembly 20.

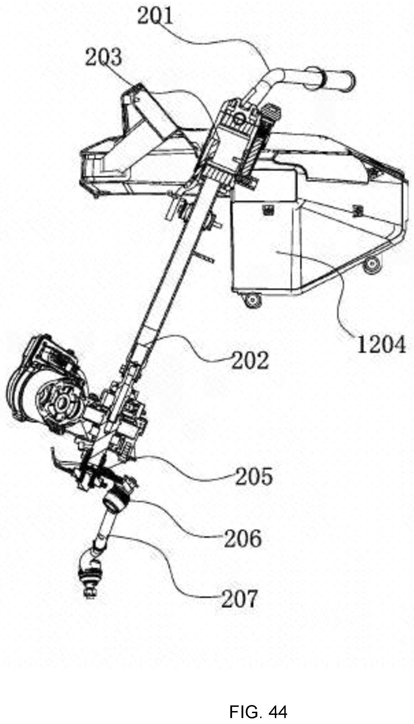

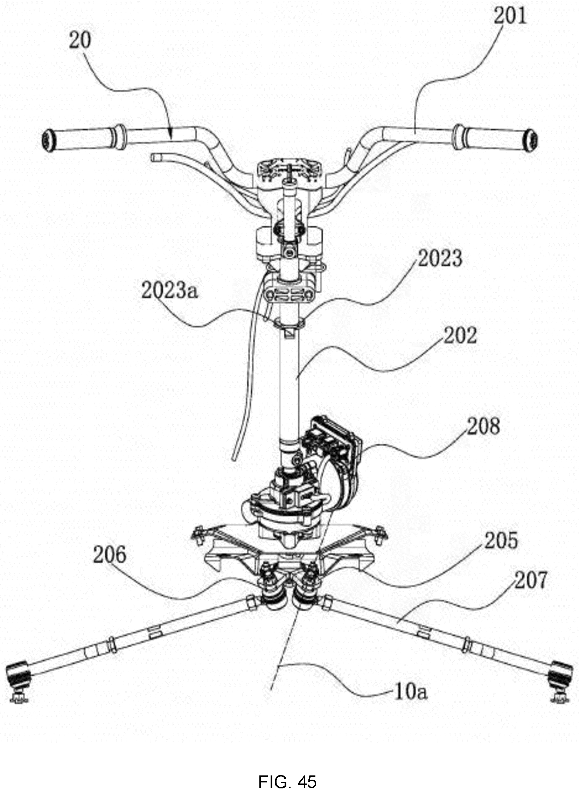

As shown in FIG. 44 and FIG. 45, as an embodiment, the steering assembly 20 includes a steering arm 205, a steering ball pin 206, and a steering rod 207. The steering arm 205 is connected to the steering tube 202, and the steering rod 207 is rotatably connected to the steering arm 205 through the steering ball pin 206. Optionally, the steering pitman arm 205 includes a connecting portion 2051 and a rocker arm portion 2052. The connecting portion 2051 is connected to the steering tube 202, and the rocker arm portion 2052 is rotatably connected to the steering ball pin 206.

In some embodiments, the connecting portion 2051 is integrally formed with the rocker arm portion 2052, which can improve the stability of the connection between the steering tube 202 and the steering ball pin 206 through the steering pitman arm 205.

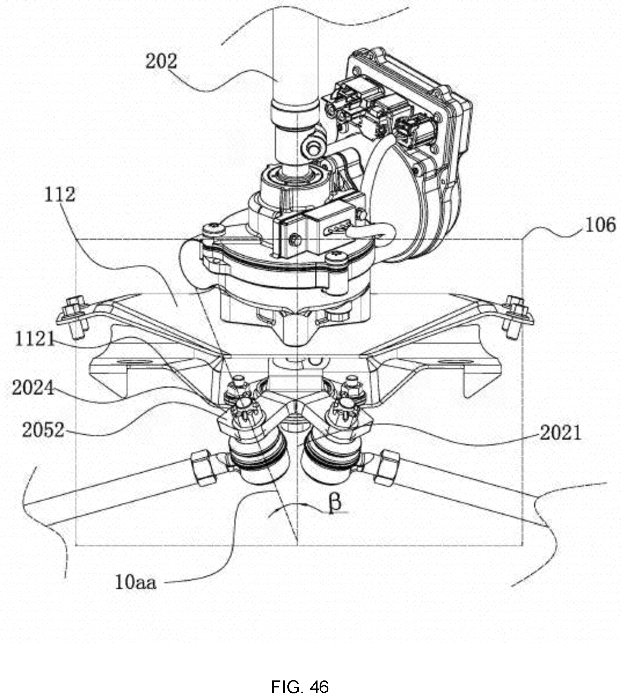

As shown in FIG. 46, a transverse plane 106 is defined as a plane perpendicular to the length direction of the frame 11. The steering ball pin 206 extends along a preset straight line 10a. The normal projection of the preset straight line 10a onto the transverse plane 106 is defined as a first projection line. The normal projection of the preset straight line 10a onto the longitudinal plane 10s is defined as a second projection line. The normal projection of the exhaust pipe 202 onto the transverse plane 106 is defined as a first axis projection line. The normal projection of the exhaust pipe 202 onto the longitudinal plane 10s is defined as a second axis projection line.

The end of the steering rod 207 away from the steering ball pin 206 is connected to the traveling system 13. When the all-terrain vehicle 100 travels over rough terrain, the traveling system 13 will bounce according to the terrain. At this time, the traveling system 13 drives the steering ball pin 206 to swing through the steering rod 207.

In some embodiments, the arm portion 2052 is bendable, such that an angle β defined by the first projection line and the first axis projection line is in the range from 5° to 45°, and an angle Ω defined by second projection line and the second axis projection line is in the range from 5° to 45°. Optionally, the arm portion 2052 is bendable, such that an angle β defined by the first projection line and the first axis projection line is in the range from 15° to 30°, and an angle Ω defined by second projection line and the second axis projection line is in the range from 15° to 30°. In this way, the tilt of the steering ball pin 206 can be achieved through the bending of the rocker arm portion 2052, which can provide a larger swing stroke for the steering ball pin 206, thereby avoiding the swing stroke of the steering ball pin 206 being too small due to its placement along the height direction of the frame 11, and thus avoiding collision wear during the swing process caused by the swing stroke of the steering ball pin 206. This can improve the service life of the steering ball pin 206. In addition, by increasing the swing stroke of the steering ball pin 206, the wheels 13 can have a greater degree of jumping, which in turn is beneficial for the all-terrain vehicle 100 to travel over more rugged terrain, thereby improving the off-road capability of the all-terrain vehicle 100.

The direction in which the steering ball pin 206 swings is defined as a first direction and a second direction, with the first direction and the second direction being opposite. The angle at which the steering ball pin 206 swings in the first direction is defined as 30 °, and the angle at which the steering ball pin 206 swings in the second direction is defined as 30 °. If the range of the angle β is not set within the above angle range, the installed steering ball pin 206 will deflect in the first or second direction. Taking the example that the mounted steering ball pin 206 will deflect 16 ° in the first direction and the steering ball pin 206 needs to be able to rotate 14 ° in the first or second direction, the angle orientation of the steering ball pin 206 rotating in the second direction during operation is between 16 ° and 30 °. At this time, the steering ball pin 206 will rotate within its maximum rotation angle, which will cause wear on the steering ball pin 206 and reduce its service life. Secondly, if the steering ball pin 206 needs to be able to rotate at an angle greater than 14 ° in the first or second direction, the mounted steering ball pin 206 cannot meet the requirements. Therefore, setting the range of the angle β within the above angle range can improve the service life of the mounted steering ball pin 206, and enable the mounted steering ball pin 206 to meet greater rotation requirements, thereby improving the jumping stroke of the walking system 13.

The range of angle β defined by the first projection line and the first axis projection line as well as the range of the angle Ω defined by second projection line and the second axis projection line are both the angle range of the all-terrain vehicle 100 when it is in a stationary state.

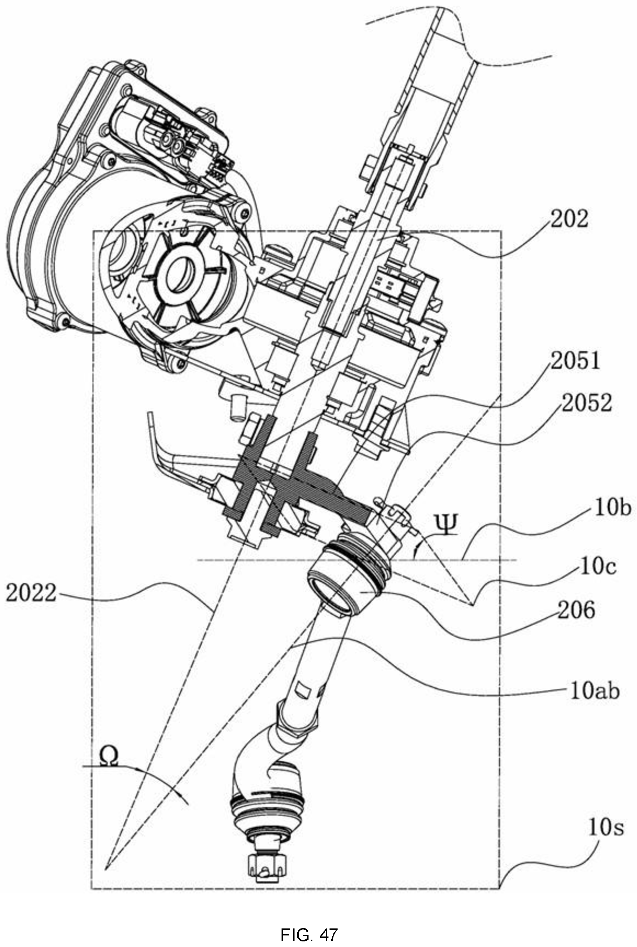

As shown in FIG. 47, the arm portion 2052 extends along the predetermined plane 10c, and an angle Ψ defined by the predetermined plane 10c and the horizontal plane is in the range from 5 ° to 45 °. Optionally, the angle Ψ defined by the predetermined plane 10c and the horizontal plane is in the range from 15 ° to 30 °.

As shown in FIG. 45 and 46, as an embodiment, the steering assembly 20 further includes a power steering assembly 208 connected to the steering tube 202. The power steering assembly 208 can assist the steering tube 202 in turning. Optionally, the steering tube 202 is provided with a first limit structure 2023, which can cooperate with the frame 11 to limit the rotation angle of the steering tube 202. The steering arm 205 is provided with a second limit structure 2024, which can cooperate with the frame 11 to limit the rotation angle of the steering arm 205. Due to the presence of the power steering assembly 208, it may cause the steering arm 205 to be limited and the steering tube 202 to continue rotating. Through the above, the steering limit of the first limit structure 2023 can be used to avoid excessive rotation of the steering tube 202 caused by the steering angle of the power steering mechanism 208 being greater than the actual maximum limit angle of the steering tube 202, thereby avoiding excessive rotation of the steering tube 202 and causing excessive deflection of the wiring harness, pipelines, and components connected to the steering tube 202. This can improve the service life of the wiring harness, pipelines, and components connected to the steering tube 202.

The first limit structure 2023 limits the rotation angle of the steering tube 202 to the actual maximum limit angle of the steering tube 202. In addition, the limiting angle of the second limiting structure 2024 on the steering tube 202 is substantially the same as the limiting angle of the first limiting structure 2023 on the steering tube 202.

As an embodiment, the first limit structure 2023 is positioned between the power steering assembly 208 and the steering handlebar 201, and at least forms a limit protrusion 2023a to limit the rotation angle of the steering tube 202. In this way, the limit protrusion 2023a can cooperate with the frame 11 to limit the rotation angle of the steering tube 202.

As an embodiment, the frame 11 includes a rotating fixing member 112 for the steering tube 202 to pass through. The steering tube 202 is rotatably connected to the rotating fixing member 112. Optionally, the rotating fixing member 112 is provided with a matching limit portion 1121, and the second limit structure 2024 can cooperate with the matching limit portion 1121 to limit the rotation angle of the steering pitman arm 205. In some embodiments, the second limiting structure 2024 may be a arm portion 2052, and the steering tube 202 drives the steering pitman arm 205 to rotate. The arm portion 2052 is in contact with the limiting portion to limit the rotation angle of the steering tube 202. This arrangement can avoid the need to install additional structures on the steering tube 202 to limit its rotation angle, thereby simplifying the overall structure of the steering tube 202 and reducing its overall cost.

It should be noted that for those skilled in the art, improvements or transformations can be made based on the above description, and all such improvements and transformations should fall within the scope of protection of the claims attached to the present application.

The above embodiments only express several embodiments of the present application, and their descriptions are more specific and detailed, but should not be understood as limiting the scope of patent protection. It should be pointed out that for ordinary technical personnel in this field, several modifications and improvements can be made without departing from the concept of the present application, which are within the scope of protection of the present application. Therefore, the scope of protection of the present application should be based on the attached claims.

## Claims

1. An all-terrain vehicle comprising
a frame;
a traveling system, the traveling system being at least partially positioned below the frame and comprising a pair of front wheels;
a vehicle body cover, the vehicle body cover comprising a front mudguard, the front mudguard being at least partially positioned above the front wheels;
a suspension system, the traveling system being connected to the frame by the suspension system;
an engine, the engine being supported by the frame and connected to the traveling system in a transmission mode, the engine comprising a cylinder;
an air filter, the air filter being connected to the engine;
a fuel assembly, the fuel assembly comprising a fuel tank, the fuel tank being supported by the frame and being used to provide fuel to the engine;
a continuously variable transmission, the continuously variable transmission comprising a drive pulley and a driven pulley, the drive pulley being connected to the driven pulley in a transmission mode;
wherein
the drive pulley is positioned behind the driven pulley, a longitudinal center plane is defined as a plane perpendicular to a width direction of the frame and comprising a mid-point of the all-terrain vehicle in the width direction, a straight line connecting a normal projection of a central axis of the drive pulley onto the longitudinal center plane and a normal projection of the central axis of the driven pulley onto the longitudinal center plane is defined as a transmission axis, the cylinder has a cylinder axis, an angle defined between the cylinder axis projection line and the transmission axis onto the longitudinal center plane opens rearward; a first plane is defined as a plane perpendicular to the length direction of the frame and comprising a front wheel rotation axis, and a second plane is defined as a plane perpendicular to the height direction of the frame and comprising the front wheel rotation axis, the fuel tank is positioned behind the first plane and at least partially in front of the engine, the fuel tank is positioned above the second plane and at least partially below the front mudguard; the air filter is at least partially positioned between the fuel tank and the engine in the length direction of the frame, when viewed along the length direction of the frame, the air filter overlaps at least partially with both the engine and the fuel tank; and when viewed along the width direction of the frame, the air filter overlaps neither with the engine nor the fuel tank.

2. The all-terrain vehicle according to claim 1, wherein
the traveling system further comprises a pair of rear wheels connected to the engine in a transmission mode, a minimum distance between the fuel tank and the first plane in the length direction of the all-terrain vehicle is defined as a first distance, and a distance between the front wheel axis and a rear wheel axis in the length direction of the all-terrain vehicle is defined as a wheelbase, a ratio of the first distance to the wheelbase is in the range from 0.1 to 0.16.

3. The all-terrain vehicle according to claim 2, wherein
an angle defined between the cylinder axis and a horizontal plane is in the range from 50 ° to 60 °.

4. The all-terrain vehicle according to claim 2 or 3, wherein
a minimum distance from the engine to the rear wheel axis in the length direction of the all-terrain vehicle is defined as a rear mounting distance, and a ratio of the first distance to the rear mounting distance is in the range from 0.11 to 0.17.

5. The all-terrain vehicle according to claim 2, wherein
a minimum distance from the fuel tank to the second plane in the height direction of the all-terrain vehicle is defined as a second distance, and a ratio of the second distance to the wheelbase is in the range from 0.09 to 0.15.

6. The all-terrain vehicle according to claim 1, wherein
the frame comprises an upper main beam, a lower main beam, and a longitudinal beam connecting between the upper main beam and the lower main beam in the height direction of the all-terrain vehicle; the longitudinal beam comprises a front longitudinal beam, a middle longitudinal beam, and a rear longitudinal beam all extending along the height direction of the all-terrain vehicle and are arranged in sequence along the length direction of the all-terrain vehicle, the fuel tank is positioned behind the front longitudinal beam and in front of the middle longitudinal beam.

7. The all-terrain vehicle according to claim 6, wherein
the engine and the air filter are both positioned behind the middle longitudinal beam and in front of the rear longitudinal beam.

8. The all-terrain vehicle according to claim 1, wherein
the engine further comprises a cylinder head connected to the cylinder and oriented towards the rear of the all-terrain vehicle; the air filter does not overlap with the cylinder head, and when viewed along the height direction of the frame, the air filter does not overlap with the fuel tank.

9. The all-terrain vehicle according to claim 1, wherein
the fuel assembly defines a refueling port in fluid communication with the fuel tank, the refueling port being defined on the front mudguard, a longitudinal plane is defined as a plane perpendicular to the width direction of the all-terrain vehicle, the refueling port extends along a predetermined straight line, the projection of the predetermined straight line on the longitudinal plane along the width direction of the all-terrain vehicle is defined as a first projection line, and the projection of the second plane on the longitudinal plane along the width direction of the all-terrain vehicle is defined as an axis horizontal line, an angle defined by the first projection line and the axis horizontal line is in the range from 20 ° to 90 °; and an opening of the angle faces rearwards.

10. The all-terrain vehicle according to claim 9, wherein
a first mount portion, a second mount portion, and a plug-in mounting portion are arranged on the fuel tank, the first mount portion is closer to the refueling port than the second mount portion, the frame comprises a first pipe positioned in front of the fuel tank, a second pipe positioned behind the fuel tank, and a support crossbeam behind below the fuel tank, the first mount portion is fixedly connected to the first pipe, the second mount portion is fixedly connected to the second pipe, and the plug-in mounting portion is plugged into the support crossbeam.

11. The all-terrain vehicle according to claim 1, wherein
the all-terrain vehicle further comprises a steering assembly, the steering assembly comprises a steering handlebar, a steering tube connected to the steering handlebar, a steering pitman arm connected to the steering tube, a steering ball pin, and a steering tie rod rotatably connected to the steering pitman arm by the steering ball pin;
the steering pitman arm comprises a connection portion connected to the steering tube and an arm portion rotatably connected to the steering ball pin, a transverse plane is defined as a plane perpendicular to the length direction of the frame, and a longitudinal plane is defined as a plane perpendicular to the width direction of the frame, the steering ball pin extends along a predetermined straight line, the normal projection of the predetermined straight line onto the transverse plane is defined as a first projection line, the normal projection of the predetermined straight line onto the longitudinal plane is defined as a second projection line, the normal projection of an axis of the exhaust pipe onto the transverse plane is defined as a first axis projection line, the normal projection of an axis of the exhaust pipe onto the longitudinal plane is defined as a second axis projection line, the arm portion is bendable, such that an angle defined by the first projection line and the first axis projection line is in the range from 5° to 45°, and an angle defined by second projection line and the second axis projection line is in the range from 5° to 45°.

12. The all-terrain vehicle according to claim 11, wherein
the arm portion is bendable, such that an angle defined by the first projection line and the first axis projection line is in the range from 15° to 30°, and an angle defined by second projection line and the second axis projection line is in the range from 15° to 30°.

13. The all-terrain vehicle according to claim 11, wherein
the arm portion extends along a predetermined plane, and an angle defined by the predetermined plane and the horizontal plane is in the range from 5 ° to 45 °.

14. The all-terrain vehicle according to claim 13, wherein
the angle defined by the preset plane and the horizontal plane is in the range from 15 ° to 30 °.

15. The all-terrain vehicle according to claim 14, wherein
the steering assembly further comprises a power steering assembly connected to the steering tube to assist the steering of the steering tube, a first limit structure capable of cooperating with the frame to restrict a rotation angle of the steering tube is disposed on the steering tube;
a second limit structure capable of cooperating with the frame to restrict a rotation angle of the steering pitman arm is disposed on the steering pitman arm.

16. The all-terrain vehicle according to claim 15, wherein
the first limit structure is positioned between the power steering assembly and the steering handlebar, and a limit protrusion for limit the rotation angle of the steering tube is at least disposed on the first limit structure.

17. The all-terrain vehicle according to claim 15, wherein
the frame comprises a rotary retainer through which the steering tube passes, and the steering tube is rotatably connected to the rotary retainer, the rotary retainer has a cooperating limit portion, and the second limit structure is capable of cooperating with the cooperating limit portion to restrict the rotation angle of the steering pitman arm.

18. The all-terrain vehicle according to claim 1, further comprising
a steering assembly comprising a steering handlebar, a steering tube, and a mount base for connecting the steering tube and the steering handlebar;
wherein the mounting base has a lower mounting wall, left and right mounting walls opposite to each other along the width direction of the frame, the lower mounting wall defines a first channel extending along the height direction of the frame, and the left or right mounting wall defines a second channel extending along the width direction of the frame, the first channel is communicated with the second channel, and both the first channel and the second channel are configured for wiring harnesses and/or pipelines to pass through.

19. The all-terrain vehicle according to claim 18, wherein
both the left mounting wall and the right mounting wall defines a second channel extending along the width direction of the frame, and the two second channels are communicated with each other.

20. The all-terrain vehicle according to claim 18, wherein
the mount base defines a mount space for accommodating wire harnesses and/or pipelines, the first channel and the second channel are at least partially positioned within the accommodation space, the steering assembly further comprises a protective plate for covering the mount space, and the protective plate is fixedly connected to the mount base.

21. The all-terrain vehicle according to claim 20, wherein
the mount base defines a weight reduction hole running through the mount base along the length direction of the frame, and the weight reduction hole is communicated with the mount space.

22. The all-terrain vehicle according to claim 18, wherein
a ratio of the height of the second channel to the height of the mount base along the height direction of the frame is in the range from 0.4 to 0.62, and the second channel can reduce the weight of the mount base.

23. The all-terrain vehicle according to claim 18, wherein
the steering assembly comprising a steering pitman arm connected to the steering tube, a steering ball pin, and a steering tie rod rotatably connected to the steering pitman arm by the steering ball pin; the steering pitman arm comprises a connection portion connected to the steering tube and an arm portion rotatably connected to the steering ball pin, a transverse plane is defined as a plane perpendicular to the length direction of the frame, and a longitudinal plane is defined as a plane perpendicular to the width direction of the frame, the steering ball pin extends along a predetermined straight line, the normal projection of the predetermined straight line onto the transverse plane along the length direction of the all-terrain vehicle is defined as a first projection line, the normal projection of the predetermined straight line onto the longitudinal plane is defined as a second projection line, the normal projection of an axis of the exhaust pipe onto the transverse plane is defined as a first axis projection line, the normal projection of an axis of the exhaust pipe onto the longitudinal plane is defined as a second axis projection line, the arm portion is bendable, such that an angle defined by the first projection line and the first axis projection line is in the range from 5° to 45°, and an angle defined by second projection line and the second axis projection line is in the range from 5° to 45°.

24. The all-terrain vehicle according to claim 23, wherein
the arm portion extends along a predetermined plane, and an angle defined by the predetermined plane and the horizontal plane is in the range from 5 ° to 45 °.

25. An all-terrain vehicle comprising
a frame;
a vehicle body cover, the vehicle body cover being supported by the frame and comprising a front mudguard;
a traveling system, the traveling system comprising a pair of front wheels at least partially positioned below the frame;
a suspension system, the pair of front wheels being connected to the frame by the suspension system;
a prime power assembly, the prime power assembly being supported by the frame and comprising an engine, the engine being connected to the front wheels in a transmission mode, the engine comprising a cylinder;
a seat assembly, the seat assembly being supported by the frame;
a steering assembly, the steering assembly comprising a left steering handlebar and a right steering handlebar;
a storage box assembly, the storage box assembly being supported by the frame;
an air filter, the air filter being connected to the engine;
a fuel assembly, the fuel assembly comprising a fuel tank, the fuel tank being supported by the frame and being used to provide fuel to the engine;
a continuously variable transmission, the continuously variable transmission comprising a drive pulley and a driven pulley, the drive pulley being connected to the driven pulley in a transmission mode;
wherein
the drive pulley is positioned behind the driven pulley, a longitudinal center plane is defined as a plane perpendicular to a width direction of the frame and comprising a mid-point of the all-terrain vehicle in the width direction, a straight line connecting a normal projection of a central axis of the drive pulley onto the longitudinal center plane and a normal projection of the central axis of the driven pulley onto the longitudinal center plane is defined as a transmission axis, the cylinder has a cylinder axis, an angle defined between the cylinder axis projection line and the transmission axis onto the longitudinal center plane opens rearward; a first plane is defined as a plane perpendicular to the length direction of the frame and comprising a front wheel rotation axis, and a second plane is defined as a plane perpendicular to the height direction of the frame and comprising the front wheel rotation axis, the fuel tank is positioned behind the first plane and at least partially in front of the engine, the fuel tank is positioned above the second plane and at least partially below the front mudguard; the air filter is at least partially positioned between the fuel tank and the engine in the length direction of the frame, when viewed along the length direction of the frame, the air filter overlaps at least partially with both the engine and the fuel tank; and when viewed along the width direction of the frame, the air filter overlaps neither with the engine nor the fuel tank;
the vehicle body cover further comprises a heat dissipation grille and a side cover supported by the frame, wherein the heat dissipation grille is at least partially positioned above the front mudguard; the side cover is at least partially positioned between the front mudguard and the seat assembly along the length direction of the frame, the heat dissipation grille is mounted in front of the side cover, the side cover defines an intake channel in fluid communication with the heat dissipation grille, the intake channel has at least one air inlet and at least one air outlet, and the opening of the air inlet faces the heat dissipation grille, when viewed along the length direction of the frame, at least a portion of the heat dissipation grille can be observed; the air outlet faces the prime power assembly, and the outermost side of the intake channel is further closer to the longitudinal center plane than the outermost side of the left steering handlebar or the right steering handlebar.

26. The all-terrain vehicle according to claim 25, wherein
the traveling system further comprises a pair of rear wheels connected to the engine in a transmission mode, a minimum distance between the fuel tank and the first plane in the length direction of the all-terrain vehicle is defined as a first distance, and a distance between the front wheel axis and a rear wheel axis in the length direction of the all-terrain vehicle is defined as a wheelbase, a ratio of the first distance to the wheelbase is in the range from 0.1 to 0.16.

27. The all-terrain vehicle according to claim 26, wherein
an angle defined between the cylinder axis and a horizontal plane is in the range from 50 ° to 60 °.

28. The all-terrain vehicle according to claim 26 or 27, wherein
a minimum distance from the engine to the rear wheel axis in the length direction of the all-terrain vehicle is defined as a rear mounting distance, and a ratio of the first distance to the rear mounting distance is in the range from 0.11 to 0.17.

29. The all-terrain vehicle according to claim 26, wherein
a minimum distance from the fuel tank to the second plane in the height direction of the all-terrain vehicle is defined as a second distance, and a ratio of the second distance to the wheelbase is in the range from 0.09 to 0.15.

30. The all-terrain vehicle according to claim 25, wherein
the frame comprises an upper main beam, a lower main beam, and a longitudinal beam connecting between the upper main beam and the lower main beam in the height direction of the all-terrain vehicle; the longitudinal beam comprises a front longitudinal beam, a middle longitudinal beam, and a rear longitudinal beam all extending along the height direction of the all-terrain vehicle and are arranged in sequence along the length direction of the all-terrain vehicle, the fuel tank is positioned behind the front longitudinal beam and in front of the middle longitudinal beam.

31. The all-terrain vehicle according to claim 30, wherein
the engine and the air filter are both positioned behind the middle longitudinal beam and in front of the rear longitudinal beam.

32. The all-terrain vehicle according to claim 25, wherein
the engine further comprises a cylinder head connected to the cylinder and oriented towards the rear of the all-terrain vehicle; the air filter does not overlap with the cylinder head, and when viewed along the height direction of the frame, the air filter does not overlap with the fuel tank.

33. The all-terrain vehicle according to claim 25, wherein
the fuel assembly defines a refueling port in fluid communication with the fuel tank, the refueling port being defined on the front mudguard, a longitudinal plane is defined as a plane perpendicular to the width direction of the all-terrain vehicle, the refueling port extends along a predetermined straight line, the projection of the predetermined straight line on the longitudinal plane along the width direction of the all-terrain vehicle is defined as a first projection line, and the projection of the second plane on the longitudinal plane along the width direction of the all-terrain vehicle is defined as an axis horizontal line, an angle defined by the first projection line and the axis horizontal line is in the range from 20 ° to 90 °; and an opening of the angle faces rearwards.

34. The all-terrain vehicle according to claim 33, wherein
a first mount portion, a second mount portion, and a plug-in mounting portion are arranged on the fuel tank, the first mount portion is closer to the refueling port than the second mount portion, the frame comprises a first pipe positioned in front of the fuel tank, a second pipe positioned behind the fuel tank, and a support crossbeam behind below the fuel tank, the first mount portion is fixedly connected to the first pipe, the second mount portion is fixedly connected to the second pipe, and the plug-in mounting portion is plugged into the support crossbeam.

35. The all-terrain vehicle according to claim 25, wherein
a reference plane is defined as a plane perpendicular to the height direction of the frame and comprising at least one contact point between the wheels and the horizontal plane, a minimum distance from the heat dissipation grille to the front wheel axis in the height direction of the frame is defined as a first height, and a minimum distance from the front wheel axis to the reference plane in the height direction of the frame is defined as a second height, a ratio of the first height to the second height is in the range from 1.5 to 2.4.

36. The all-terrain vehicle according to claim 25, wherein
the prime power assembly is at least partially positioned under the seat assembly, and the air outlet is at least partially positioned below the intake channel, the seat assembly is connected to the side cover, and the seat assembly is configured to seal the rear of the intake channel, so that air in the intake channel is transported from the air outlet under the intake channel to the prime power assembly; the side cover defines a mount hole positioned at the front end of the side cover, the heat dissipation grille is at least partially positioned inside the mount hole and fixedly connected to the side cover.

37. The all-terrain vehicle according to claim 25, wherein
the heat dissipation grille has a plurality of heat dissipation baffles, and heat dissipation holes are defined between adjacent two heat dissipation baffles, at least some of the heat dissipation holes are higher than the upper surface of the front mudguard.

38. The all-terrain vehicle according to claim 25, wherein
the vehicle body cover further comprises two mounting plates below the front mudguard and respectively positioned under the left steering handlebar and under the right steering handlebar, the two mounting plates and the front mudguards cooperatively defines a left storage space and a right storage space having an opening facing the rear of the all-terrain vehicle, the vehicle cover further comprises two covers connected to the left storage space and the right storage space respectively and can be used to enclose the left storage space and the right storage space; when viewed along the height direction of the frame, the left storage space and the right storage space are respectively positioned below the left steering handlebar and below the right steering handlebar; and the left storage space and the right storage space respectively overlap at least partially with the left steering handlebar or the right steering handlebar; the vehicle body cover further comprises a left side cover and a right side cover, wherein the left side cover and the right side cover are positioned above the front mudguard, and the left cover and the right cover respectively and the front mudguard cooperatively defines a first space and a second space, the all-terrain vehicle further comprises an electronic shifter positioned in the first space or the second space.

39. The all-terrain vehicle according to claim 38, wherein
the intake channel is at least partially positioned between the mounting plate and the longitudinal center plane;
the intake channel is at least partially positioned within the first space and/or the second space, and the heat dissipation grille is in fluid communication with the first space and/or the second space.

40. The all-terrain vehicle according to claim 39, wherein
the vehicle body cover further comprises a storage box assembly supported by the frame, wherein the storage box assembly is at least positioned the first space and/or the second space, the storage box assembly comprises a storage cover capable of respectively adhering to the left cover and the right cover along the width direction of the frame, so that the storage cover is capable of sealing above the intake channel;
the capacity of the storage box assembly is in the range from 6 L to 10 L.

41. The all-terrain vehicle according to claim 40, wherein
the storage box assembly comprises an upper box body and a lower box body fixedly connected to the upper box body, the upper box body defines a storage port, and both the upper box body and the lower box body are at least partially positioned in the first space and/or the second space, when viewed from the height direction of the frame, the storage port does not overlap with the first space and the second space;
the storage cover is rotatably connected to the upper box body, and the storage cover covers the storage port.

42. The all-terrain vehicle according to claim 25, wherein
the vehicle body cover comprises a lower guard plate positioned below the frame and fixedly connected to the frame, the lower guard plate is substantially perpendicular to the height direction of the frame, and the lower guard plate is positioned below the prime power assembly, the lower guard plate defines a heat dissipation hole oriented towards the prime power assembly, and when viewed from the height direction of the frame, the heat dissipation holes at least partially overlap with the prime power assembly.

43. The all-terrain vehicle according to claim 42, wherein
the lower guard plate defines a heat dissipation groove having an opening oriented downwards, the heat dissipation groove has a front side wall which is substantially a convex curved surface, the front side wall comprises a front end and a rear end, and the height of the rear end is higher than that of the front end, the front end is positioned at the opening of the heat dissipation groove, and the rear end is connected to the bottom of the heat dissipation groove, the bottom of the heat dissipation groove defines a heat dissipation hole;
a preset straight line is defined as a straight line connecting the front end and the rear end, a normal projection of the preset straight line on the longitudinal center plane is defined as a sidewall line, and an angle defined between the sidewall line and the horizontal plane is in the range from 23 ° to 40 °, and the angle having an opening oriented rearwards.

44. The all-terrain vehicle according to claim 43, wherein
the heat dissipation groove has a first side wall and a second side wall distributed along the width direction of the frame, and the first side wall, the second side wall, and the front side wall cooperatively define an intake passage for delivering external air to the heat dissipation hole.

45. The all-terrain vehicle according to claim 44, wherein
the heat dissipation groove has a rear side wall for sealing the rear of the intake passage and blocking the external air from leaking from the intake passage.

46. The all-terrain vehicle according to claim 25, wherein
the all-terrain vehicle further comprising a lamp system supported by the frame and/or the vehicle body cover, the lamp system comprises a left headlamp and a right headlamp;
a minimum distance between the leftmost end of the vehicle body cover and the rightmost end of the left headlamp in the width direction of the frame is defined as a first distance, and a minimum distance between the rightmost end of the vehicle body cover and the leftmost end of the right headlamp in the width direction of the frame is defined as a second distance, and both the first distance and the second distance is in the range from 350 mm to 400 mm.

47. The all-terrain vehicle according to claim 46, wherein
both the first distance and the second distance is in the range from 360 mm to 380 mm.

48. The all-terrain vehicle according to claim 46, wherein
a reference plane is defined as a plane perpendicular to the height direction of the frame and comprising at least one contact point between the wheels and the horizontal plane, a minimum distance between the left headlamp and the reference plane in the frame height direction is defined as a first height, and a minimum distance between the right headlamp and the reference plane in the frame height direction is defined as a second height, both the first height and the second height is in the range from 660 mm to 990 mm.

49. The all-terrain vehicle according to claim 46, wherein
the vehicle body cover comprises an air intake grille positioned in front of the frame, a transverse plane is defined as a plane perpendicular to the length direction of the frame, a normal projection of the air intake grille onto the transverse plane is defined as a grille projection, the normal projection of the left headlamp onto the transverse plane is defined as a first headlamp projection, and the normal projection of the right headlamp on the transverse plane is defined as a second headlamp projection, both the first headlamp projection and the second headlamp projection are positioned within the grille projection.

50. The all-terrain vehicle according to claim 49, wherein
a ratio of the area of the grille projection to the area of the first headlamp projection is in the range from is 13 to 41, and a ratio of the area of the grille projection to the area of the second headlamp projection is in the range from is 13 to 21.

51. The all-terrain vehicle according to claim 46, wherein
the left headlamp comprises a low beam and a high beam, the low beam is further away from the right headlamp than the high beam, the low beam comprises a lamp mounting bracket, a light source, a reflector bowl, and a lens, the light source is mounted on the lamp mounting bracket, the light source is capable of emitting light upwards, and the reflector bowl is at least partially positioned above the light source and mounted on the lamp mounting bracket, the opening of the reflector bowl is at least partially oriented towards the light source, the reflector bowl is capable of reflecting the light emitted by the light source to the front, and the lens is at least partially positioned in front of the reflector bowl, the lens is capable of transmitting the light reflected by the reflector bowl to the outside of the low beam;
the structure of the high beam is substantially the same as that of the low beam, and the lens curvature of the high beam is different from that of the low beam;
the structure of the right headlamp is substantially the same as that of the left headlamp.

52. The all-terrain vehicle according to claim 51, wherein
a width of the low beam in the width direction of the frame is in the range form 30 mm to 40 mm, and the height of the low beam in the height direction of the frame is in the range from 20 mm to 30 mm;
a width of the high beam in the width direction of the frame is in the range form 30 mm to 40 mm, and the height of the high beam in the height direction of the frame is in the range from 20 mm to 30 mm.

53. The all-terrain vehicle according to claim 46, wherein
the all-terrain vehicle further comprises a radiator, the radiator is supported by the frame and positioned at least partially in front of the frame, both the left headlamp and right headlamp are positioned at least partially in front of the radiator, a transverse plane is defined as a plane perpendicular to the length direction of the frame, a normal projection of the left headlamp onto the transverse plane is defined as a headlamp projection, and the area of a normal projection of the right headlamp onto the transverse plane is substantially the same as that of the headlamp projection, a normal projection of the radiator onto the transverse plane is defined as a radiator projection, a ratio of the area of the headlamp projection to the area of the radiator projection is in the range from 0.02 to 0.2.

54. The all-terrain vehicle according to claim 25, wherein
the all-terrain vehicle further comprises a lamp system, the lamp system comprises two position turn signals, two rear tail lamps, a front position lamp, a rear position lamp, and a plurality of lamp controllers capable of communicating with each other, the front position lamp is positioned between the two position turn signals and the rear position lamp is positioned between the two rear tail lamps along the width direction of the frame, the two position turn signals, two rear tail lamps, the front position lamp, and the rear position lamp are all electrically connected to one of the lamp controllers.

55. The all-terrain vehicle according to claim 54, wherein
each position turn signal comprises a plurality of lamp modules, all of the plurality of lamp modules are electrically connected to a lamp controller, each lamp module comprises at least one lamp bead and a plurality of square lenses for transmitting the light of the lamp bead to the outside of the position turn signal, the structures of the rear tail lamps, the front position lamp, and the rear position lamp are substantially the same as that of the position turn signal.

56. The all-terrain vehicle according to claim 54, wherein
the position turn signal comprises a turn signal mounting bracket, a lamp bead, a thick-wall member, and square lenses, the lamp bead is mounted on the turn signal mounting bracket, and the thick-wall member is mounted on the turn signal mounting bracket and positioned in front of the lamp bead, the square lenses are positioned in front of the thick-wall member, and the square lenses at least partially pass through and fixedly connected to the turn signal mounting bracket, the square lenses are capable of transmitting light from the lamp bead through the thick-wall member to the outside of the position turn signal.

57. The all-terrain vehicle according to claim 56, wherein
the position turn signal comprises a turn signal mounting bracket and a thick-wall member, the lamp bead is mounted on the turn signal mounting bracket, the thick-wall member is mounted on the turn signal mounting bracket and positioned in front of the lamp bead, the square lenses is positioned in front of the thick-wall member, and the square lenses at least partially pass through and fixedly connected to the turn signal mounting bracket, the square lens is configured to transmit light from the lamp bead through the thick-wall member to the outside of the position turn signal.

58. The all-terrain vehicle according to claim 57, wherein
the square lens has a tooth shaped structure on the side away from the thick-wall member, and the tooth shaped structure is configured to refract the light passing through the thick-wall member to the outside of the position turn signal.

59. The all-terrain vehicle according to claim 57, wherein
the position turn signal further comprises a lampshade at least partially covers the front of the square lens and is connected to the turn signal mounting bracket; the plurality of square lenses are arranged in a matrix.

60. The all-terrain vehicle according to claim 25, wherein
the all-terrain vehicle further comprises a lamp system, the lamp system comprises two position turn signals, a front position lamp, and a plurality of lamp controllers capable of communicating with each other, the front position lamp is positioned between the two position turn signals along the width direction of the frame, both the two position turn signals and the front position lamp are electrically connected to one of the lamp controllers.

61. The all-terrain vehicle according to claim 60, wherein
each position turn signal comprises a plurality of lamp modules, all of the plurality of lamp modules are electrically connected to a lamp controller, each lamp module comprises at least one lamp bead and a plurality of square lenses for transmitting the light of the lamp bead to the outside of the position turn signal, the structure of the front position lamp is substantially the same as that of the position turn signal.

62. The all-terrain vehicle according to claim 25, wherein
the all-terrain vehicle further comprises a lamp system, the lamp system is supported by the frame and/or the vehicle body cover, the lamp system comprises a rear tail lamp at the rear of the frame;
the rear tail lamp has a first mounting area, a second mounting area, and a third mounting area, the first mounting area is positioned at least partially above the second mounting area and the third mounting area, and the second mounting area and the third mounting area are distributed along the width direction of the frame, the rear tail lamp comprises a first lamp module positioned in the first mounting area, a second lamp module positioned in the second mounting area, and a third lamp module positioned in the third mounting area, a transverse plane is defined as a plane perpendicular to the length direction of the frame, a normal projection of the first mounting area onto the transverse plane is defined as a first projection, a normal projection of the second mounting area onto the transverse plane is defined as a second projection, a normal projection of the third mounting area onto the transverse plane is defined as a third projection, a ratio of the area of the first projection to the area of the second projection is in the range from 2.1 to 3.2, and a ratio of the area of the first projection to the area of the third projection is in the range from 2.4 to 3.6.

63. The all-terrain vehicle according to claim 62, wherein
the ratio of the area of the first projection to the area of the second projection is in the range from 2.3 to 3, and the ratio of the area of the first projection to the area of the third projection is in the range from 2.7 to 3.3.

64. The all-terrain vehicle according to claim 62, wherein
the first mounting area comprises an upper mounting area and a lower mounting area, the upper mounting area is positioned above the lower mounting area, the second mounting area, and the third mounting area, the lower mounting area is positioned on the side of the second mounting area away from the third mounting area along the width direction of the vehicle frame.

65. The all-terrain vehicle according to claim 62, wherein
the first lamp module is at least one of the position lamp and a brake lamp, the second lamp module is a turn signal, and the third lighting module is a reverse lamp.

66. The all-terrain vehicle according to claim 62, wherein
the first lighting module comprises a plurality of first square lenses, the plurality of first square lenses are arranged in a matrix in the first mounting area, the second lighting module comprises a plurality of second square lenses, the plurality of second square lenses are arranged along the width direction of the frame in the second mounting area, the third lighting module comprises a plurality of third square lenses, the plurality of third square lenses are arranged along the width direction of the frame in the third mounting area, the plurality of first square lenses, the plurality of second square lenses, and the plurality of third square lenses are arranged in a matrix.

67. The all-terrain vehicle according to claim 66, wherein
the rear tail lamp further comprises a lamp mounting bracket, the first mounting area, the second mounting area, and the third mounting area are all positioned on the lamp mounting bracket;
the first lamp module further comprises a lamp bead and a thick-wall member, the lamp bead is mounted on the lamp mounting bracket, and the thick-wall member is mounted on the lamp mounting bracket and positioned in front of the lamp bead, the first square lens are positioned in front of the thick-wall member, and the first square lens at least partially pass through and fixedly connected to the lamp mounting bracket, the first square lens is capable of transmitting light from the lamp bead through the thick-wall member to the outside of the first lamp module;
the square lens has a tooth shaped structure on the side away from the thick-wall member, and the tooth shaped structure is capable of refracting the light passing through the thick-wall member to the outside of the first lamp module.

68. An all-terrain vehicle comprising
a frame;
a traveling system, the traveling system at least partially positioned below the frame and comprising a pair of front wheels;
a vehicle body cover, the vehicle body cover being supported by the frame and comprising a front mudguard, the front mudguard being at least partially positioned above the front wheels;
a suspension system, the traveling system being connected to the frame by the suspension system;
a prime power assembly, the prime power assembly being supported by the frame and comprising an engine, the engine being connected to the front wheels in a transmission mode, the engine comprising a cylinder;
a continuously variable transmission, the continuously variable transmission comprising a drive pulley and a driven pulley, the drive pulley being connected to the driven pulley in a transmission mode;
a seat assembly, the seat assembly being supported by the frame;
a steering handlebar, the steering handlebar comprising a left steering handlebar and a right steering handlebar distributed along the width direction of the frame;
a storage box assembly, the storage box assembly being supported by the frame; an air filter, the air filter being connected to the engine;
a fuel assembly, the fuel assembly comprising a fuel tank, the fuel tank being supported by the frame and being used to provide fuel to the engine;
wherein
the drive pulley is positioned behind the driven pulley, a longitudinal center plane is defined as a plane perpendicular to a width direction of the frame and comprising a mid-point of the all-terrain vehicle in the width direction, a straight line connecting a normal projection of a central axis of the drive pulley onto the Longitudinal center plane and a normal projection of the central axis of the driven pulley onto the Longitudinal center plane is defined as a transmission axis, the cylinder has a cylinder axis, an angle defined between the cylinder axis projection line and the transmission axis onto the longitudinal center plane opens rearward; a first plane is defined as a plane perpendicular to the length direction of the frame and comprising a front wheel rotation axis, and a second plane is defined as a plane perpendicular to the height direction of the frame and comprising the front wheel rotation axis, the fuel tank is positioned behind the first plane and at least partially in front of the engine, the fuel tank is positioned above the second plane and at least partially below the front mudguard; the air filter is at least partially positioned between the fuel tank and the engine in the length direction of the frame, when viewed along the length direction of the frame, the air filter overlaps at least partially with both the engine and the fuel tank; and when viewed along the width direction of the frame, the air filter overlaps neither with the engine nor the fuel tank;
the vehicle body cover further comprises two mounting plates, the two mounting plates are arranged below the front mudguard and respectively positioned under the left steering handlebar and under the right steering handlebar, the two mounting plates and the front mudguards cooperatively defines a left storage space and a right storage space having an opening facing the rear of the all-terrain vehicle, the vehicle cover further comprises two covers connected to the left storage space and right storage space respectively and can be used to enclose the left storage space and right storage space; when viewed along the height direction of the frame, the left storage space and the right storage space are respectively positioned below the left steering handlebar and below the right steering handlebar; and the left storage space and the right storage space respectively overlap at least partially with the left steering handlebar or the right steering handlebar; the vehicle body cover further comprises a left side cover and a right side cover, wherein the left side cover and the right side cover are positioned above the front mudguard, and the left cover and/or the right cover and the front mudguard cooperatively defines a first space and/or a second space, the all-terrain vehicle further comprises an electronic shifter positioned in the first space or the second space.

69. The all-terrain vehicle according to claim 68, wherein
the traveling system further comprises a pair of rear wheels connected to the engine in a transmission mode, a minimum distance between the fuel tank and the first plane in the length direction of the all-terrain vehicle is defined as a first distance, and a distance between the front wheel axis and a rear wheel axis in the length direction of the all-terrain vehicle is defined as a wheelbase, a ratio of the first distance to the wheelbase is in the range from 0.1 to 0.16.

70. The all-terrain vehicle according to claim 69, wherein
an angle defined between the cylinder axis and a horizontal plane is in the range from 50 ° to 60 °.

71. The all-terrain vehicle according to claim 69 or 70, wherein
a minimum distance from the engine to the rear wheel axis in the length direction of the all-terrain vehicle is defined as a rear mounting distance, and a ratio of the first distance to the rear mounting distance is in the range from 0.11 to 0.17.

72. The all-terrain vehicle according to claim 69, wherein
a minimum distance from the fuel tank to the second plane in the height direction of the all-terrain vehicle is defined as a second distance, and a ratio of the second distance to the wheelbase is in the range from 0.09 to 0.15.

73. The all-terrain vehicle according to claim 68, wherein
the frame comprises an upper main beam, a lower main beam, and a longitudinal beam connecting between the upper main beam and the lower main beam in the height direction of the all-terrain vehicle; the longitudinal beam comprises a front longitudinal beam, a middle longitudinal beam, and a rear longitudinal beam all extending along the height direction of the all-terrain vehicle and are arranged in sequence along the length direction of the all-terrain vehicle, the fuel tank is positioned behind the front longitudinal beam and in front of the middle longitudinal beam; the engine and the air filter are both positioned behind the middle longitudinal beam and in front of the rear longitudinal beam.

74. The all-terrain vehicle according to claim 68, wherein
the fuel assembly defines a refueling port in fluid communication with the fuel tank, the refueling port being defined on the front mudguard, a longitudinal plane is defined as a plane perpendicular to the width direction of the all-terrain vehicle, the refueling port extends along a predetermined straight line, the projection of the predetermined straight line on the longitudinal plane along the width direction of the all-terrain vehicle is defined as a first projection line, and the projection of the second plane on the longitudinal plane along the width direction of the all-terrain vehicle is defined as an axis horizontal line, an angle defined by the first projection line and the axis horizontal line is in the range from 20 ° to 90 °; and an opening of the angle faces rearwards.

75. The all-terrain vehicle according to claim 74, wherein
a first mount portion, a second mount portion, and a plug-in mounting portion are arranged on the fuel tank, the first mount portion is closer to the refueling port than the second mount portion, the frame comprises a first pipe positioned in front of the fuel tank, a second pipe positioned behind the fuel tank, and a support crossbeam behind below the fuel tank, the first mount portion is fixedly connected to the first pipe, the second mount portion is fixedly connected to the second pipe, and the plug-in mounting portion is plugged into the support crossbeam.

76. The all-terrain vehicle according to claim 68, wherein
an upper end of the storage cover is connected to the mounting plate by snap fit, and the lower end of the storage cover is rotatably connected to the mounting plate.

77. The all-terrain vehicle according to claim 68, wherein
the vehicle body cover further comprises a storage box assembly, wherein the left cover and the right cover are respectively positioned on two sides of the storage box assembly along the width direction of the vehicle frame, and the storage box assembly is at least partially positioned in the first space or the second space.

78. The all-terrain vehicle according to claim 77, wherein
the storage box assembly comprises an upper box body and a lower box body fixedly connected to the upper box body, the upper box body defines a storage port, and both the upper box body and the lower box body are at least partially positioned in the first space and/or the second space, when viewed from the height direction of the frame, the storage port does not overlap with the first space and the second space.

79. The all-terrain vehicle according to claim 78, wherein
the storage box assembly comprises a storage cover rotatably connected to the upper box body, the storage cover is configured to cover the storage port and close the upper box body;
one side of the storage cover has a pivot shaft and a substantially U-shaped extension portion, wherein the pivot shaft is positioned at one end of the extension portion away from the storage cover, and is rotatably connected to the upper box body.

80. The all-terrain vehicle according to claim 77, wherein
the capacity of the storage box assembly is in the range from 6 L to 10 L.

81. The all-terrain vehicle according to claim 69, wherein
the all-terrain vehicle further comprises a radiator assembly, the radiator assembly comprises a radiator for dissipating heat from the prime power assembly, the radiator is supported by the frame and is at least partially positioned in front of the frame; the vehicle body cover comprises a guide plate mounted on the radiator and/or the frame, the guide plate is at least partially positioned behind the radiator and is capable of transporting the air flowing through the radiator to both sides of the frame along the width direction and/or below the all-terrain vehicle.

82. The all-terrain vehicle according to claim 81, wherein
a guide space and a guide gap connected to the guide space are defined between the guide plate and the radiator, the guide gap is positioned on both sides of the guide space along the width direction of the chassis, and/or below the guide space, air flowing through the radiator is transported to the outside of the guide space through the guide gap.

83. The all-terrain vehicle according to claim 82, wherein
the vehicle body cover comprises a first front mudguard and a second front mudguard distributed along the width direction of the vehicle frame, both first front mudguard and a second front mudguard define heat dissipation holes in fluid communication with the air guide gaps defined on both sides of the air guide space;
the heat dissipation holes of the mudguard are substantially arranged along the width direction of the frame, penetrating through the first front mudguard and the second front mudguard.

84. The all-terrain vehicle according to claim 82, wherein
the vehicle body cover comprises a first lamp cover and a second lamp cover distributed along the width direction of the vehicle frame, both the first lamp cover and the second lamp cover defines heat dissipation holes in fluid communication with the flow gaps positioned on both sides of the flow guiding space.

85. The all-terrain vehicle according to claim 84, wherein
the heat dissipation holes comprises a first heat dissipation hole and a second heat dissipation hole, the first heat dissipation hole passes through the first lamp cover and the second lamp cover along the width direction of the frame, both the first lamp cover and the second lamp cover extend away from the radiator to define a protrusion, the second heat dissipation hole is defined on the protrusion, and the opening of the second heat dissipation hole at least partially faces downward;
when viewed from the width direction of the frame, the heat dissipation holes overlap at least partially with the flow gap.

86. The all-terrain vehicle according to claim 83, wherein
the guide plate is at least partially recessed away from the radiator to define a recessed portion, and the non-recessed portion of the guide plate is defined as a flat portion, which is arranged around the recessed portion.
